(19) Europäisches Patentamt
European Patent Office
Office européen des brevets

(11) **EP 1 783 624 A1**

(12) **EUROPEAN PATENT APPLICATION**
published in accordance with Art. 158(3) EPC

(43) Date of publication:
**09.05.2007 Bulletin 2007/19**

(51) Int Cl.:
***G06F 17/00*** (2006.01)

(21) Application number: **05765504.5**

(86) International application number:
**PCT/JP2005/012428**

(22) Date of filing: **05.07.2005**

(87) International publication number:
**WO 2006/004131 (12.01.2006 Gazette 2006/02)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.07.2004 JP 2004198621**

(71) Applicants:
• **Intellectual Property Bank Corp.**
**Tokyo 105-0001 (JP)**
• **Masuyama, Hiroaki**
**Toyonaka-shi,**
**Osaka 560-0054 (JP)**

(72) Inventors:
• **MASUYAMA, Hiroaki**
**Toyonaka-shi,**
**Osaka 5600054 (JP)**
• **MIYAMOTO, Kaoru**
**Toshima-ku,**
**Tokyo 105 0001 (JP)**

(74) Representative: **Style, Kelda Camilla Karen et al**
**Page White & Farrer**
**Bedford House**
**John Street**
**London, WC1N 2BF (GB)**

(54) **COMPANY EVALUATION DEVICE, COMPANY EVALUATION PROGRAM, AND COMPANY EVALUATION METHOD**

(57) [PROBLEMS] To provide a company evaluation device enabling comprehensive evaluation of a company or industry in an easy way.

[MEANS FOR SOLVING PROBLEMS] The device comprises company index acquiring means (transmission/reception means (365) or the like) for acquiring a company index, comprehensive evaluation index acquiring means (transmission/reception means (365) or the like) for acquiring a comprehensive evaluation index, factor analyzing means (information processing means (380)) for performing factor analysis using the acquired company index and generating a factor, contribution ratio calculating means (information processing means (380)) for performing multiple regression analysis using the factor and comprehensive evaluation index and calculating a contribution ratio concerning the comprehensive evaluation index, and output means (display interface (373) or the like) for outputting the factor, contribution ratio, company index, factor loading, and comprehension evaluation index on display means or the like.

FIG. 36

RELATIONSHIP DIAGRAM OF THE COMPOSITE ENGINEERING INDUSTRY

**Description**

TECHNICAL FIELD

The present invention relates to an enterprise evaluation device, an enterprise evaluation program and an enterprise evaluation method for comprehending the current status of an enterprise upon improving the business condition of the enterprise.

BACKGROUND ART

Conventionally, known is an enterprise diagnosis system for outputting a diagnostic outcome, comprising a knowledge base unit for storing diagnostic rules including quantitative judgment rules and qualitative judgment rules; a diagnosis unit having an operation unit for obtaining a management index from quantitative information and an inference unit for conducting an analysis based on diagnostic rules; and a diagnostic outcome file for storing the outcome. With this enterprise diagnosis system, it is possible to analyze an enterprise while conducting experimental weighting to the diagnostic items, and the degree of importance of the respective rules can be reflected on the analysis (for example, refer to Patent Document 1).

Further, conventionally known is a management evaluation system which stores in data a plurality of comparative categories as references for evaluation, and which evaluates a specified enterprise by obtaining the difference between evaluated data of the enterprise and industry averages by using the comparative data based on financial evaluation information and customer evaluation information of the enterprise. This management evaluation system also refers to general information, and is able to conduct an objective evaluation on the effects of management measures and policies by obtaining the difference between the evaluation data and an industry average based on financial evaluation information and customer evaluation information to evaluate the enterprise, and conducting management evaluation from various viewpoints (for example, refer to Patent Document 2).

Moreover, in a conventional book, under the proposition of "Converting Innovation (Residual Profits or Value of Shares) Capacity Into Cash Flow", described is an example of analyzing the items of technological innovative power (cumulative research and development investment of the past 1 or 2 years), efficiency of dealings (stock turnover days), productivity of employees ((operating profit)/(the number of employees)), and facility utilization capacity ((operating profit)/(tangible fixed assets)) with the multivariate analysis technique, and ranking enterprises based on the results of the analysis with the four indexes in relation to the achievement index (for example, refer to Non-Patent Document 1).

[Patent Document 1] Japanese Patent Laid-Open Publication No. H11-7475 (pages 2 to 3, Fig. 1 and Fig. 2)
[Patent Document 2] Japanese Patent Laid-Open Publication No. 2002-149957 (pages 2 to 6, Fig. 1 to Fig. 4)
[Non-Patent Document 1] Eli Okada, "IP Strategy Management" Nihon Keizai Shimbun, Inc. October 20, 2003, pages 232 to 240

DISCLOSURE OF THE INVENTION

Although the enterprise diagnosis system described in the Patent Document 1 is arranged to enable analysis of an enterprise while conducting experimental weighting to the diagnostic items and enable provision of results from quantitative factors and qualitative factors based on past data, it gives no consideration to information of intellectual property. Further, since the system does not employ the multivariate analysis technique, it has a problem that it can not objectively/quantitatively determine which index is contributory. In addition, the system has a drawback that it can not calculate degree of contribution of indexes for each industry. Moreover, the system involves a complicated enterprise diagnosis method since it includes various kinds of financial information.

Furthermore, although the management evaluation system described in the Patent Document 2, is arranged to objectively evaluate the effects of management measures and policies by conducting management evaluation based on financial evaluation information and customer evaluation information or general information, it gives no consideration to information of intellectual property. Further, since the system does not employ the multivariate analysis technique, it has a problem that it can not objectively/quantitatively determine which index is contributory. In addition, the system has a drawback that it can not calculate the degree of contribution of indexes for each industry. Moreover, the system involves a complicated enterprise diagnosis method since it includes various kinds of financial information. In addition, although the conventional enterprise evaluation system conducts a diagnosis of a specified enterprise using accumulated data of financial statements and qualitative factors, they do not include information of intellectual property. Moreover, the system has a drawback that it can not calculate the degree of quantitative contribution and the degree of contribution for each industry.

Further, in the innovation capacity judgment described in the Non-Patent Document 1, it is believed that the indexes (items) contributing to the index associated with innovation (residual profits or value of shares) are selected based on the subjective judgment due to the analyst's experience and knowledge. In this judgment, since the selection of indexes is subjective, some people may say that the judgment was not made objectively. With the indexes adopted in this document, it would be difficult to evaluate and judge a trinity management strategy.

In recent researches, researches are increasing wherein discussion is made about patent management. In quantitative analysis of the researches, it is often that the intellectual property departments of enterprises are surveyed, and that discussion is made of type of intellectual property management and characteristics of management depending on industry (for instance, a research is shown in "Intellectual Property System and Organization Structure of Intellectual Property Department and Patent Strategy; Chapter 6, Organization Structure of Intellectual Property Department and Patent Strategy in Japanese Corporations; by Akiya Nagata"). As described above, it is the current status that a method of evaluating enterprises based on analysis using objective data such as patent publications for comparing enterprises is hardly being used. Moreover, it is also current status that no research is found about a method of calculating the of degree of contribution of the trinity strategy consisting of research and development strategy, intellectual property strategy, and business strategy in profits, or calculating the degree of contribution of intellectual property related indexes concerning profits.

In light of the foregoing conventional circumstances, an object of the present invention is to conduct multivariate analysis using information such as publicly available financial statement data and patent data of enterprises in order to research what indexes affect the increase in profits of enterprises, and to calculate and display the indexes that are objectively and quantitatively contributing to the profits of enterprises based on published information. Another object of the present invention is to provide an enterprise evaluation system capable of simply showing which index should be used for conducting an evaluation depending on industry or for one enterprise among the enterprise indexes such as finance-management related index, research and development related index, and intellectual property related index depending on industry or of one enterprise. Yet another object of the present invention is to provide a simple method (index), without any complexity, of conducting a comprehensive enterprise evaluation of trinity management of research and development strategy, intellectual property strategy, and business strategy of an enterprise.

MEANS TO SOLVE THE PROBLEM

(1) In order to achieve the foregoing objects, the enterprise evaluation device of the present invention comprises:

enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

factor analysis means for extracting enterprise indexes by performing factor analysis using the acquired enterprise indexes;

contribution ratio calculation means for calculating a contribution ratio J in relation to the comprehensive evaluation index by performing multiple regression analysis using the enterprise indexes and the comprehensive evaluation index; and

output means for outputting each of the extracted enterprise indexes and contribution ratio J thereof, and the comprehensive evaluation index to display means, printing means, recording medium, or another telecommunications device via a communication line.

(2) Further, in order to achieve the foregoing objects, the enterprise evaluation device of the present invention comprises:

enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

factor analysis means for creating a factor C by performing factor analysis using the acquired enterprise indexes, and calculating a factor score C for each enterprise; and

output means for outputting the factor scores C and enterprise names corresponding thereto in the order of the factor score C to display means, printing means, recording medium, or another telecommunications device via a communication line.

(3) Moreover, in order to achieve the foregoing objects, the enterprise evaluation device of the present invention comprises:

enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

contribution ratio calculation means for calculating a contribution ratio J in relation to a comprehensive evaluation index by performing multiple regression analysis using the acquired enterprise indexes and the comprehensive evaluation index; and

output means for outputting each enterprise index and contribution ratio J thereof, and the comprehensive evaluation index to display means, printing means, recording medium, or another telecommunications device via a communication line.

(4) Further, in order to achieve the foregoing objects, the enterprise evaluation device of the present invention comprises:

4

enterprise index acquisition means for acquiring an enterprise index of a plurality of enterprises such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index of a plurality of enterprises such as a profit related index such as sales volume, patent and other royalty income, and operating profit; an excess profit related index such as excess value added amount and excess operating profit; or a market evaluation related index such as expected intellectual property profit;

principal component analysis means for calculating a principal component score of each enterprise by performing principal component analysis based on the enterprise indexes and the comprehensive evaluation index of each enterprise;

output means for outputting the principal component scores to display means, printing means, recording medium, or another telecommunications device via a communication line.

(5) Moreover, in order to achieve the foregoing objects, the enterprise evaluation device further comprises:

factor analysis means for extracting a factor C by performing factor analysis using the enterprise indexes acquired by the enterprise index acquisition means; and

contribution ratio calculation means for calculating a contribution ratio J of each factor C in relation to the comprehensive evaluation index by performing multiple regression analysis using the factors C of each enterprise extracted by the factor analysis means and the comprehensive evaluation index of each enterprise acquired by the comprehensive evaluation index acquisition means, and further selecting a factor J from the factors C based on the contribution ratio J;

wherein the principal component analysis means performs the principal component analysis based on the enterprise indexes configuring the factor J selected by the contribution ratio calculation means, and the comprehensive evaluation index.

(6) Further, in order to achieve the foregoing objects, the device for identifying factor and/or index contributing to enterprise evaluation of the present invention comprises:

enterprise index acquisition means for acquiring, industry by industry, enterprise indexes of a plurality of enterprises such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring, industry by industry, a comprehensive evaluation index of each of the plurality of enterprises such as a profit related index such as sales volume, patent and other royalty income, and operating profit; an excess profit related index such as excess value added amount and excess operating profit; or a market evaluation related index such as expected intellectual property profit;

factor analysis means for extracting factors C by performing, industry by industry, factor analysis using the acquired enterprise indexes; and

contribution ratio calculation means for calculating a contribution ratio J of each factor C in relation to the comprehensive evaluation index by performing, industry by industry, multiple regression analysis using the factors C of each enterprise and the comprehensive evaluation index of each enterprise, and further selecting a factor J from the factors C based on the contribution ratio J; and

output means for outputting, industry by industry, the enterprise indexes configuring the factor J selected by the contribution ratio calculation means to display means, printing means, recording medium, or another telecommunications device via a communication line.

(7) Moreover, in order to achieve the foregoing objects, the device for identifying factor and/or index contributing to enterprise evaluation of the present invention comprises:

enterprise index acquisition means for acquiring enterprise indexes of each of a plurality of enterprises such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

contribution ratio calculation means for calculating a contribution ratio J of each enterprise index in relation to the comprehensive evaluation index by performing multiple regression analysis using the acquired enterprise indexes and the comprehensive evaluation index; and

output means for outputting, industry by industry, each enterprise index and contribution ratio J thereof to display means, printing means, recording medium, or another telecommunications device via a communication line.

(8) Further, the present invention also provides an enterprise evaluation method and an enterprise evaluation contribution factor and/or index specifying method comprising the same steps as those to be executed by each of the foregoing devices, as well as an enterprise evaluation program and an enterprise evaluation contribution factor and/or index specifying program capable of causing a computer to perform the same processing as the processing to be executed by each of the foregoing devices.

According to the present invention, it is possible to extract indexes contributing to the comprehensive evaluation index representing the enterprise's earning power and the like, and notify such contributory level to the user. By confirming this contribution ratio J, the user is able to know which index should be used in evaluating the enterprise. Further, in the present invention, as the factor and factor loading can also be notified to the user, it is possible to confirm how much of which factor or which index is affecting the comprehensive index.

Moreover, according to the present invention, since it is possible to know the factor score of each enterprise, it will be possible to know the positioning of one's enterprise or the enterprise to be researched, and the tendency of enterprises can be sought.

Accordingly, it will be possible to know the current positioning of each enterprise in the industry, its status, enterprise characteristics, index contributing to profits or index that is a risk factor, and top executives of enterprises will be able to acquire guidelines on how to proceed with its business in the future.

Further, according to the present invention, since it is possible to know the principal component score of each enterprise, it will be possible to know the positioning of one's enterprise or the enterprise to be researched, and the tendency of enterprises can be sought.

Moreover, according to the present invention, since it is possible to specify the factor or index that will contribute to enterprise evaluation by industry, it will be possible to conduct an accurate enterprise evaluation classified by industry.

BRIEF DESCRIPTION OF THE DRAWINGS

Fig. 1 is a diagram showing the overall configuration of an enterprise evaluation system according to the present invention;

Fig. 2 is a block diagram of a signal processing system of the enterprise evaluation device according to the present invention;

Fig. 3 is a flowchart of a series of processings carried out by the enterprise evaluation device according to the present invention;

Fig. 4 is a diagram showing a flow of operations (trinity enterprise value evaluation flow) made by a user;

Fig. 5 is a diagram showing an example of display of a search screen (user's operation screen);

Fig. 6 is a chart showing a trinity enterprise evaluation menu screen (industry selection screen);

Fig. 7 is a chart showing a status where the user selected major classification of a "composite engineering" in a trinity enterprise evaluation menu screen;

Fig. 8 is a chart showing a trinity enterprise evaluation menu screen (in the alphabetical order: enterprise industry index screen);

Fig. 9 is a chart showing a status where the user selected medium classification of "electronics related" in a trinity enterprise evaluation menu screen;

Fig. 10 is a chart illustrating the types of comprehensive evaluation indexes;

Fig. 11 is a chart illustrating business-management related indexes to be used in the calculation of a contribution ratio and the like;

Fig. 12 is a chart illustrating research and development related indexes to be used in the calculation of a contribution ratio and the like;

Fig. 13 is a chart illustrating intellectual property related indexes to be used in the calculation of a contribution ratio and the like;

Fig. 14 is a chart illustrating intellectual property related indexes to be used in the calculation of a contribution ratio and the like;

Fig. 15 is a chart showing the relationship between a factor name and strategy;

Fig. 16 is a flowchart of factor analysis processing;

Fig. 17 is a flowchart of multiple regression analysis processing;

Fig. 18 is a flowchart of principal component analysis processing;

Fig. 19 is a chart showing a trinity enterprise evaluation index (primary selection);

Fig. 20 is a chart showing the results of trinity factor analysis variables;

Fig. 21 is a chart showing a factor loading, an eigenvalue, and a cumulative contribution ratio of a material industry;

Fig. 22 is a chart showing a factor loading, an eigenvalue, and a cumulative contribution ratio of a composite engineering industry;

Fig. 23 is a chart showing a list of factors for a material industry;

Fig. 24 is a chart showing a list of factors for a composite engineering industry;

Fig. 25 is a chart showing an evaluation by indexation of a factor score of a material industry enterprise;

Fig. 26 is a chart showing an evaluation by indexation of a factor score of a material industry enterprise;

Fig. 27 is a chart showing an evaluation by indexation of a factor score of a composite engineering industry enterprise;

Fig. 28 is a chart showing an evaluation by indexation of a factor score of a composite engineering industry enterprise;

Fig. 29 is a chart showing a correlation matrix chart of factor analysis variables of a material industry;

Fig. 30 is a chart showing a degree of commonality of a factor analysis variable of a material industry;

Fig. 31 is a chart showing a correlation matrix chart of factor analysis variables of a composite engineering industry;

Fig. 32 is a chart showing a degree of commonality of factor analysis variables of a composite engineering industry;
Fig. 33 is a chart showing a list of results of a multiple regression analysis for a material industry;
Fig. 34 is a chart showing a list of results of a multiple regression analysis result for a composite engineering industry;
Fig. 35 shows a diagram of relationship among material industries;
Fig. 36 shows diagram of a relationship among composite engineering industries;
Fig. 37 is a chart showing a result (correlation matrix) of a principal component analysis for a material industry;
Fig. 38 is a diagram showing an eigenvector of a principal component analysis for a material industry;
Fig. 39 is a chart showing a comprehensive ranking of material industries in trinity management;
Fig. 40 is a diagram showing results (correlation matrix) of a principal component analysis for a composite engineering industry;
Fig. 41 is a diagram showing an eigenvector of a principal component analysis of a composite engineering industry;
Fig. 42 is a chart showing a comprehensive ranking of composite engineering industries in trinity management;
Fig. 43 is a chart showing the indexes to be used in a principal component analysis;
Fig. 44 is a chart showing a trinity enterprise evaluation index (primary selection);
Fig. 45 is a chart showing a factor loading of a machinery industry;
Fig. 46 is a chart showing a factor loading of an electronics related industry;
Fig. 47 shows a diagram of a relationship among machinery industries;
Fig. 48 shows a diagram of a relationship electronics related industries;
Fig. 49 is a chart showing factors of a machinery industry;
Fig. 50 is a chart showing a result of a multiple regression analysis for a machinery industry;
Fig. 51 is a chart showing factors of an electronics related industry;
Fig. 52 is a chart showing a result of a multiple regression analysis for an electronics related industry;
Fig. 53 is a chart showing a factor-based ranking of machinery industry enterprises;
Fig. 54 is a chart showing a factor-based ranking of machinery industry enterprises;
Fig. 55 is a chart showing a factor-based ranking of electronics related industry enterprises;
Fig. 56 is a chart showing a factor-based ranking of electronics related industry enterprises;
Fig. 57 is a chart showing a degree of commonality of factor analysis variables of a machinery industry; and
Fig. 58 is a chart showing a degree of commonality of factor analysis variables of an electronics related industry.

DESCRIPTION OF REFERENCE MARKS

| 10 | Communication network |
| 20 | Database |
| 30 | Enterprise evaluation Device |
| 32 | Printer |
| 364 | Communication network |
| 365 | Transmission-reception means |
| 370 | Input means |
| 371 | Input interface |
| 372 | Display means |
| 373 | Display interface |
| 374 | Printer interface |
| 377 | Recording medium |
| 378 | Recording medium mounting unit |
| 379 | Recording medium interface |
| 380 | Information processing means |
| 381 | Memory |
| 384 | Recording means |
| 385 | Recording means interface |
| 390 | Calendar clock |
| 399 | Bus |

BEST MODE FOR CARRYING OUT THE INVENTION

An enterprise evaluation device according to the present invention is now described with reference to the drawings.

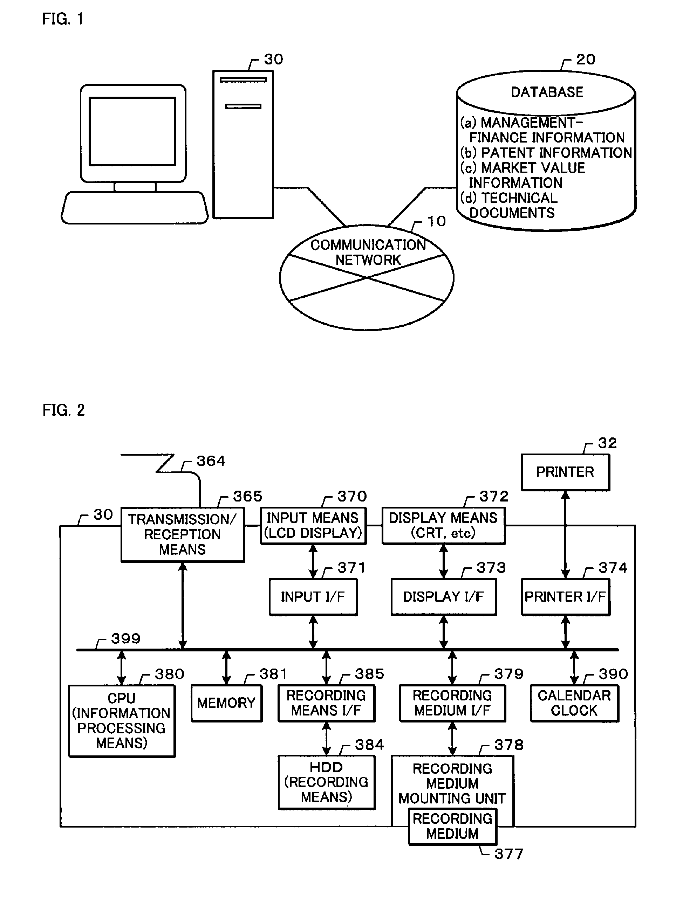

Fig. 1 is a diagram showing the overall configuration of an enterprise evaluation system according to the present invention. As shown in Fig. 1, the enterprise evaluation system according to the present invention comprises a database 20 including a comprehensive evaluation index database in which recorded is a comprehensive evaluation index of the an object to be evaluated; an industry enterprise database in which recorded are names of enterprises industry by industry or in the alphabetical order; and a database in which recorded are enterprise indexes such as business-management related index, research and development related index, or intellectual property related index, and various information such as the classification of the enterprise index, various constants and threshold values, and results of determination of appropriateness and classification based on the threshold value; an enterprise evaluation device 30 for receiving information such as the comprehensive evaluation index, industry name, enterprise name, enterprise index, various constants and threshold values, and outputting results of calculation such as the enterprise value; and a communication network 10 such as the Internet or dedicated communication line that connects the enterprise evaluation device 30 and the database 20 with each other for the communication therebetween.

It is to be noted that the database 20 may be provided inside the enterprise evaluation device 30.

Fig. 2 is a block diagram of a signal processing system of an enterprise evaluation device 30 according to the present invention.

As shown in Fig. 2, the information transmission-reception unit of the enterprise evaluation device 30 is provided with a transmission-reception means 365 (including the functions of an enterprise index acquisition means, comprehensive evaluation index acquisition means, threshold value acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting information to the information processing means described later, and outputting display commands to an LCD or the like based on instructions from the information processing means, a display means 372 for displaying information such as images or texts, graphs or charts, a display interface 373 (including the function of an output means) for outputting video signals for display to the display means 372 based on the command from the information processing means, and a printer interface 374 for outputting information such as images or texts, graphs or charts to a printer 32 or the like. It is to be noted that the input means 370 includes input devices such as a keyboard, mouse, tablet and the like.

Further, the enterprise evaluation device 30 is also provided with a recording medium mounting unit 378 for detachably mounting of a recording medium 377, and a recording medium interface 379 (including the functions of a enterprise index acquisition means, comprehensive evaluation index acquisition means, threshold value acquisition means or output means) for recording and reading of various types of information in and from the recording medium 377. It is to be noted that the recording medium 377 is of a semiconductor such as a memory card, a detachable recording medium in a magnetic recording type as represented by MO, magnetic disk and so on, a recording medium in an optical recording type or the like.

Moreover, the enterprise evaluation device 30 is also provided with an information processing means 380 for controlling the overall enterprise evaluation device 30, and a memory 381 includes a ROM for recording of programs to be executed by the information processing means 380 and various constants, and a RAM as recording means which is to be the working area while the information processing means 380 is executing processing.

Further, the information processing means 380 is capable of carrying out the various functions of an enterprise index acquisition means, comprehensive evaluation index acquisition means, factor analysis means, contribution ratio calculation means, index calculation means, enterprise index extraction means, threshold value acquisition means, display data generation means, and output means. It is to be noted that instead of the information processing means 380 performing all of the processing to be performed by the foregoing means, a plurality of dedicated processing devices may be provided to share and execute a plurality of processing. Then, the objects of the present invention can be achieved.

Moreover, the enterprise evaluation device 30 is also provided with a recording means 384 such as a hard disk in which are recorded various types of information; for example, various constants relating to the processing conducted by the enterprise evaluation device 30, attribute information for the communication connection to a telecommunications device on a network, connection information such as a URL (Uniform Resource Locators), gateway information, DNS (Domain Name System), management-finance information relating to the management of the enterprise, technical documents relating to patents, patent information, market value information, threshold for determining the enterprise value and results of determination of appropriateness based on such threshold; a recording means interface 385 (including the functions of an enterprise index acquisition means, comprehensive evaluation index acquisition means, threshold value acquisition means or output means) for reading out information recorded in the recording means 384 and writing information in the recording means 384; and a calendar clock 390 for clocking the time.

The information processing means 380 and respective peripheral circuits, including the display interface 373, the memory 381, the recording means interface 385 and the calendar clock 390 in the enterprise evaluation device 30 is connected to a bus 399, and the respective peripheral circuits can be controlled based on the processing program to be executed by the information processing means 380.

Incidentally, various databases such as of the enterprise index, the comprehensive evaluation index, the various threshold value, the enterprise name, and the industry name may be stored in the recording means 384, may be provided by the recording medium 377 such as a CD-ROM, CD-RW, DVD, MO or the like, or may be acquired from another telecommunications device (database 20 or the like) via the communication network 364.

Further, the enterprise evaluation device 30 can also be realized by using various computers such as a personal computer or a workstation. In addition, computers may be connected to a network to implement functions of the enterprise evaluation device 30 by sharing the functions.

The transmission-reception means 365, the recording means interface 385, the recording medium interface 379, and information processing means 380 functioning as the enterprise index acquisition means are capable of acquiring, from an index data storage device (database 20, recording means 384, recording medium 377 or the like) storing enterprise indexes, an enterprise index such as an enterprise investment related index such as amount of capital investment and investment trend index; a management-finance analysis related index such as capital investment efficiency, a labor productivity, a total factor productivity, and cost to sales ratio; a research and development related index such as research and development cost, the number of inventors, an inventor ratio, and a research and development cost per one inventor; a research and development efficiency related index such as a research and development cost ratio, a research and development efficiency, and a patent application productivity; a patent application related index such as the number of patent applications, the number of claims filed, and the number of claims per one application; an examination request related index such as the number of examination requests, average years before examination request, and examination request ratio; a patent obtainment related index such as the number of patents granted, the number of claims granted, and the number of patents granted per one inventor; a patent stock related index such as the total number of effective patents and total effective patent remaining ratio; a patent concentration degree related index such as the number of claims filed share and degree of patent concentration; or a patent profitability related index.

Further, the transmission-reception means 365, the recording means interface 385, the recording medium interface 379, and the information processing means 380 functioning as the comprehensive evaluation index acquisition means are capable of acquiring, from a comprehensive evaluation index database (database 20, recording means 384, recording medium 377 or the like), a comprehensive evaluation index such as a profit related index such as a sales volume, a patent royalty income, and an operating profit; an excess profit related index such as an excess value added amount and an excess operating profit; or a market evaluation related index such as expected intellectual property profit.

Further, the transmission-reception means 365, the recording means interface 385, the recording medium interface 379, and the information processing means 380 functioning as the industry enterprise acquisition means are capable of acquiring, from an industry enterprise database (database 20, recording means 384, recording medium 377 or the like), information such as industry names and enterprise names.

Further, the transmission-reception means 365, recording means interface 385, recording medium interface 379, and information processing means 380 functioning as the threshold value acquisition means are capable of acquiring a threshold value from a threshold value recording means (the database 20, the recording means 384, the recording medium 377 or the like) in which is recorded the threshold value of the contribution ratio for extracting an enterprise index deeply related to the comprehensive evaluation index.

Further, the transmission-reception means 365, the recording means interface 385, the recording medium interface 379, and the information processing means 380 functioning as the threshold value acquisition means are capable of acquiring a threshold value from a threshold value recording means (database 20, recording means 384, recording medium 377 or the like) in which is recorded the threshold value of T value or P value for extracting an enterprise index deeply related to the comprehensive evaluation index.

The recording means such as the database 20, the recording means 384, and the recording medium 377 are capable of as records factors and their classification and enterprise indexes created by performing factor analysis using an enterprise index such as an enterprise investment related index such as capital investment amount and investment trend index, a management-finance analysis related index such as capital the investment efficiency, the labor productivity, the total factor productivity and the cost to sales ratio, the research and development related index such as research and development cost, the number of inventors, the inventor ratio and the research and development cost per one inventor, the research and development efficiency related index such as the research and development cost ratio, the research and development efficiency and the patent application productivity, the patent application related indexes such as the number of patent applications, the number of claims filed and the number of claims per one application, the examination request related indexes such as the number of examination requests, the average years before examination request and the examination request ratio, the patent obtainment related indexes such as the number of patents granted, the number of claims granted and the number of patents granted per one inventor, a patent stock related index such as the total number of effective patents and the of remaining ratio total effective patents, the patent concentration degree related indexes such as the number of claims filed share and the patent concentration degree, or the patent profitability related index; the factor loading calculated by performing the factor analysis; and the contribution ratio in relation to the comprehensive evaluation index calculated by performing multiple regression analysis using the profit related index such as the sales volume, the patent royalty income and the operating profit, the excess profit related indexes such as the excess value added amount and the excess operating profit, or the market evaluation related index such as an expected intellectual property profit, and the enterprise index for each of classification the by the above mentioned factors.

Further, the database 20, recording means 384, and recording medium 377 functioning as the threshold value recording means are capable of storing the contribution ratio threshold value, the T value threshold value, or the P value threshold value for extracting the enterprise index deeply related to the comprehensive evaluation index.

The information processing means 380 or the like functioning as the factor analysis means is capable of performing factor analysis using the enterprise index, creating a factor for each classification of the enterprise index, and calculating the value of the factor loading, factor score, eigenvalue, contribution ratio, cumulative contribution ratio and the like.

Further, the information processing means 380 or the like functioning as the contribution ratio calculation means is capable of performing multiple regression analysis by using an enterprise index for each of classifications of the factors and the comprehensive evaluation index, and calculating the contribution ratio in relation to the comprehensive evaluation index.

Further, the information processing means 380 or the like functioning as the index calculation means is capable of standardizing the factor score, and calculating such an index which is 100 for the enterprise with the maximum factor score.

Further, the information processing means 380 or the like functioning as the display data generation means is capable of reading out the factor and its contribution ratio, the enterprise index configuring the factor, the factor loading of the enterprise index, or the comprehensive evaluation index from the recording means including the database 20, recording means 384, and recording medium 377, and creating the display data for associating the read-out data and displaying the same.

Further, the information processing means 380 functioning as the contribution ratio calculation means or the like is capable of performing multiple regression analysis by using the acquired enterprise index or the factor extracted from such index, and the comprehensive evaluation index, and calculating the contribution ratio of the index or the factor relative to the comprehensive evaluation index.

Further, the information processing means 380 or the like functioning as the enterprise index extraction means is capable of comparing the contribution ratio and the threshold value, and extracting the enterprise index or the factor having a contribution ratio that is greater than the threshold value.

Further, the information processing means 380 or the like functioning as the contribution ratio calculation means is capable of performing multiple regression analysis by using the acquired enterprise index or the factor extracted from such index, and the comprehensive evaluation index, and calculating the contribution ratio and the T value or P value of the index or factor relative to the comprehensive evaluation index.

Further, of the information processing means 380 or the like functioning as the enterprise index extraction means is capable of comparing the T value and the threshold value, and extracting the enterprise index or the factor having the T value that is greater than the threshold value.

Further, the information processing means 380 or the like functioning as the enterprise index extraction means is capable of comparing the P value and the threshold value, and extracting the enterprise index or factor having the P value that is less than the threshold value.

Further, the information processing means 380 or the like functioning as the principal component analysis means is capable of performing principal component analysis by using the enterprise index acquired from the recording means or the enterprise index configuring the factor extracted from contribution ratio calculation means, and the comprehensive evaluation index, and calculating the principal component score of each enterprise.

Further, the display interface 373, transmission-reception means 365, recording means interface 385, recording medium interface 379, printer interface 374, and information processing means 380 functioning as the output means are capable of outputting the data of the factor, the contribution ratio of the factor, the enterprise index configuring the factor, the factor loading, or the comprehensive evaluation index to the display means, printing means, recording medium, or another telecommunications device via a communication line.

Further, the display interface 373, transmission-reception means 365, recording means interface 385, recording medium interface 379, printer interface 374, and information processing means 380 functioning as the output means are capable of outputting the data of the factor scores and their corresponding enterprise name, in the order of the factor score, to the display means, printing means, recording medium, or another telecommunications device via a communication line.

Further, the display interface 373, transmission-reception means 365, recording means interface 385, recording medium interface 379, printer interface 374, and information processing means 380 functioning as the output means are capable of outputting data of the indexes and their corresponding enterprise name, in the order of the index, to the display means, printing means, recording medium, or another telecommunications device via a communication line.

Further, the display interface 373, transmission-reception means 365, recording means interface 385, recording medium interface 379, printer interface 374, and information processing means 380 functioning as the output means are capable of outputting the display data to the display means, printing means, recording medium, or another telecommunications device via a communication line.

Further, the display interface 373, transmission-reception means 365, recording means interface 385, recording medium interface 379, printer interface 374, and information processing means 380 functioning as the output means are capable of outputting the data of the enterprise index and its contribution ratio, and the comprehensive evaluation index to the display means, printing means, recording medium, or another telecommunications device via a communication line.

Further, the display interface 373, transmission-reception means 365, recording means interface 385, recording medium interface 379, printer interface 374, and information processing means 380 functioning as the output means are capable of outputting data of the significant factor for the comprehensive evaluation index and the enterprise index and its contribution ratio contained therein to the display means, printing means, recording medium, or another telecommunications device via a communication line.

The enterprise evaluation device according to the present invention provides a system enabling a user to easily judge which indexes should be used in conducting an evaluation by industry or of one enterprise when the user evaluates an industry to be researched or a specified enterprise by performing factor analysis, multiple regression analysis, or principal component analysis using public data of a business-management related index such as the capital investment amount, a research and development related index such as the research and development cost, or an intellectual property related index such as the number of patent applications.

The enterprise evaluation device according to the present invention enables the user to objectively and quantitatively obtaining the contributing index from published information since it uses the multivariate analysis such as the factor analysis as the means of solution.

Incidentally, the factor analysis is a processing for extracting important indexes from numerous indexes and aggregating the extracted indexes for each factor. The multiple regression analysis is a processing for researching how much the various factors contribute to the comprehensive evaluation index such as the enterprise profit. The principal component analysis is a processing for comprehensively determining the important index that is being sought.

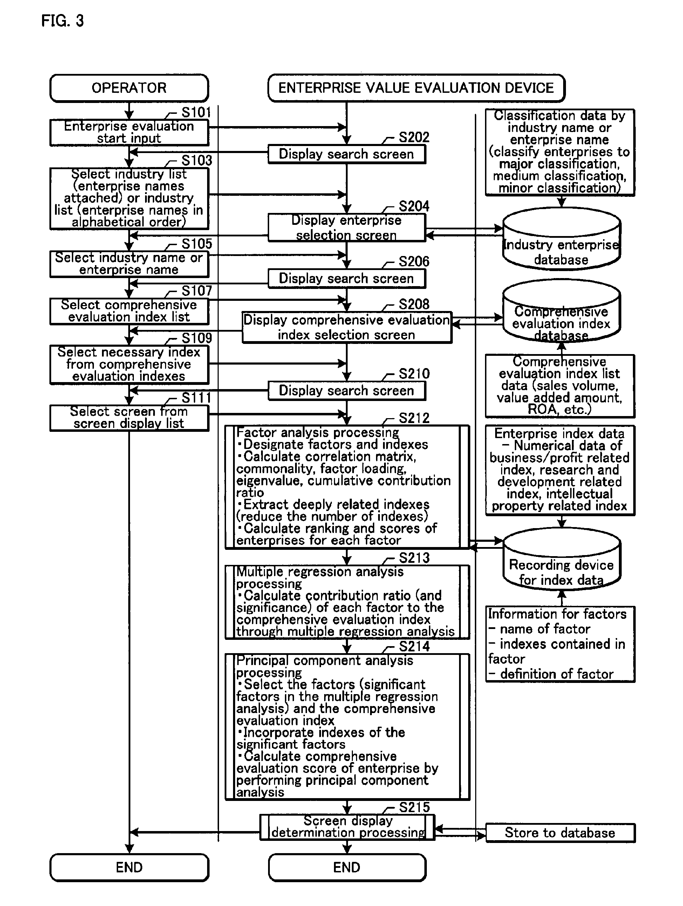

Fig. 3 shows a flowchart of sequential processing conducted by the enterprise evaluation device according to the present invention.

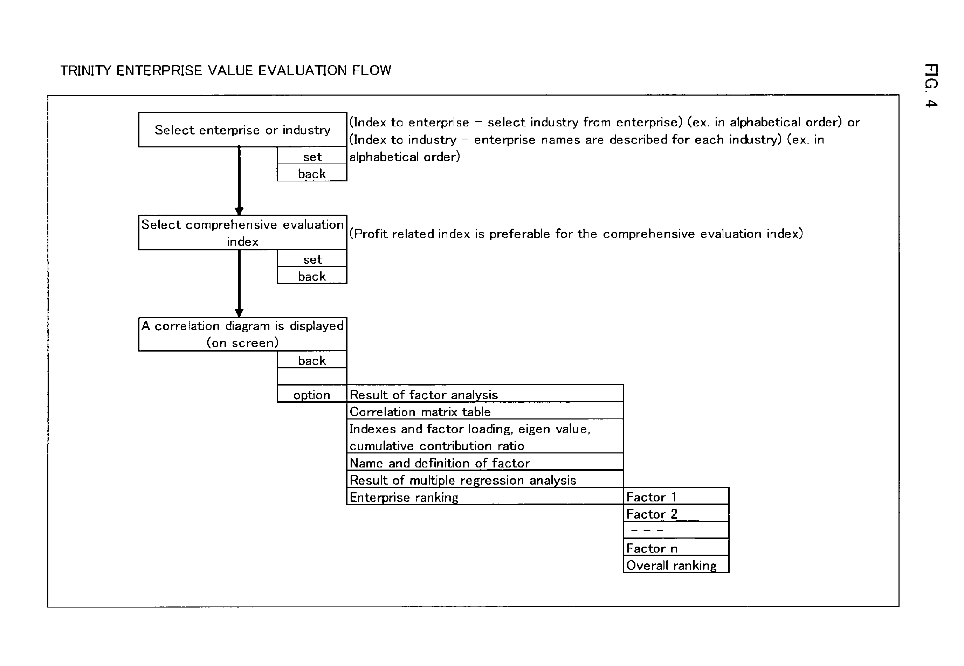

Fig. 4 shows a flow of operations made by the user (trinity enterprise evaluation flow).

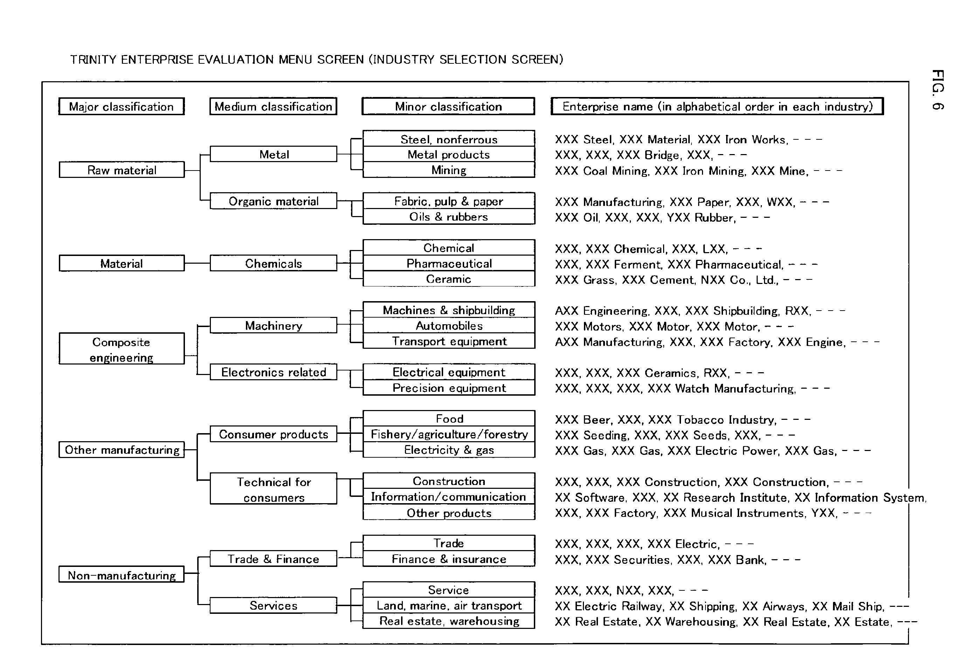

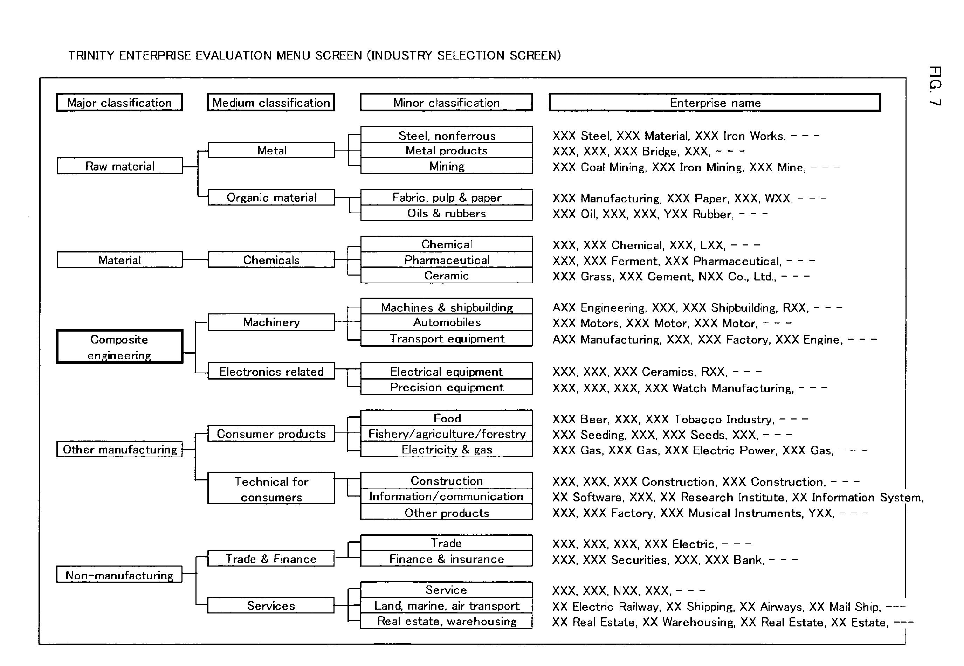

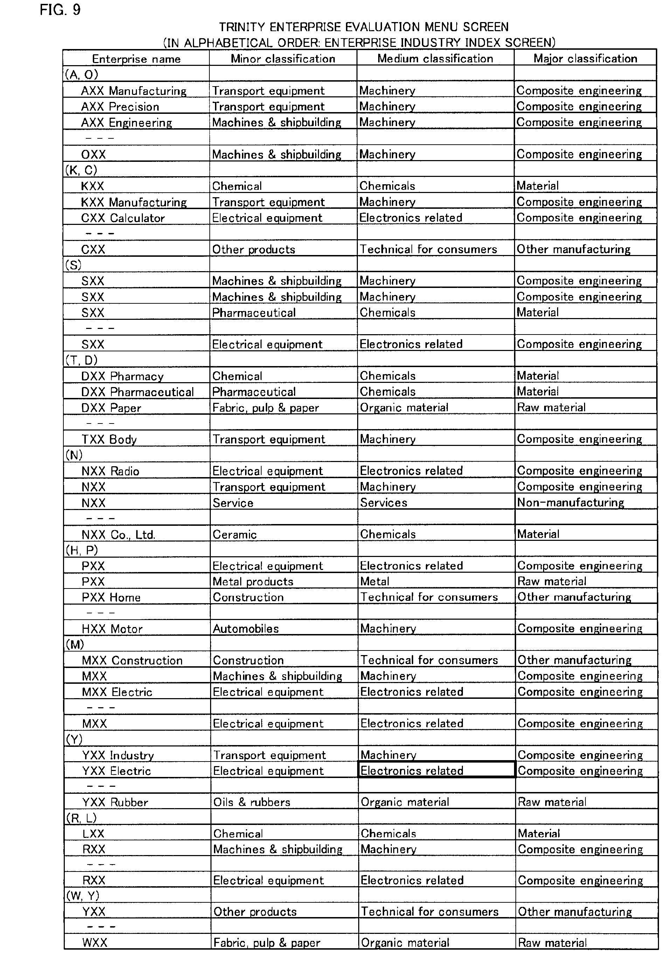

It is to be noted that the industry enterprise database, which is a component of the enterprise evaluation system, stores in advance classification data of industry names and enterprise names as shown in Fig. 6 to Fig. 9 for the selection of the industry or enterprise to be researched.

The classification data of the industry names and the enterprise names are data in which industry names and enterprise names have been classified in advance by anticipating the industries and enterprises the user would wish to evaluate. Since the classification of enterprises and industries is troublesome, it would be a hindrance to simple evaluation of an enterprise or the like by the user. Thus, in the present invention, by recording in advance the classification data of industries and enterprises in the industry enterprise database, the user can specify the industry or enterprise to be researched simply by selecting an industry name or an enterprise name from the displayed list.

It should be noted that the classification of industry names and enterprise names shown in Fig. 6 to Fig. 9 is merely an example, and classification data of other industry names and enterprise names may be used.

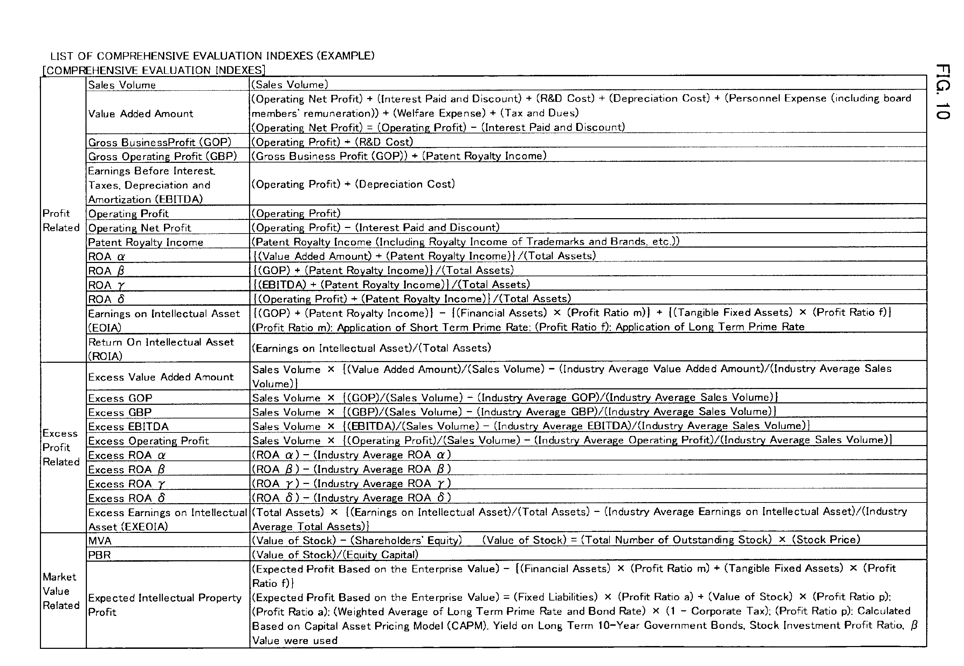

Further, the comprehensive evaluation index database, which is a component of the enterprise evaluation system, stores in advance, for instance, the comprehensive evaluation indexes shown in Fig. 10 which it is most likely to be used by the user in the enterprise evaluation.

The comprehensive evaluation index is data regarding the enterprise evaluation index representing the profit or performance of an enterprise. An example of the comprehensive evaluation index is shown in Fig. 10. As a plurality of comprehensive evaluation indexes have been recorded, the user can easily research the factor or index contributing to the comprehensive evaluation index by simply selecting desired item of comprehensive evaluation index.

For example, the profit related $ROA\delta$ included in the comprehensive evaluation index is an index obtained by adding the patent royalty income to the operating profit, and dividing the sum by the total assets. Patents are a part of the assets, and it can be said that this comprehensive evaluation index is suitable for measuring how much the patents contributed to the profits by utilizing tangible assets and intellectual property assets owned by the enterprise.

Further, the index database, which is a component of the enterprise evaluation system, stored in advance the enterprise indexes to be used in factor analysis or the like when the user evaluates an enterprise.

The enterprise indexes are data relating to the business-management related index, research and development related index, intellectual property related index and the like of each enterprise.

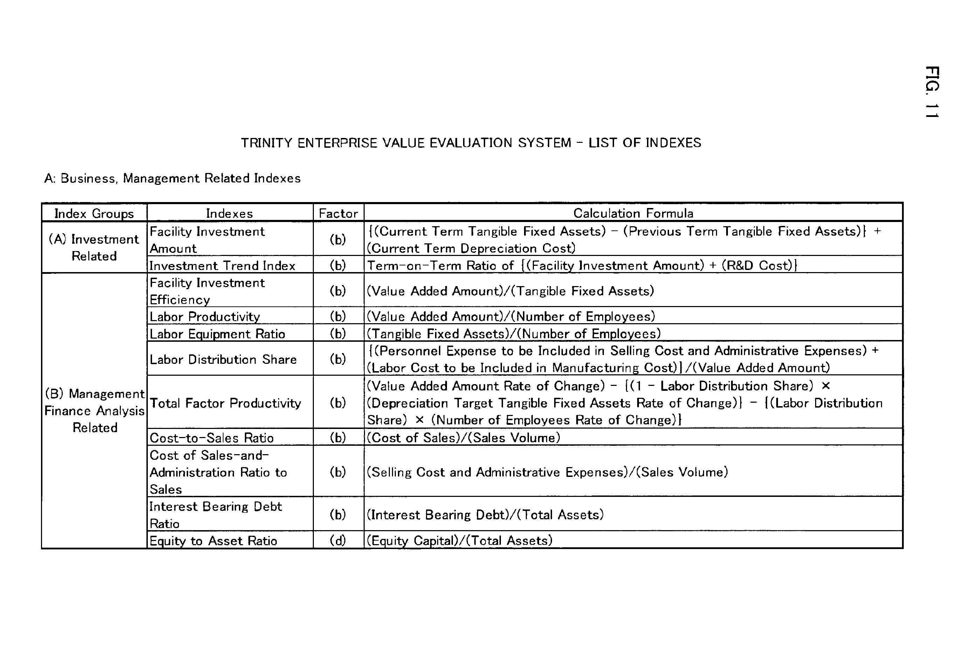

The types of such indexes are shown in Fig. 11 to Fig. 14. When the user uses the enterprise evaluation device and conduct an evaluation, the user may extract important indexes with factor analysis using the foregoing indexes, calculate the contribution ratio in relation to one comprehensive evaluation index such as the profits of the enterprise for various factors based on multiple regression analysis, and calculate the comprehensive value for the judgment of an enterprise based on principal component analysis.

By recording these enterprise indexes in the index database in advance, the user can know which index contributes to the enterprise, profit by simply selecting the industry name or the enterprise name, and selecting the comprehensive evaluation index.

Since the values of the indexes will change year by year, maintenance of the indexes may be performed such as by adding indexes every term or every year.

It should be noted that the enterprise indexes shown in Fig. 11 to Fig. 14 are merely examples, and other indexes may be used. Further, when factor analysis is made for only one enterprise, it is necessary to accumulate data for two years or more, desirably not less than ten years.

At step S101 shown in Fig. 3 as "enterprise evaluation start input" (the processing steps are hereinafter abbreviated and simply referred to as "S101" and so on), the user (operator) inputs a command for starting the enterprise evaluation via the input means 370 such as a keyboard. When a command for starting the enterprise evaluation is input, the processing to be executed by the information processing means 380 of the enterprise evaluation device 30 proceeds to the processing at S202 "display search screen".

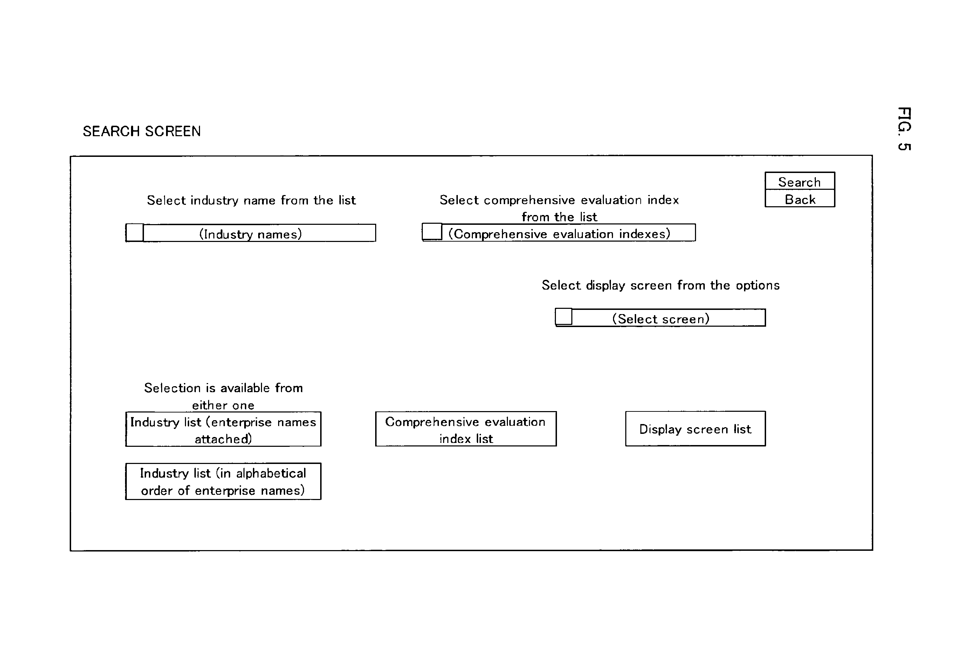

At S202, when the information processing means 380 acquires the command for starting the enterprise evaluation input from the user (operator) via the input means 370 such as a keyboard, it reads out data for displaying search screen as shown in Fig. 5 from the recording means 384, converts the read out data to image data for the display and outputs the image data to the display interface 373.

The display interface 373 that has acquired the image data for display, converts the image data into video signal adapted for the display by the display means 372 and outputs the video signal, with the display means 372 notifying the user by displaying the image based on the video signal for the display input from the display interface 373.

At S103 "select industry list (enterprise names attached) or industry list (in the alphabetical order of enterprise names)", the user, while viewing the search screen displayed on the display means 372, may select the method of selecting the industry name or enterprise name to be researched from the "industry list (enterprise names attached)" and "industry list (in the alphabetical order of enterprise names)" displayed on the screen.

When the user is to perform the evaluation for an industry according to a general classification, the user may select "industry list (enterprise name attached)". When the user wishes to perform an evaluation using an enterprise name, the user may select "industry list (in the alphabetical order of enterprise name)". When information for selecting the method of extracting the desired industry name or enterprise name as mentioned above is input via the input means 370, the processing to be performed by the information processing means 380 proceeds to S204 "display enterprise selection screen".

When at S103 the user inputs information for selecting the "industry list (enterprise name attached)" via the input means 370, the information processing means 380 reads such input information, reads out classification data of the industry name or enterprise name from the industry enterprise database, processes the data into display data for the "trinity enterprise evaluation menu screen (industry selection screen)" as shown in Fig. 6, further converts the display data into display image data and outputs the image data to the display interface 373.

The display interface 373 that has acquired the display image data converts the image data into display video signals adapted to the display means 372 and outputs the video signals, so that the display means 372 notifies the user by displaying the image based on the display video signal input from the display interface 373.

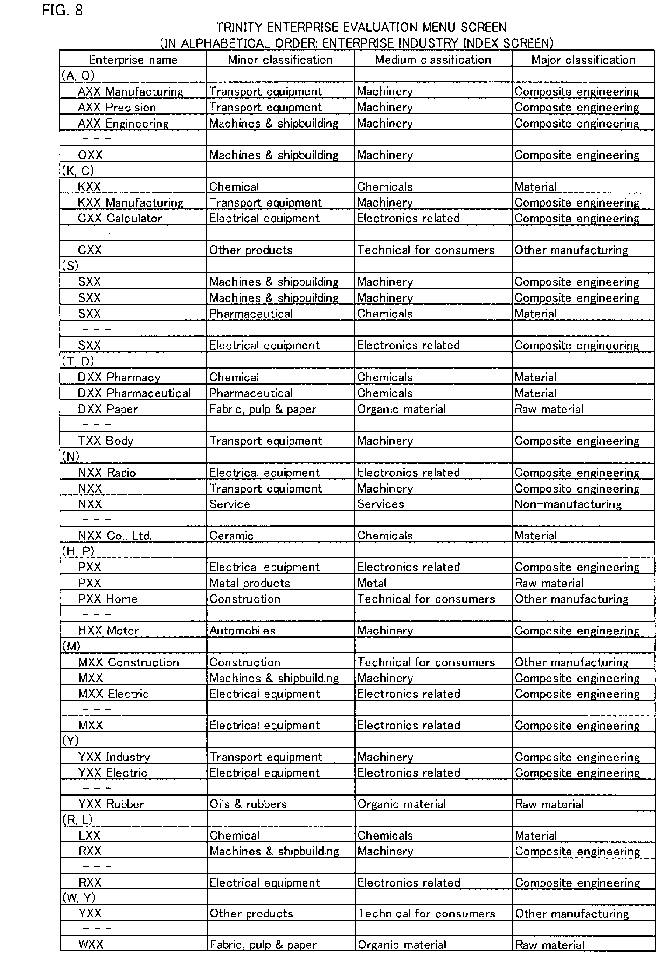

When at S103 the user inputs information for selecting the "industry list (in the alphabetical order of enterprise name)" via the input means 370, the information processing means 380 reads such input information, reads out classification data of the industry names or enterprise names from the industry enterprise database, processes the data into display data for the "trinity enterprise evaluation menu screen (in the alphabetical order: enterprise industry index screen)" as shown in Fig. 8, further converts the processed data into display image data and outputs the data to the display interface 373. The display means 372 notifies the user by displaying the image based on the display video signal input from the display interface 373.

At S105 "select industry name or enterprise name", the user may select the industry name or enterprise name to be evaluated while viewing the selection screen shown in Fig. 6 to Fig. 9.

When the display means 372 is displaying the "trinity enterprise evaluation menu screen (industry selection screen)" shown in Fig. 6, the user may select the desired industry name or enterprise name (composite engineering, machinery, machines/shipbuilding, XXX engineering, and so on) from the displayed "major classification", "medium classification", "minor classification", or "enterprise name".

When the display means 372 is displaying the "trinity enterprise evaluation menu screen (in the alphabetical order: enterprise industry index screen)" shown in Fig. 8, the user may select a desired industry name or enterprise name (composite engineering, machinery, machines/shipbuilding, XXX engineering, and so on) from the displayed "major classification", "medium classification", "minor classification", and "enterprise name".

The information processing means 380 temporarily stores in the recording means 384 the information of the industry name or enterprise name selected by the user. When the user selects the industry or enterprise name desired to be evaluated, the processing to be performed by the information processing means 380 proceeds to S206 "display search screen".

At S206 "display search screen", when the information processing means 380 acquires a command for the selection of information of the industry name or enterprise name from the user via input means 370, it reads out the display data for the search screen shown in Fig. 5 from the recording means 384, further converts the display data into display image data and outputs the display image data to the display interface 373. The display means 372 notifies the user by displaying the image based on the display video signal input from the display interface 373.

At S107 "select comprehensive evaluation index list", the user may select the comprehensive evaluation index which the user wants to research, from the "comprehensive evaluation index list" displayed on the screen while viewing the search screen displayed on the display means 372. When information for selecting the "comprehensive evaluation index list" is input via the input means 370, the processing to be performed by the information processing means 380 proceeds to S208 "display comprehensive evaluation index selection screen".

At S208 "display comprehensive evaluation index selection screen", when the information processing means 380 acquires the command for selecting the "comprehensive evaluation index list" from the user via the input means 370, it reads out data of the comprehensive evaluation index list from the comprehensive evaluation index database, creates display data of the "comprehensive evaluation index list" as shown in Fig. 10, and notifies the user by displaying the "comprehensive evaluation index list" on the display means 372.

At S109 "select necessary index from comprehensive evaluation indexes", the user may select the comprehensive evaluation index to be evaluated while viewing the selection screen shown in Fig. 10. The user may select a desired comprehensive evaluation index from the displayed indexes such as "sales volume", "value added amount", "ROA$\alpha$" and the like.

The information processing means 380 temporarily store the comprehensive evaluation index selected by the user in the recording means 384. When the user selects the comprehensive evaluation index to be evaluated, the processing to be performed by the information processing means 380 proceeds to S210 "display search screen".

At S210 "display search screen", when the information processing means 380 acquires the command indicating that information has been selected in the comprehensive evaluation index by the user via input means 370, it reads out display data for the search screen as shown in Fig. 5, from the recording means 384, and notifies the user by displaying the search screen on the display means 372.

At S111 "select screen from screen display list", the user may select the way of screen display to be used in the evaluation, from the screen selection pulldown menu displayed on the screen while viewing the search screen displayed on the display means 372. The user may select the way of screen display from the displayed "correlation diagram", "factor analysis result", "correlation matrix chart", and the like.

The information processing means 380 temporarily stores in the recording means 384 the way of screen display selected by the user. When the user selects the desired way of screen display, the proceeding to be performed by the information processing means 380 proceeds to S212 "factor analysis processing".

Incidentally, the selections made by the user at S103 through S111 do not have to be in the order shown in the flowchart. For instance, after performing S105 "select industry enterprise name", the user may perform S109 "select comprehensive evaluation index", and thereafter perform S111 "select display screen". Or, after performing S111 "select display screen", the user may then perform S105 "select industry enterprise name", and thereafter perform S109 "select comprehensive evaluation index".

In the subroutine of S212 "factor analysis", the information processing means 380 first acquires from the database 20 or the like enterprise indexes (numerical value data or the like) such as the "business-profit related index", "research and development related index", or "intellectual property related index" shown in Fig. 11 to Fig. 14.

Subsequently, the information processing means 380 performs factor analysis using the acquired enterprise indexes to calculate the correlation matrix, the degree of commonality, the factor loading, the eigenvalue, the cumulative contribution ratio and the like. The information processing means 380 thereafter performs processing for extracting the primary factor and the primary indexes included in such factors based on the calculated correlation matrix and the like.

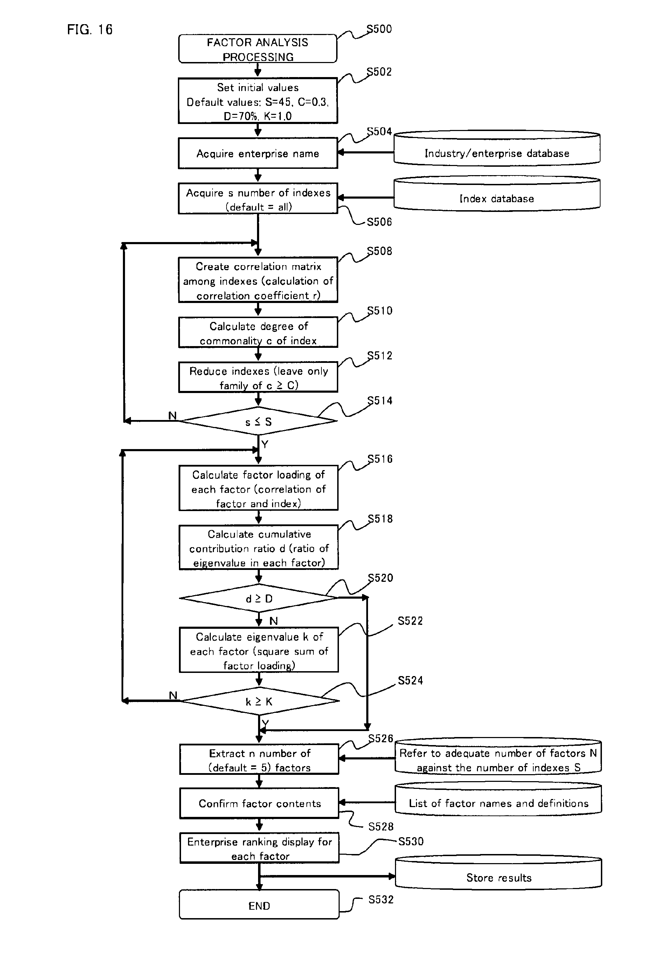

Subsequently, the information processing means 380 can calculate the ranking and scores of the respective enterprises regarding the calculated primary factor and the primary indexes contained therein. When the processing at S212 is ended, the processing proceeds to S213 "multiple regression analysis". Details of the processing at S212 will be explained in the description of the processing from S500 onward shown in Fig. 16.

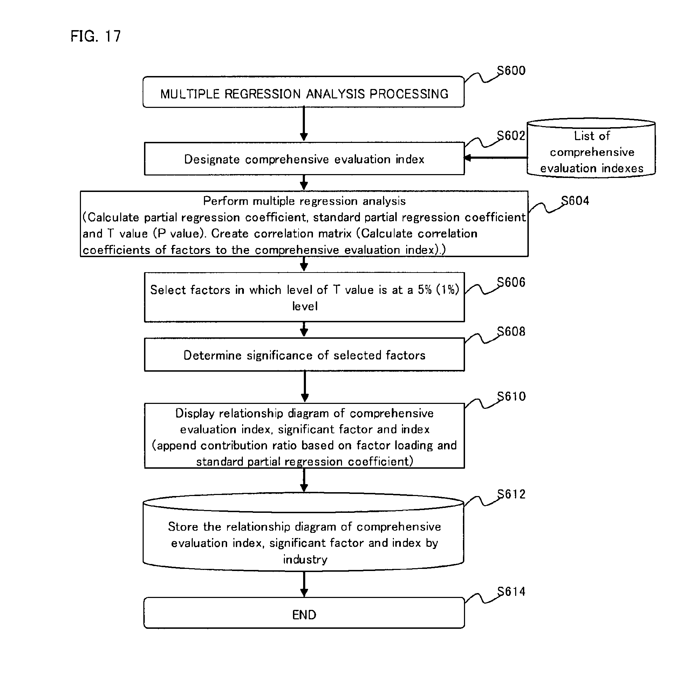

In the subroutine of S213 "multiple regression analysis", the information processing means 380 performs multiple regression analysis based on the factor extracted during the processing at S212 and the comprehensive evaluation index selected by the user at S107 "select comprehensive evaluation index list", calculates the contribution ratio showing how much the factor obtained at S212 contributes to the comprehensive evaluation index selected by the user at S107 "select comprehensive evaluation index list", and thereby extracts a factor having a high contribution ratio. When the processing of multiple regression analysis is ended, the processing to be executed by the information processing means 380 proceeds to the subsequent processing at S214 "principal component analysis". Details regarding the processing at S213 will be explained from S600 onward shown in Fig. 17.

In the subroutine of S214 "principal component analysis", the information processing means 380 performs the principal component analysis regarding the factor with a high contribution ratio extracted during the processing at S213. Specifically, the information processing means 380 selects the indexes contained in the significant factor having a high contribution ratio as determined at S213 and the comprehensive evaluation index designated by the operator, and calculates comprehensive evaluation scores of the enterprises by performing principal component analysis. When the processing at S214 is ended, the processing to be executed by the information processing means 380 proceeds to the subsequent processing of S215 "screen display determination processing". Details regarding the processing at S214 will be explained in the description of the processing from S700 onward shown in Fig. 17.

In the subroutine of S215 "display screen", the information processing means 380 reads out from the database 20 information (information for evaluating enterprises such as trinity management overall ranking, relationship diagram, factor-based ranking and the like) based on the type of screen display selected by the user at S111, and notifies the user by creating display data and displaying the data on the display means 372.

In this respect, the created display data for evaluating enterprises such as trinity management overall ranking, relationship diagram, factor-based ranking and the like may also be recorded in the database 20. When the screen display determination processing at S215 is ended, the processing to be executed by the information processing means 380 proceeds to "end", and the enterprise evaluation processing is ended thereby.

The comprehensive evaluation index and the enterprise index to be used in the enterprise evaluation device, enterprise evaluation program and enterprise evaluation method according to the present invention are now explained.

Although there are numerous important matters for a person running an enterprise, it can be said that the most important task is to continuously make profits. Many enterprises perform various simulations in order to improve the operating revenue, select specific means necessary for improving the operating revenue, and seek to improve the operating revenue by executing such means one by one. With regard to this, the accuracy of simulation concerning the operating revenue to be performed in advance and the labor and costs required for such simulation concerning the operating revenue will be problems.

If much time and labor are injected to perform the simulation concerning the operating revenue, a certain degree of accuracy can be expected as a matter of course, and it may be possible to take measures for improving the operating revenue based on the result of the simulation. Nevertheless, to perform highly reliable simulation in response to the ever-changing demands and social situation usually entails difficulty in terms of costs and time.

With regard to this, if it is possible to infer the contribution ratio (impact) yielded to operating revenue related indexes by using information such as financial statement data of the respective companies which are in the public domain and are generally available, highly reliable simulation can be made in response to the ever-changing demands and social situation inexpensively.

Today, financial statement data such as the enterprise's fixed assets, the number of employees, employment costs, labor costs, equity capital, total assets, marketing costs and the like are announced each year or each term.

Further, pursuant to the revision of the accounting standards in Japan, it has been obliged as a general rule that research and development cost is recorded entirely as expenses in the settlement of accounts after the term ending March 2000, so that information concerning the research and development cost of the respective enterprises can be easily obtained.

Further, the Japanese patent office is publishing unexamined patent application publications and patents in the form of CD-ROMs, DVD-ROMs and documents, and these official gazettes include intellectual property related data such as the filing date, application number, title of the invention, inventor(s), applicant, claims, abstract, IPC, FI, F term and so forth.

Based on enterprise information such as the financial statement data, research and development cost, and intellectual property related data of the respective enterprises, it is thought to be possible to calculate the contribution ratio in relation to the comprehensive evaluation index of the enterprise's research and development strategy, intellectual property strategy and business strategy.

Financial statement data and research and development cost are announced each year or each term, and intellectual property related data such as of the patent gazettes are published sequentially. Since such financial statement data, research and development cost, and intellectual property related data reflect the ever-changing demands and social situation, these are highly reliable and advantageous for use in simulations concerning the operating revenue. In the present invention, it is desirable to calculate and present the impact (contribution ratio) on the operated revenue related index by using a combination of at least two or more index classifications of the indexes classified as the business related index, research and development related index, or intellectual property related index.

Incidentally, although it is possible to calculate the contribution ratio responsive to the changing economy by calculating the contribution ratio using the financial statement data, research and development cost, and intellectual property related data of each year or each term, it is also possible to calculate the contribution ratio using the 3-year average, 5-year average, or 10-year average of financial statement data, research and development cost, and intellectual property related data. Usage of average data enables calculation of the contribution ratio averaging the influence of the changing economy.

Fig. 10 is a chart illustrating the types of comprehensive evaluation indexes (operating revenue related indexes subject to the calculation of the contribution ratio and the like; also referred to as a criterion variable).

As shown in Fig. 10, as the comprehensive evaluation index, illustrated are sales volume, value added amount, gross business profit, gross operating profit, earnings before interest, tax, depreciation and amortization (EBITDA), operating profit, net operating profit, patent royalty income, ROA$\alpha$, ROA$\beta$, ROA$\delta$, ROA$\gamma$, earnings on intellectual asset (EOIA), and return on intellectual asset (ROIA). The mathematical processing is not limited to the calculation of the management related index mentioned below, but the contribution ratio can also be calculated for the business related index, research and development related index, or intellectual property related index. Nevertheless, in the embodiments of the present invention illustrated are examples of calculating the business related profit index of the highest interest.

The definition and meaning of each index regarding a part of the comprehensive evaluation indexes shown in Fig. 10 is now explained.

A value added amount is generated by a specified enterprise in a specified period and is used for measuring the value created by internal production factors (personnel, articles, money) of the sales volume. Since the value added amount allocated to the internal production factors has the same meaning as the total value generated before the allocation, this shows the total amount of value created by a specified enterprise in a specified period. Not only does the value added amount represent the results after allocation to the respective factors such as the operating profit and current profit, it is also able to capture the total value created before the allocation, and, therefore, this is useful in analyzing the profitability of a specified enterprise.

Further, the gross business profit is an index shown in (Formula 1).

(Formula 1)

Gross business profit = {(sales profit) + (research and development cost included in manufacturing cost)} - {(administrative expenses) - (research and development cost included in administrative expenses)} = (operating profit) + (research and development cost)

(Formula 2)

Operating profit = (sales profit) - (administrative expenses)

(Formula 3)

Research and development cost = (research and development cost included in manufacturing cost) + (research and development cost included in administrative expenses)

(Formula 2) and (Formula 3) described above also represent the relationship of the profit indexes for calculating the gross business profit.

Further, pursuant to the revision of the accounting standards it has been obliged as a general rule that the research and development cost is recorded entirely as expenses in the settlement of accounts after the term ending March 2000. In the past, there were numerous companies that did not disclose as a breakdown the research and development cost included in the manufacturing costs and general administrative expenses. However, after the enforcement of these regulations, the amount of research and development cost pertaining to the calculation of profits and losses became clear. In response to that, for the purpose of multilaterally analyzing the actual status of such research and development cost of the company, index referred to as the "gross business profit" has been developed. This is based on a trial calculation of hypothetical profits (gross profit generated from the manufacture and sale activities generated by main business excluding research and development activities) sought by adding the research and development cost to the operating profit.

As a result of the research and development cost being entirely recorded as expenses, the more research and development activities are positively engaged, the more operating profit will be compressed, from the view point of calculating profits and losses. Thus, while the importance of technology development (intellectual property) is being discussed, there is a problem in that it is difficult to grasp the actual condition of the profitability of the company only from the perspective of operating profit. The foregoing provisional estimate is considered to provide a perspective to this problem.

This gross business profit index is an index that is positioned roughly between the sales profit and operating profit. By using the gross business profit along with the sales profit and operating profit, it is possible to grasp the profitability of the enterprise from more multiple view points. Incidentally, the sales profit is the gross margin sought by subtracting the manufacturing cost from the sales volume. Nevertheless, some of the research and development cost are included in manufacturing costs, whereas the rest of the research and development cost is included in general administrative expenses. Thus, strictly speaking, the gross business profit cannot be concluded as a profit index positioned between the sales profit and operating profit.

Further, the gross operating profit is an index to be calculated by adding the patent royalty income to the gross business profit.

Further, the earnings before interest, tax, depreciation and amortization (EBITDA) is an index showing the amount obtained by adding the depreciation cost to the operating profit. Since depreciation cost is account processing of depreciating equipment and the like used in manufacturing products as annual expenses, this index is not used for measuring the operating revenue, and should be considered as a profit index focusing on the cash flow. Incidentally, since the depreciation cost is an account processing and does not involve expenses, the value obtained by adding this to the operating profit will represent the approximate cash flow. Nevertheless, since the depreciation of equipment is clearly the cost that relates to manufacture, it is necessary to keep in mind that there is a problem in using this as an index representing the operating revenue.

Further, operating profit is an index showing the operating profit in each year of each enterprise. This index represents the balance after the deduction of all manufacturing costs, purchase amounts, marketing costs and administrative expenses from the sales volume. Incidentally, although this index is used to show profits of the core business, it is necessary to keep in mind that the research and development cost (investment) has been deducted.

Further, net operating profit is an index showing the profit amount sought by deducting the interest paid and discount expense from the operating profit in each year of each enterprise. Although the operating profit is the profit obtained by deducting all costs pertaining to manufacture and sale, financial costs required for business activities are not deducted. Thus, this index shows the net profit amount obtained by deducting the foregoing financial cost from the operating profit.

Further, patent royalty income shows the patent royalty income described in the business status section of the financial statement, or the patent royalty income described as the nonoperating profit in the profit and loss statement.

Further, ROA$\alpha$ is an index showing the ratio of the amount obtained by adding the patent royalty income to the value added amount, to the total asset in each year of each enterprise. Incidentally, the total amount of the value added amount and the patent royalty income shows the value added gross generated by the enterprise each year.

A conventional ROA (return on asset) is a ratio obtained by dividing the current profit by the total assets, and is an index for checking how much profit was gained from the total assets. Incidentally, for enterprises that are recording their patent royalty income as a nonoperating profit, this is added to seek a more accurate value. The ROA$\alpha$ index shows the ratio of the total amount of the value added and the patent royalty income (in other words, the value added gross generated by the enterprise each year) to the total asset.

Further, ROA$\beta$ is an index showing the ratio of the amount obtained by adding the patent royalty income to the gross business profit, to the total asset in each year of each company. The ROA$\beta$ index shows the ratio of the total amount of the gross business profit and the patent royalty income (in other words, the gross business earnings generated by the enterprise each year) to the total asset.

Further, ROAγ is an index showing the ratio of the amount obtained by adding the patent royalty income to the EBITDA to the total asset in each year of each company. The ROAγ index shows the ratio of the total amount of the EBITDA and the patent royalty income (in other words, the approximate "cash flow" generated by the enterprise each year) to the total asset.

Further, ROAδ is an index showing the ratio of the amount obtained by adding the patent royalty income to the operating profit, to the total asset in each year of each company. The ROAδ index shows the ratio of the total amount of the operating profit and the patent royalty income (in other words, "accounting gross operating profit" in which the research and development cost is entirely recorded as expenses) to the total asset.

Further, the earnings on intellectual asset (EOIA) is an index showing the amount of profit obtained by deducting the theoretically expected profit to be obtained from the financial assets and the tangible fixed assets from the gross business profit which is the sum of the gross business profit and the patent royalty income recorded as nonoperating profit.

Further, upon calculating the earnings on intellectual asset (EOIA), the earnings on intellectual asset may be calculated using the operating profit and research and development cost, and the earnings on intellectual asset may also be calculated using the sales profit, administrative expenses, research and development cost, operating profit, research and development cost included in the manufacturing cost, and research and development cost included in the administrative expenses. Administrative expenses may include other costs such as purchase costs and selling costs of products.

The earnings on intellectual asset (EOIA) can be considered as the balance obtained by deducting the expected return to be obtained from the on-balance assets (assets on the balance sheet) from the gross operating revenue. The earnings on intellectual asset (EOIA) is an index representing the amount of profit estimated to be generated based on off-balance intellectual assets (intangible assets not indicated in the balance sheet) under the assumption that there are profits that cannot be explained from on-balance assets.

Further, the return on intellectual asset (ROIA) is an index showing the ratio of the earnings on intellectual asset to the total asset.

The earnings on intellectual asset (EOIA) may differ significantly depending on the size of the enterprise. Therefore, in order to enable the relative comparison of the profitability of the respective enterprises, the return on intellectual asset (ROIA) is an index calculating the ratio of the earnings on intellectual asset (EOIA) to the size of total assets. By using this index, the earnings on intellectual asset to the total assets can be compared under roughly the same conditions irrespectively of the size of the enterprise.

Incidentally, as a business profit related index for the calculation of the contribution ratio and the like, generally available information such as the sales volume, net operating profit, cost of sales, operating profit, depreciation cost, patent royalty income and the like may also be employed.

Fig. 11 is a chart illustrating business-management related indexes used for calculating the contribution ratio and the like.

In the present invention, in addition to generally available business related indexes such as the enterprise's fixed assets, the number of employees, employment costs, labor costs, equity capital, total assets, marketing costs and the like, other business related indexes are additionally calculated, as the business related indexes to be used in the calculation of the contribution ratio, by combining these generally available indexes or other indexes for the calculation of the contribution ratio and the like.

Here, a capital investment amount is an index showing the capital investment amount in each year of each enterprise. Incidentally, the capital investment amount and its year-on-year figure show the trend of prior investment in the enterprise's business activities (relatively mid- to short-term investment stance).

Further, an investment trend index is an index showing the year-on-year figure of the (capital investment amount + research and development cost) in each year of each enterprise. By viewing the year-on-year figure of the total amount of the capital investment amount and the research and development cost, it is possible to infer the comprehensive prior investment trend (stance) for short-term and mid-term investments of enterprises.

Further, as shown in Fig. 11, the indexes as mentioned below may be used as the management-finance analysis related index.

Capital investment efficiency is an index showing the ratio of the value added amount to the tangible fixed asset in each year of each enterprise. The capital investment efficiency is an index for measuring the size of the value added amount generated for the equipment in its possession. The greater the value, it can be considered that the equipment is being efficiently used to generate value added.

Further, labor productivity is an index showing the value added amount per one employee in each year of each enterprise. The labor productivity is an index for measuring the value added amount per one employee. It is thought that the greater the value is, the higher the productivity per employee is.

Further, labor equipment ratio is an index showing the tangible fixed asset amount per one employee in each year of each enterprise. The labor equipment ratio is an index for measuring the scale of the owned equipment per one employee. It is thought that the greater this value is, the more the automation in production is advanced. However, it is necessary to view the value in conjunction with the capital investment efficiency in order to consider whether the value is concerned with the improvement of productivity.

Further, labor distribution ratio is an index showing the ratio of the total labor costs to the value added amount in each year of each enterprise. The labor distribution ratio is an index for measuring the distribution ratio of labor costs to the generated value added. Although this distribution ratio will differ significantly depending on the industry, needless to say, it does not mean that the lower the better. The optimal level of distribution of the generated value added (employees, shareholders, financial costs, capital investment or research and development) will be determined based on the objective decided in the management strategy.

Further, total factor productivity is an index for measuring the technical progress ratio by deducting the rate of change in the input of equipment and labor power from the rate of change in the value added amount in each year of each enterprise. The total factor productivity signifies the portion that cannot be explained only with the increase in the input of equipment and labor power among the increase in production. The increase of this portion is said to be based on technological innovation. Nevertheless, since this portion includes, in addition to potential technological innovation, improvement in the skills of employees, improvement in management efficiency and realization of economic efficiency of scale, it can also be considered as the contribution level of intellectual assets in a broad sense.

Further, cost to sales ratio is an index showing the ratio of the cost of sales in the sales volume in each year of each enterprise. In the case of manufacturers, since the manufacturing cost of products is included in the cost of sales besides the sales volume of products, it can be said that this index reflects two variables; namely, the capability of selling products at high prices and the capability of purchasing and manufacturing products with low cost.

Further, cost of sales/administration ratio to sales is an index showing the ratio of the selling cost and administrative expenses to the sales volume in each year of each enterprise. In the case of manufacturers, this index represents the ratio of expenses pertaining to the sales/management divisions unrelated to the manufacture of products or purchase of products, to the sales volume. Incidentally, since the balance after deducting the cost to sales ratio and the cost of sales/administration ratio from the sales volume (100%) is the operating profit ratio, the lower the ratio is, the higher the operating profit ratio is. Nevertheless, since the research and development cost is also recorded as administrative expenses under accounting regulations, it is not necessarily the case where the lower the cost of sales/administration ratio is the better it is. It is also necessary to view the profit related index.

Further, interest-bearing debt ratio is an index showing the ratio of interest-bearing debts to the total assets of each enterprise at each year end. This index shows the ratio of interest-bearing debts to all on-balance assets described in the balance sheet. By viewing this index together with the equity capital to asset ratio described below, it is possible to measure the procurement of funds regarding on-balance assets.

Further, equity capital to asset ratio is an index showing the ratio of equity capital to the total assets of each enterprise at each year end. This index shows the ratio of equity capital to all on-balance assets described in the balance sheet.

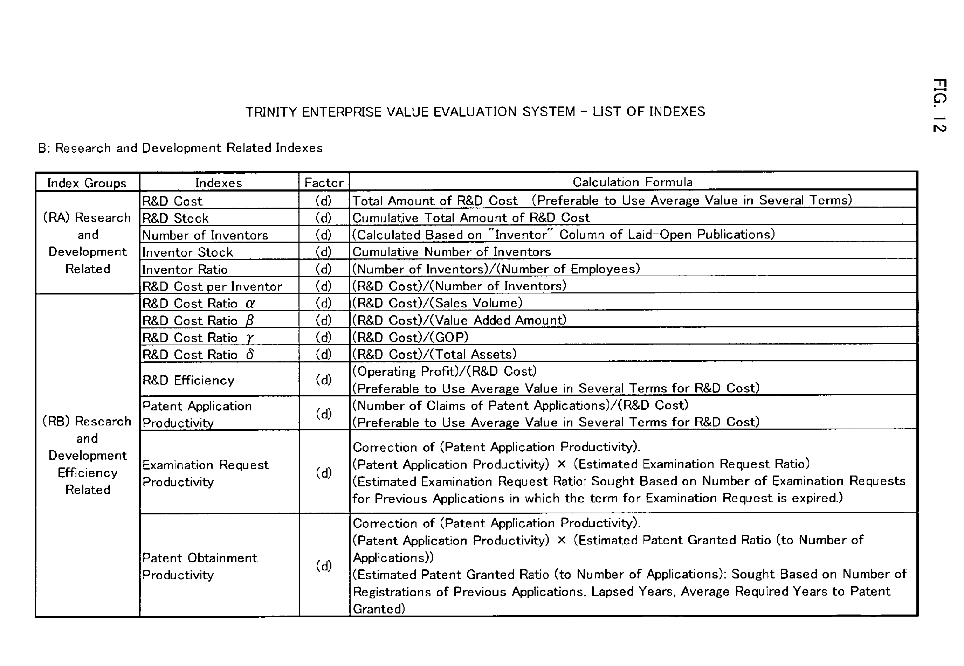

Fig. 12 is a chart illustrating the research and development related indexes to be used in calculating the contribution ratio and the like.
In the present invention, indexes in addition to generally available research and development related indexes such as the total amount of research and development cost, the number of inventors described in unexamined patent application publications and the like, other research and development related indexes are additionally calculated by combining these generally available indexes or other indexes for the calculation of the contribution ratio and the like as the research and development related indexes to be used in the calculation of the contribution ratio.

As shown in Fig. 12, the following indexes may be used as the research and development related indexes.
Here, research and development cost is an index showing the total amount of research and development cost of each enterprise in each year. With the enterprise diagnosis device according to the present invention, it is desirable to use the research and development cost of an average of several terms in order to reduce dispersion since there are cases where judgment is made by comparing industries or enterprises with each other.

Further, the number of inventors is an index showing the numerical value obtained by counting the number of inventors of an enterprise from the column of inventors described in unexamined publications such as of patent applications or utility model applications filed by a specified enterprise in a specified period. Although the number of inventors will not necessarily coincide with the number of employees engaged in the research and development activities, it is one of the most important indexes for grasping the number of people involved in the primary technical development and estimating the scale of developer members. Further, by comparing the numbers of inventors of a plurality of enterprises in a predetermined technical field, it is possible to compare the scale of technical development in such technical field. Moreover, by representing the change in the number of inventors for years with a graph or the like, it is possible to know the trend of the technical development in a specified enterprise.

Further, inventor ratio is an index showing the number of inventors to the number of employees of each enterprise in each business year. With this index, it is possible to know the ratio accounting for the overall personnel resources injected by a specified enterprise for research and development, and the research and development tendency of such specified enterprise can be known thereby.

Further, research and development cost per one inventor is an index showing the amount of the research and development cost per one inventor of each enterprise in each year. With this index, it is possible to measure the amount of the research and development cost per inventor.

Further, as shown in Fig. 12, following indexes may be used as the research and development efficiency related indexes.

Research and development cost ratio $\alpha$ is an index showing the ratio of the total amount of research and development to sales volume of each enterprise in each year. Incidentally, this index is also referred to as a research and development cost ratio to sales volume (R&D ratio).

Although the value of this index is the ratio of the research and development cost to sales volume, the scale of this ratio does not necessarily show the enterprise's research and development cost tendency, since the structure of initial cost in the sales volume will differ significantly depending on the industry or enterprise. Therefore, it is necessary to also view the following research and development cost ratio $\beta$, research and development cost ratio $\gamma$, and research and development cost ratio $\delta$.

The research and development cost ratio $\beta$ is an index showing the ratio of the total amount of research and development to value added amount of each enterprise in each year. The research and development cost ratio $\beta$ is an index showing the degree of ratio allocated to the research and development activities out of the total amount of value created by each enterprise in the current year. Therefore, this research and development cost ratio $\beta$ can be considered to show a research and development cost ratio that is more essential than the index of the research and development cost ratio $\alpha$ showing the ratio to sales volume.

Further, research and development cost ratio $\gamma$ is an index showing the ratio of the total amount of research and development to gross business profit of each enterprise in each year. This index shows the degree of ratio allocated to the research and development activities out of the business profit obtained from the manufacture and sales activities of each enterprise in the current year. Thus, an enterprise for which the value of the research and development cost ratio $\gamma$ is calculated as a large figure can be considered to have a high research and development investment tendency, and, an enterprise for which such value is calculated as close to 0 can be considered to have a tendency of securing profits from its current business rather than investing in the research and development. Incidentally, from the nature of the index of the research and development cost ratio $\gamma$, there may be cases where this ratio as calculated increases significantly because of significant decrease of the operating profit due to some reason. In this case, since this does not mean that the research and development investment tendency is particularly high, care must be taken in considering the index. Incidentally, when the operating profit is 0 or less, it means that the research and development cost ratio $\gamma$ is of a meaningless value, and, therefore, this profit does not have to be calculated in general.

Further, research and development cost ratio $\delta$ is an index showing the ratio of the total amount of research and development to total asset of each enterprise in each year. Whereas the respective indexes of $\alpha$, $\beta$ and $\gamma$ of the research and development cost are for measuring the research and development cost ratio in relation to each scale of profit (flow), this index $\delta$ is for measuring the scale of research and development cost as viewed from the scope of assets (stock).

Further, research and development efficiency is an index showing the ratio of the operating profit to research and development of each enterprise in each year. This index shows how much profit was gained for the amount invested in research and development. Therefore, if the amount invested in the research and development is low and the operating profit is high, the value of the research and development efficiency represented by this index will increase and show favorable research and development efficiency. Contrarily, if the amount invested in the research and development is large and the operating profit is small, the value of the research and development efficiency represented by this index will decrease and show inferior research and development efficiency.

Further, patent application productivity is an index seeking the number of claims filed per research and development cost (1 billion yen in units) obtained by dividing [the number of claims filed] by [the research and development cost of the previous year]. It can be considered that the larger the value of this index, the higher the productivity of the number of claims filed (inventions) in research and development is. Incidentally, in order to measure more accurate productivity per research and development cost, regarding the number of claims pertaining to joint applications, the value obtained by dividing this with the number of joint applicants was used as the number of claims filed by the enterprise. Incidentally, since the research and development cost required for research and development and the number of claims will differ significantly depending on the technical field, there is a possibility that a gross misunderstanding may occur if the number of claims filed (inventions) per research and development cost is used for purposes other than the comparative analysis of competitors or analysis on the differences among industries.

Further, examination request productivity is an index showing the index in which the patent application productivity was compensated by the estimated examination request ratio. A patent is examined only when an examination request is filed. Thus, applications for which the intention or purpose of acquiring the patent is lost after the filing thereof will be withdrawn unless an examination request is filed. Therefore, since it is considered that, strictly speaking, the patent productivity based on the number of applications filed and the number of claims filed does not reflect the research and development efficiency, the productivity as the index compensated based on an estimated examination request ratio is calculated.

Further, patent obtainment productivity is an index showing the index in which the patent application productivity was compensated by the estimated patent granted ratio (to the number of applications). This index shows the patent productivity compensated based on the ratio of patents (estimated patent granted ratio) estimated as ultimately granted. For this estimate, the actually achieved value regarding how many past applications of each enterprise have been registered as patents was used. This index can be considered to show the productivity of generating patents based on research and development in the strictest sense. Even among enterprises that file roughly the same number of patent applications each year, the patent obtainment productivity may differ significantly.

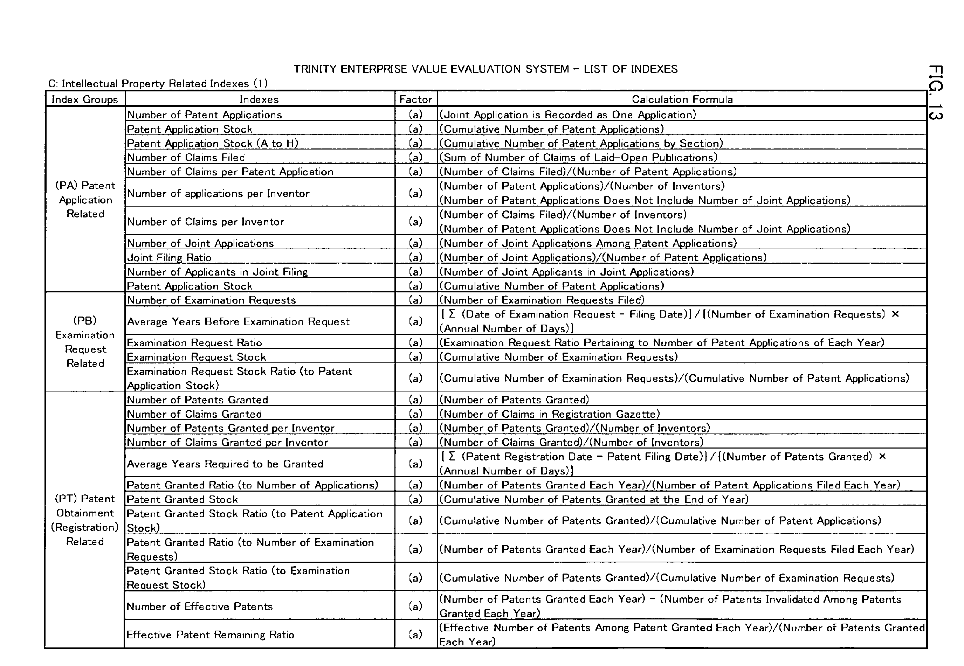

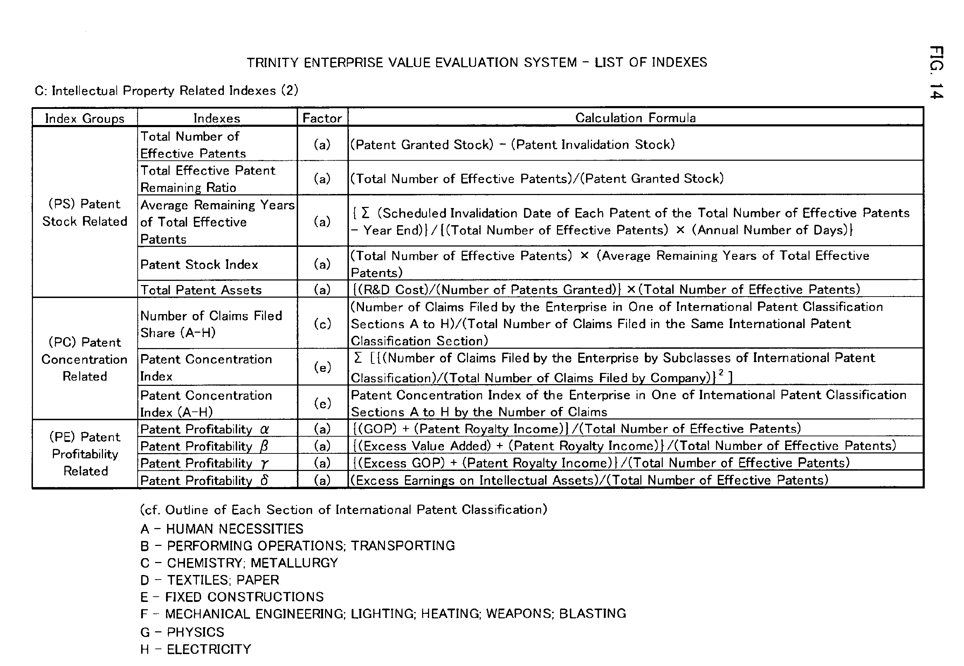

Fig. 13 and Fig. 14 are charts illustrating the intellectual property related indexes to be used in calculating the contribution ratio and the like. In addition to generally available intellectual property related indexes such as the number of filed patent applications, the number of filed examination requests, or the total number of effective patents, the number of claims filed, the number of joint applications, the number of joint applicants, the patent application stock, the number of filed examination requests, the number of patents granted and so forth, other intellectual property related indexes are additionally calculated by combining these generally available indexes or other indexes as the intellectual property related indexes to be used in the calculation of the contribution ratio and the like.

As shown in Fig. 13, the following indexes may be used as the patent application related indexes.
The number of patent applications is an index obtained by counting the number of patent applications in each year based on the unexamined patent application publications issued by the patent office. Incidentally, this index does not reflect the number of applications withdrawn before publication. Further, a joint application is counted as one application.

Further, the number of claims filed is an index obtained by counting the number of claims described in the unexamined patent application publications regarding patent applications of each year. A claim is description of all matters that the applicant considers necessary in defining an invention for which a patent is sought, when a plurality of inventions are filed in a single application, the respective inventions must be separated and described in respective claims. Thus, the number of claims is deemed to be the number of inventions included in the application. Therefore, the number of claims filed in an application means the number of inventions described in the unexamined patent application publication.

Further, the number of claims filed per one application is an index showing the average number of claims per one unexamined patent application publication, with the average being calculated for the patent applications of each year. This index represents the number of inventions contained in a single application. When this value shows an increasing trend, it is deemed that the enterprise has organized an application management system for filing a single application incorporating related inventions collectively therein. Contrarily, when this value shows a decreasing trend, there is a possibility that the number of applications is being padded out arbitrarily. Moreover, in recent years, there is a tendency of gathering related inventions and a single application incorporating these inventions for the purpose of reducing filing costs and in compliance with instructions from the patent office, but this tendency differs significantly depending on the industry or enterprise. For instance, patents pertaining to compounds in the pharmaceutical or chemical field are often filed with a single claim (invention), and it is necessary to keep in mind that the number of claims is not necessarily in proportion to the sufficiency of the content in the patent.

Further, the number of applications filed per one inventor is an index showing the number of applications filed per one inventor obtained by dividing the number of patent applications of each year by the number of inventors described in the unexamined patent application publications. This index represents the productivity of the patent application per one inventor.

Further, the number of claims filed per inventor is an index showing the number of claims filed per inventor obtained by dividing the number of claims filed in each year by the number of inventors described in the unexamined patent application publications. This index represents the productivity of the number of claims filed (the number of inventions) per one inventor.

Further, the number of joint applications is an index obtained by counting the number of unexamined patent application publications of joint applications filed jointly with other companies. A patent is not only filed by a single applicant, and there are cases where the result of joint research and development is filed for patent jointly. Here, the patent rights will be shared by the respective applicants, and, although the respective applicants possess a working right, the approval of all applicants is required for the assignment or licensing of rights to a third party. Thus, in each index for measuring the patent productivity per research and development cost, it is presumed that each applicant bears the research and development cost and a value obtained by dividing the number of applications by the number of joint applicants is considered to be the number of applications filed by each enterprise.

Further, joint application ratio is an index showing the ratio of the number of unexamined patent application publications of the joint applications filed with other companies, to the total number of published patents. This index shows the independency (cooperativeness) of each enterprise in the research and development. It can be considered that the greater this value is, the more cooperation with other companies in the research and development is conducted. Incidentally, upon counting the number of the joint applications, no consideration is given to the capital relationship between each enterprise and the joint applicants.

Further, the number of joint applicants in joint applications is an index obtained by counting the number of joint applicants described in unexamined patent application publications of joint applications filed with other companies. With this index, it is possible to know the partner with which each company is conducting joint research and development.

Further, the patent application stock is an index showing, for instance, the cumulative number of patent applications from 1994 onward to the end of each business year.

As shown in Fig. 13, the following indexes may be used as the examination request related indexes. The number of examination requests is an index obtained by counting the number of examination requests in each year based on the examination progress information issued by the patent office. It is not possible to accurately grasp the patent trend of each enterprise merely from the trend of the number of patent applications filed. Since a patent application is not examined unless an examination request is filed, the trend of examination requests can be considered to show the patent obtaining motivation of each enterprise.

Further, average years before examination request is an index showing the average number of years from the filing of patent applications to the examination request of each year. Since the legal period for examination request is 7 years for applications filed up to September 2001, examination requests are filed after the lapse of a substantial period for the applications filed for the purpose of preventing other enterprises from acquiring patents; that is, for defense purposes. Contrarily, with respect to strategic applications for which patents should be obtained earlier, examination requests are often filed relatively early, and the average number of years from the filing to the examination request can be considered to reflect the purpose (nature) of filing patent applications of each enterprise. Incidentally, due to shortening of the legal period for the examination request, it is anticipated that the respective enterprises will continue to shorten this average number of years in the future.

Further, examination request ratio is an index showing the ratio of the number of examination requests filed by the deadline for data collection for the patent applications filed each year, to the number of the patent applications filed each year. Since this index is the examination request ratio as of the deadline for the collection of data of the application in each year, the examination request ratio in each year will fluctuate (increase) with time. Nevertheless, just after the lapse of the legal period for examination request, the examination request ratio for the applications filed in the year from which the legal period has lapsed, will show a maximum value, and will not increase thereafter.

Further, the examination request stock is an index showing the cumulative number of examination requests as of the end of each year to the cumulative number of patent applications filed, for instance, from 1992 onward. This index shows how many examination requests were cumulatively filed by the end of each year for patent applications filed, for instance, from 1992 onward.

Further, the examination request stock ratio (to patent application stock) is an index obtained by dividing the cumulative number of examination requests as of the end of each year for the cumulative patent applications filed, for instance, from 1992 onward, by the cumulative number of patent applications filed from 1992 onward. This index shows the ratio of how many examination requests were cumulatively filed by the end of each year for patent application stock, for instance, filed from 1992 onward.

As shown in Fig. 13, the following indexes may be used as the patent obtainment (registration) related indexes. The number of patents granted is an index obtained by counting the number of patents registered in each year based on the number of the publications of registered patents issued by the patent office. A registered patent publication of a joint application is also counted as one registered patent publication. A registered patent publication is issued for all patents that have been registered. Therefore, this index shows the number of patent registrations of each enterprise in each year.

Further, the number of claims granted is an index obtained by counting the number of claims described in the registered patent publications of the patents registered in each year. The number of claims represents the number of inventions included in the patent. Therefore, the number of claims granted signifies the number of inventions described in the patent publication.

Further, the number of patents granted per one inventor is an index showing the number of patents granted per inventor obtained by dividing the number of patents registered in each year by the number of the inventors described in the patent publications. This index represents the productivity of registered patents per one inventor.

Further, the number of claims granted per one inventor is an index showing the number of claims of grated patents per one inventor obtained by dividing the number of claims of patents registered in each year by the number of inventors described in the patent publication. This index represents the productivity of the number of claims (the number of inventions) of registered patents per one inventor.

Further, the average years required to be granted is an index showing the average years required from the filing of applications to the registration of patents for the application in each year. An examination request is often filed after a lapse of a substantial period for the applications filed for the purpose of preventing other enterprises from obtaining patents; that is, for defense purposes. Contrarily, for strategic applications for which patents should be obtained earlier, an examination request is often filed relatively earlier, and the average years from the filing to the registration can be considered to reflect the purpose (nature) of each enterprise for filing patent applications.

Further, patent granted ratio (to the number of applications) is an index showing the ratio of the number of patents registered by the deadline for data collection, to the number of the patent applications filed in each year. Since this index is the patent granted ratio as of the deadline for collection of data of the applications in each year, the patent granted ratio (to the number of applications) in each year will fluctuate (increase) with time. Nevertheless, it is presumed that after the lapse of the period required for examination in addition to the examination request period, the patent granted ratio (to the number of applications) for the applications filed in the year relevant to the periods will take a maximum value, and will not increase thereafter.

Further, the patent granted stock is an index showing the cumulative number of registered patents as of each year end to the number of cumulative patent applications filed, for instance, from 1994 onward. This index shows how many of the patent applications filed from 1994 up to the end of each year have been registered for patents in cumulate as of each year end. The year of 1994 is the year from which patent application publications and registered patent publications are available in the form of CD-ROM provided by the Patent Office.

Further, patent granted stock ratio (to patent application stock) is an index, showing the cumulative number of patents granted as of the end of each year, to the cumulative patent applications filed, for instance, from 1994 onward, that is divided by the cumulative number of patent applications filed from 1994 onward. This index shows how many patents were cumulatively registered by the end of each year for patent applications filed, for instance, from 1994 onward.

Further, patent granted ratio (to the number of examination requests) is an index showing the ratio of the number of patents that were granted by the deadline for data collection, to the number of the examination requests filed in each year. Since this index is the patent granted ratio as of the deadline for data collection to the examination requests in each year, the patent granted ratio (to the number of examination requests) in each year will fluctuate (increase) with time. Nevertheless, after the lapse of the period required for examination, the patent grant ratio (to the number of examination requests) concerning the applications filed in the relevant year will take a maximum value, and will not increase thereafter.

Further, the patent granted stock ratio (to examination request stock) is an index showing the cumulative granted patent ratio as of the end of each year to the cumulative examination requests filed, for instance, from 1997 onward. This index shows the ratio of the cumulative number of patents that have been granted by the end of each year, to the examination requests filed from 1997 onward, wherein statistically correct data are available. Therefore, the patent granted stock ratio (to examination request stock) as of the end of each year will fluctuate (increase) with time.

Further, the number of effective patents is an index showing the number of effective patents of each enterprise except patents that have lapsed by the latest end of accounting period, of the patents granted in each year. This index shows the number of patents granted in each year which are still remaining as of the latest end of accounting period (except the patents which have lapsed on the day of the end of the accounting period). Therefore, the number of effective patents of the patents registered in each year will fluctuate (decrease) time.

Further, effective patent remaining ratio is an index showing the remaining ratio of the number of effective patents of each enterprise excluding patents that have lapsed by the latest end of accounting period, of the patents granted in each year. This index shows the ratio of the number of patents granted in each year which are still remaining as of the latest end of accounting period (except patents that have lapsed on the day of the end of the accounting period). Therefore, the effective patent remaining ratio to the patents registered in each year will fluctuate (decrease) with time.

As shown in Fig. 14, the following indexes may be used as the patent stock related indexes. Total number of effective patents is an index showing the total number of effective patents as of the end of each fiscal year, and which is obtained by deducting the number of lapsed patents from the patent granted stock, for instance, from 1994 onward. This index shows the number of patents which were registered, for instance, from 1994 onward and which are still remaining as of the latest end of accounting period (except the patents which have lapsed on the day of the end of accounting period). Therefore, the number of the patents that are newly registered in each year are added, and the number of the patents that have lapsed are deducted. Thus, when the number of lapsed patents exceeds the number of newly registered patents, the total number of effective patents will decrease.

Further, the total effective patent remaining ratio is an index showing the ratio of the total number of effective patents remaining as of the end of each fiscal year, and which is obtained by deducting the number of lapsed patents from the patent granted stock, for instance, from 1994 onward. This index shows the ratio of the number of patents registered, for instance, from 1994 onward and which are still remaining as of the latest end of accounting period(except the patents that that have lapsed on the day of the end of accounting period).

Further, average remaining years of total effective patents is an index showing the average years of the remaining period per one effective patent existing as of the end of each fiscal year. Except some exceptions, a patent can be effective for a term of 20 years from the filing date thereof. Thus, it is shown that the larger the value of this index, the more the patents that have been filed lately. Contrarily, it is shown that the smaller the value of this index, the more patents were filed long before and their remaining periods are short.

Further, patent stock index is an index showing the total number of years of the remaining period of effective patents existing as of the end of each fiscal year. With this index, even if the number of effective patents is the same, there may be cases where the stock value will differ depending on the length of the respective remaining periods. Thus, the average remaining years have been multiplied to the total number of effective patents to quantify the total value.

Further, total patent assets is an index representing the total asset value of all effective patents owned by an enterprise and which is obtained by multiplying the total number of effective patents to a value obtained by dividing the research and development cost by the number of patents granted. The reasons why the number of patents granted was used as the index for dividing the research and development cost is that the calculation is conducted based on patents that were actually patented and capable of functioning effectively, and it is thereby possible to know the enthusiasm of the specified enterprise in patents based on the input of research and development cost per one registered patent. Since the index of total patent assets is an index obtained by multiplying the total number of effective patents to the research and development cost input per one registered patent, this can be considered to be the total amount of intellectual assets owned by an enterprise. Therefore, an enterprise having a large value for this index of total patent assets is acknowledged to have a high total asset value of patents, and it is thereby possible to determine how much intangible assets such enterprise owns.

As shown in Fig. 14, the following indexes may be used as the patent concentration related indexes.
The number of claims filed share (A to H) is a value obtained by dividing the total number of claims pertaining to patent applications filed by an enterprise in a certain (fiscal) year which were categorized by section of the international classification, by the total number of claims pertaining to all patent applications filed in the same (fiscal) year (in the country to which the enterprise belongs) which were categorized by section of the international classification.

This index represents the share of the number of claims of the enterprise in the number of claims of all applications categorized by section of the international classification.

Further, patent concentration degree is a value obtained by dividing the number of claims pertaining to patent applications of an enterprise classified by subclass in a certain (fiscal) year, by the total number of claims pertaining to the entire patent applications filed by the enterprise, and calculating a square sum of such obtained values. The Herfindahl index was applied to the above, and the value will be large if the patent applications of the enterprise are concentrated on a certain subclass, and the value will be small if they disperse.

Further, patent concentration degree (A to H) is a value representing the patent concentration degree per a section of the patent classification by further classifying the total number of claims pertaining to the number of patent applications filed by an enterprise in a certain (fiscal) year and which were categorized by the sections of the international classification into subclasses, and obtained by dividing the number of claims per a subclass by the total number of claims in each section, and obtaining the sum of the squares of the divided values for respective sections.
Thereby, it is possible to know which section of the enterprise is concentrated or dispersed.
Incidentally, although the number of claims was used here, the number of patent applications may also be used.

As shown in Fig. 14, the following indexes may be used as the patent profitability related indexes.
The patent profitability $\alpha$ is an index showing gross operating revenue per an effective patent and obtained by dividing the total amount of gross business profit and patent royalty income ("gross operating revenue" generated by an enterprise each year) by the total number of effective patents. This index is used for estimating the patent profitability based on the gross business profit per a patent as in the case of measuring the labor productivity (profitability) by calculating the value added amount per an employee obtained by dividing the value added amount by the number of employees.

Further, the patent profitability $\beta$ is an index showing the excess value-added amount per an effective patent obtained by dividing, by the total number of effective patents, the total amount of excess value-added amount, which represents the portions exceeding the industry average of the total amount of value created by the respective enterprises, and patent royalty income. Whereas the index of foregoing patent profitability $\alpha$ is patent profitability calculated on the overall profits (gross operating revenue), patent profitability $\beta$ is patent profitability calculated only on the portion exceeding the industry average of the generated added values (excess value-added amount) and the patent royalty income. Therefore, this can be used to compare the patent profitability in the same business category.

Further, the patent profitability $\gamma$ is an index showing the excess gross operating revenue amount per an effective patent and obtained by dividing, by the total number of effective patents, the sum of excess gross business profits representing the portion exceeding the industry average of the business income obtained by the respective enterprises through manufacture/sale activities and patent royalty income. Whereas the index of foregoing patent profitability $\alpha$ is patent profitability calculated on the overall profits (gross operating revenue), patent profitability $\gamma$ is patent profitability calculated only on the excess gross business profit which is the portion exceeding the industry average of the gross business profit and the patent royalty income. Therefore, patent profitability $\gamma$ can be used to compare the patent profitability in the same business category alike the patent profitability $\beta$.

Further, patent profitability $\delta$ is an index showing the amount of excess earnings on intellectual asset per an effective patent sought by dividing, by the total number of effective patents, the excess earnings on intellectual asset (EXEOIA) and representing the portion exceeding the industry average of the amount of profit estimated to be generated by the respective enterprises based on off-balance intellectual assets (intangible assets not indicated in a balance sheet). The patent profitability $\delta$ is an index obtained by adding the patent royalty income to the portion exceeding the industry average value of the earnings on intellectual asset, and which is the balance after deducting the expected return to be obtained from on-balance assets (assets indicated in the balance sheet) from the gross operating revenue. Such calculation is an effective method for estimating the quality of patents based on a macro approach using accounting information.

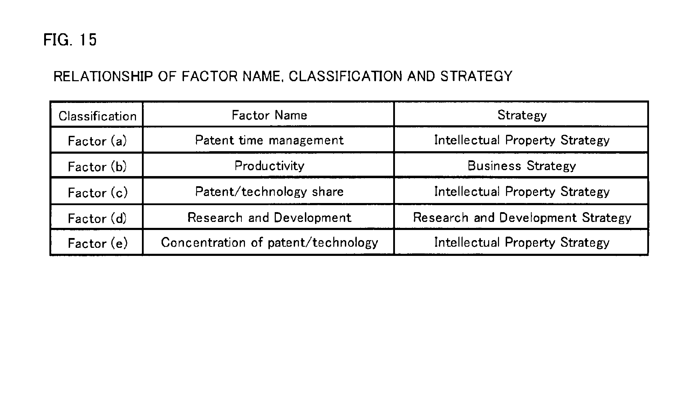

Each of the foregoing indexes can be grouped into the five factor names shown in Fig. 15 based on factor analysis, and further classified into three strategies.

The indexes listed above were selected because they are most likely related for judging the operating revenue or the like of an enterprise. Nevertheless, in the present invention, of the indexes that are classified into business related index, research and development related index, or intellectual property related index, it is desirable to perform factor analysis using a combination of at least two or more index classifications for each industry and each enterprise to further extract operating revenue related indexes and calculate and present the factor loading or contribution ratio and conduct enterprise evaluation.

Incidentally, each of the foregoing indexes (factor analysis variables) can be maintained periodically as it is announced each term or each year. Further, index for how many years to be used in the operation of factor analysis should be decided in advance.

The factor analysis processing is now explained.

Fig. 16 is a flowchart of processing for calculating the correlation matrix for each index of enterprise to reduce the number of indexes, grouping related indexes to factor B, calculating factor loading B and factor score B and eigenvalue B and contribution ratio B by performing factor analysis, and performing indexation of the factor score B to be displayed for making a comparison per industry.

Factor analysis is a method of searching for the substantial factor hiding behind and controlling the observed data when there are numerous observed data. In the present invention, by utilizing the characteristics of this factor analysis, it is possible to eliminate indexes that are hardly related and have no commonality, and extract indexes that are deeply related and have strong connection.

As the methods for extracting factors, a principal factor method, a maximum likelihood method, a generalized least squares method, a least squares method and so forth are known, and the principal factor method is used in this embodiment. Further, the varimax rotation method was used for the rotation, and the regression estimate method is used to calculate the factor score. Moreover, as another rotation method, in the orthogonal rotation method, known are the quartimax method, the biquartimax method and so on, and, in the oblique rotation method, known are the quartimin method, covarimin method, biquartimin method and so on.

The principal factor method makes the diagonal elements of the correlation matrix to be estimated values of commonality. Ordinarily, in order to perform the estimation of this commonality, initial values of commonality are set, factors are extracted by replacing the diagonal elements of the correlation matrix with the estimated values, and iterative calculation is performed until the estimated values become the square sum of the factor loading. This is referred to as the iterative estimate of commonality. As the initial values, numerical value "1" or the maximum value of the respective rows of the correlation matrix, or the square of the multiple correlation coefficient of the variable are used.

Varimax rotation subjects the factor axes to orthogonal rotation. Conversion is performed so that the factor axes are perpendicular to each other and the factors become uncorrelated, and the dispersion of the square sum of the factor loadings for each factor is maximized through the rotation. Further, this method contemplates simplification for each row of the factor loading matrix.

When the processing to be performed by the information processing means 380 proceeds to S212 of Fig. 3, the processing branches to S500 "factor analysis processing" shown in Fig. 16, and thereafter proceeds to the subsequent processing at S502 "set initial value".

At S502, the information processing means 380 sets the respective threshold values by reading out from the recording means 384 information such as various threshold values used as the criterions for extracting an index that is deeply related and having a strong connection.

The threshold values to be set here are, for instance, a threshold value S of the index quantity for initially extracting indexes (in the illustrated example, S = 45 is set), a threshold value C of the degree of commonality A for extracting indexes based on the size of the degree of commonality A of the initial value or the estimated value of the factor analysis variable (in the illustrated example, C = 0.3 is set), a threshold value D of the value d of the cumulative contribution ratio B to be used for extracting the factor B in the order from the one having the largest contribution ratio B (in the illustrated example, D = 70% is set), and a threshold value K of the eigenvalue B to be used for extracting the factor B in the order from the one having the largest eigenvalue k (in the illustrated example, K = 1.0 is set). These threshold values may be loaded as constants in a program in advance in accordance with their usage, or the program may be arranged so that the individual user can set such threshold values.

At subsequent step S504 "acquire enterprise name", the information processing means 380 acquires from the industry-enterprise database the enterprise name, or the enterprise name in accordance with the industry name input by the user at S105 shown in Fig. 3.

At subsequent step S506 "acquire s number of indexes (default = all)", the information processing means 380 acquires from the index database the various indexes of the enterprise name acquired at S504. The enterprise indexes to be acquired here, for instance, are the various indexes shown in Fig. 11 to Fig. 14.

In the present invention, after the correlation matrix A is calculated first at S508 to S514, the indexes are reduced in number based on the degree of commonality A of such indexes.

At subsequent step S508 "create correlation matrix among indexes (calculation of correlation coefficient r)", the information processing means 380 prepares indexes for each enterprise name acquired at S504, and calculates a correlation coefficient r for each index. Here, since the correlation coefficient r is calculated for all of the s number of indexes acquired at S506, an s x s correlation matrix is calculated.

At subsequent S510 "calculate degree of commonality c of index", the information processing means 380 performs processing for extracting the value c of the degree of commonality A of the index. When using the initial value as the degree of commonality A of the index, the maximum value of each row of the correlation matrix calculated at S508 may be extracted and used, or a value obtained by calculating the square of the multiple correlation coefficient of the index may be used, or 1 may simply be used. Further, an estimated value may be used as the degree of commonality A of the index.

At subsequent S512 "reduce the number of indexes (leave only family of $c \geq C$)", the information processing means 380 performs processing of determining whether the value c of the degree of commonality A extracted at S510 is greater than the threshold value C of the degree of commonality A, and extracting the indexes having a value c that is greater than the threshold value C of the degree of commonality A.

In the determination at S514 "$s \leq S$", the information processing means 380 determines whether the quantity s of the indexes reduced in number at S512 is less than the threshold value S of the index quantity.

When it is determined that the number s of the indexes reduced at S512 is more than the threshold value S of the number of the indexes, the processing to be executed by the information processing means 380 returns to S508, creates a correlation matrix once again using the reduced number of indexes, and further reduces the number of the index.

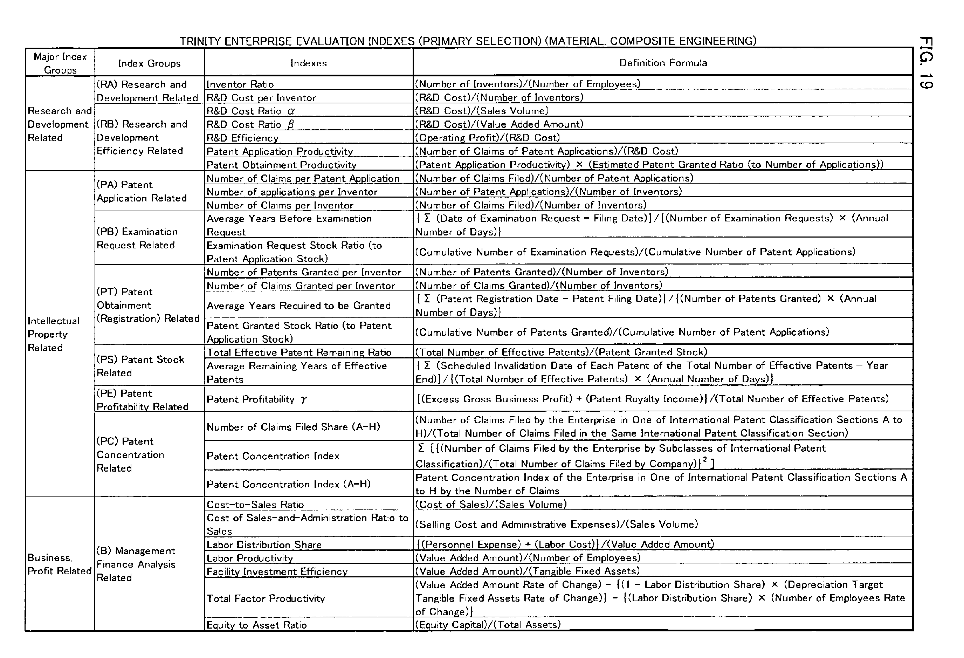

Further, when it is determined that the number s of the indexes reduced at S512 is not more than the threshold value S of the number of the indexes, the processing to be executed by the information processing means 380 proceeds to S516 "calculate factor loading of each factor (correlation of factor and index)". An example of the indexes remaining after being reduction of the number is shown in Fig. 19.

Fig. 19 is a diagram showing the indexes subject to primary selection performed by calculating the correlation matrix A with the indexes shown in Fig. 11 to Fig. 14, and using the degree of commonality A of indexes extracted based on this calculation.

As shown in Fig. 19, the indexes subject to primary selection have been reduced in number down to 7 types of research and development related indexes, 29 types of intellectual property related indexes, 7 types of business-management related indexes; a total of 43 types of indexes. Incidentally, the number of claims filed shares A to H and the patent concentration degrees A to H are respectively calculated as 8 indexes.

At S516, the information processing means 380 calculates the factor loading B which shows the correlation of the factor B and its index, in the case of setting one factor for one index.

At subsequent step S518 "calculate cumulative contribution ratio d (ratio of eigenvalue in each factor)", the information processing means 380 calculates for each factor B the contribution ratio B which shows the ratio of eigenvalue in each factor, and by adding the contribution ratio B in the order from those having the largest value, calculates the value d of the cumulative contribution ratio B which shows the sum of the contribution ratios B up to the respective factors B.

In the determination at S520 "$d \geq D$", the information processing means 380 determines whether the value d of the cumulative contribution ratio B calculated at S518 is not less than the threshold value D.

When it is determined that the value d of the cumulative contribution ratio B calculated at S518 is not less than the threshold value D, this means that the required indexes have been extracted, and the processing to be performed by the information processing means 380 branches to S526 "extract n number of factors (default = 5 factors)".

Further, when it is determined that the value d of the cumulative contribution ratio B calculated at S518 is less than the threshold value D, this means that all the required indexes have not been extracted, and the processing to be executed by the information processing means 380 proceeds to S522 "calculate eigenvalue k of each factor (square sum of factor loading)" and the information processing means 380 performs processing for calculating the value k of the eigenvalue B by calculating the square sum of the factor loadings B for each factor B.

In the determination at subsequent S524 "$k \geq K$", the information processing means 380 determines whether the value k of the eigenvalue B calculated at S522 is not less than the threshold value K.

When it is determined that the value k of the eigenvalue B is not less than the threshold value K, this means that the required indexes have been extracted, and the processing to be executed by the information processing means 380 proceeds to S526.

Further, when it is determined that the value k of the eigenvalue B is less than the threshold value K, this means that all the required indexes have not been extracted, and the processing to be executed by the information processing means 380 returns to S516, and the information processing means 380 performs further extraction processing.

At S526, the information processing means 380 performs processing for extracting the factor C from a plurality of factors B. As one method of extracting the factor C, a default value such as extracting five factors C in advance may be used, or the number m of the factor C can be calculated and determined according to the following calculation formula (Formula 4).

$$(Formula\ 4)$$

$$The\ number\ m\ of\ factor\ C = [(p-2)/(\log_2 p)]$$

Provided,

m = the number of factor C

p = the number of indexes

[] is a Gauss symbol, and represents a maximum integral number that does not exceed the value shown within []

When calculating the number m of the factors based on the foregoing formula, the number will be as follows. The number p of indexes The number m of factors C

| | |
|---|---|
| 8 to 13 | 2 |
| 14 to 18 | 3 |
| 19 to 25 | 4 |
| 26 to 31 | 5 |
| 32 to 38 | 6 |
| 39 to 46 | 7 |
| 47 to 53 | 8 |
| 54 to 61 | 9 |

Although the number m of the factor C may take any values from the standpoint of calculation, it would be adequate to set the number m of the factor C between 5 and 9 when the contribution ratio and the like is calculated that will affect the comprehensive evaluation index (operating revenue related index and the like) using the business related index, research and development related index, or intellectual property related index as in the present invention.

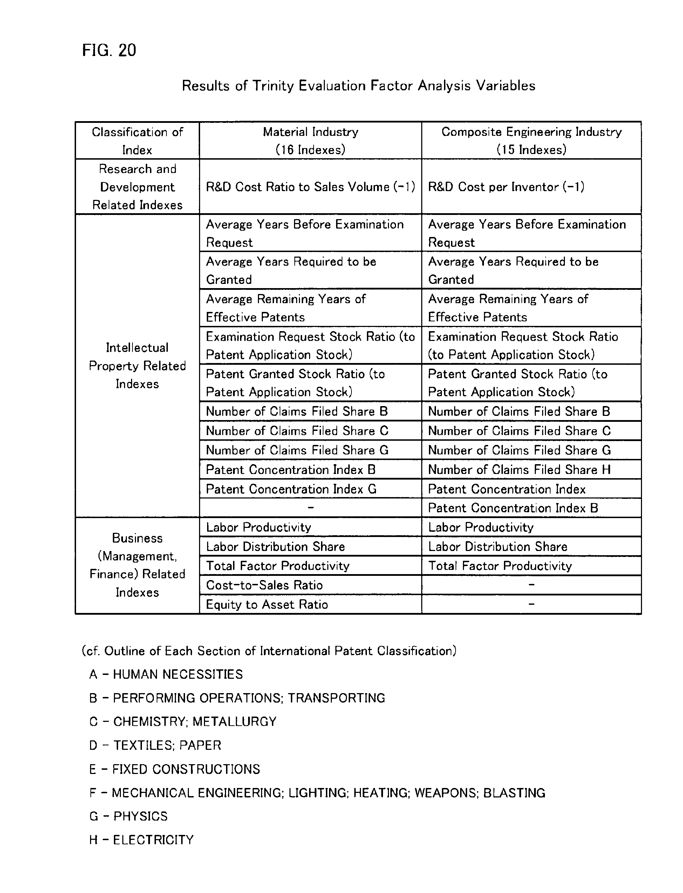

Like this, as a result of performing factor analysis B regarding the 43 indexes shown in Fig. 19, the indexes shown in Fig. 20 remained. In the example shown in Fig. 20, the indexes were reduced in number down to 16 indexes for the material industry and 15 indexes for the composite engineering industry.

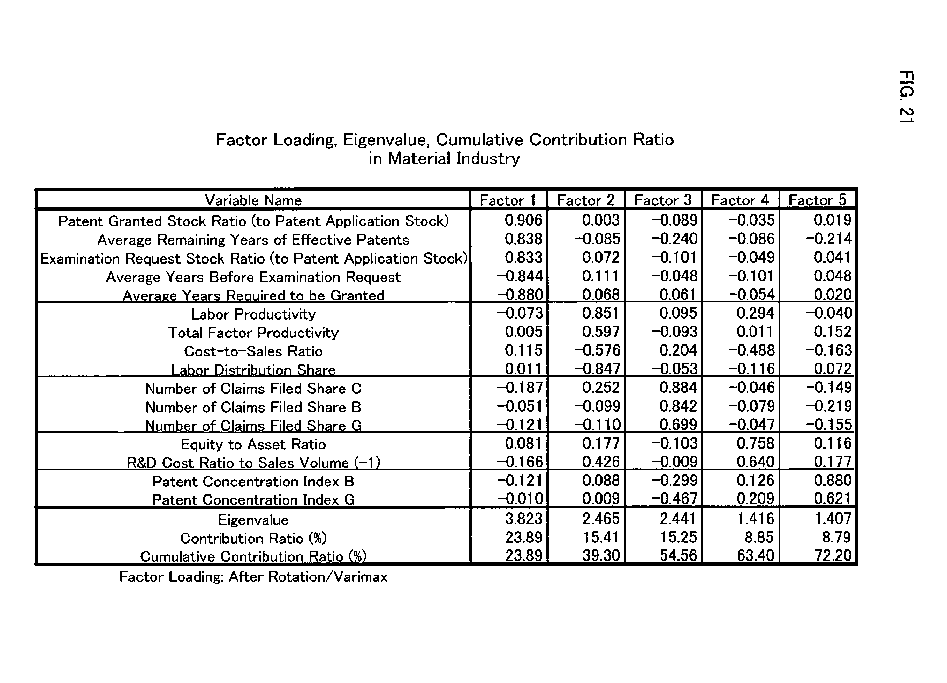

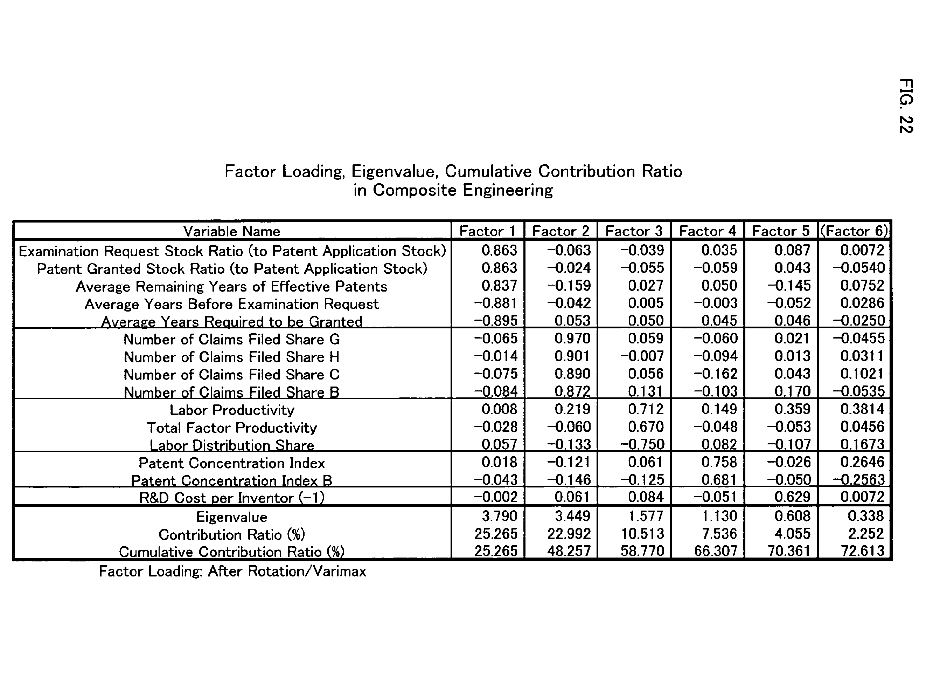

Fig. 21 and Fig. 22 show relationship among the factor C, the factor loading C, the eigenvalue C, the contribution ratio C and the cumulative contribution ratio C after the five factors C were extracted at S526. Fig. 21 and Fig. 22 describe the values of the "factor loading C", and the "enterprise index" is indicated as the "variable name", the "factor C" is indicated as the "factor 1" to "factor 5", the "eigenvalue C" is indicated as the "eigenvalue", the "contribution ratio C" is indicated as the "contribution ratio", and the "cumulative contribution ratio C" is indicated as the "cumulative contribution ratio". Description with reference to Fig. 21 and Fig. 22 will be made in detail later.

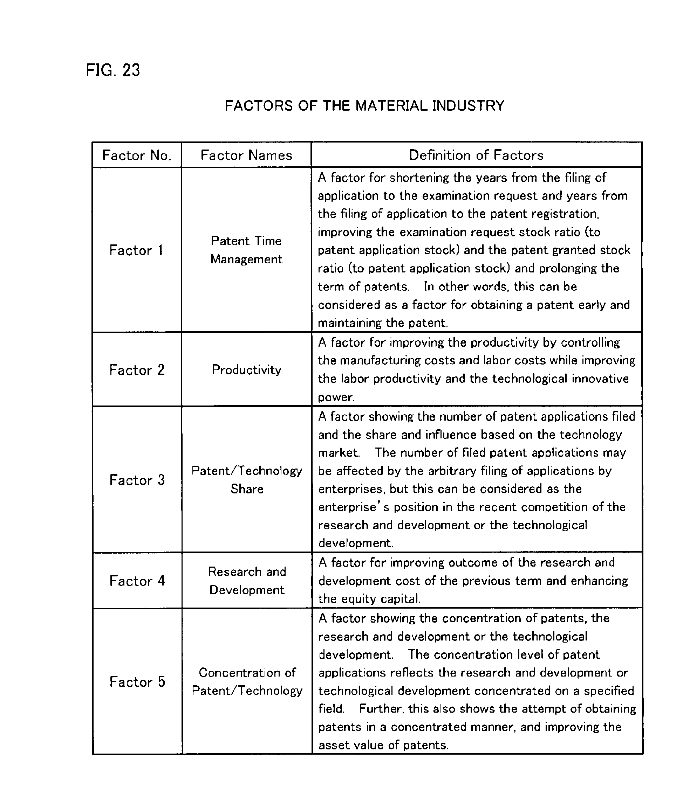

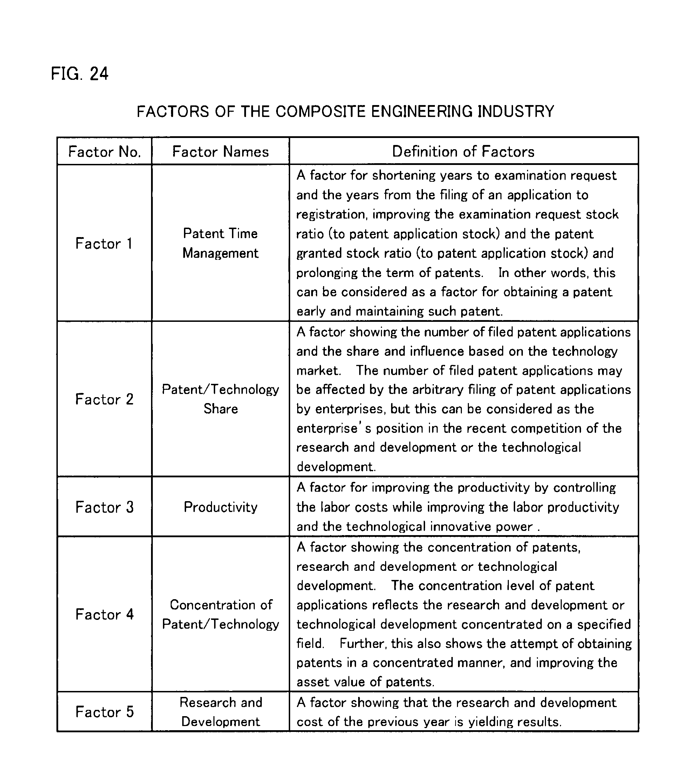

At subsequent step S528 "confirm factor contents", the information processing means 380 notifies the user by displaying on the display means 372 a list of factor names and the definition of the factors C thereof shown in Fig. 23 and Fig. 24. When the semantic content of the factors C has been confirmed, the processing to be executed by the information processing means 380 proceeds to the processing at a subsequent step S530 "enterprise ranking display for each factor", or proceeds to S532 "end" without displaying the enterprise ranking, and ends the factor analysis processing.

When proceeding for the enterprise ranking display of each factor, at S530, the information processing means 380 calculates the factor score C of each factor C and each enterprise and displays those as the enterprise ranking on the display means 372. The display examples of this enterprise ranking are shown in Fig. 16 to Fig. 19. In the illustrated examples, in order to facilitate viewing of the enterprise ranking, the factor score C is standardized (coverts this into a deviation value), and the index of the top enterprise (enterprise having the maximum value of factor score C) is scored as 100.

When the display of the enterprise ranking is ended at S530, the processing to be executed by the information processing means 380 proceeds to S532 "end", ends the factor analysis processing, and returns to the original processing routine.

Explanation will now be made with reference to Fig. 21 to Fig. 32.

Fig. 21 is a chart showing results of the calculation of the factor loading C, the eigenvalue C, the contribution ratio C and the cumulative contribution ratio C for the material industry (chart showing the factor loading, eigenvalue, and cumulative contribution ratio of the material industry).

In the example shown in Fig. 21, the indexes (variable names) of the patent granted stock ratio (to patent application stock), the average remaining years of effective patents, the examination request stock ratio (to patent application stock), the average years before examination request, and the average years required to be granted are defined and grouped as the first factor of material industry (factor of patent time management: factor 1).

Further, the indexes (variable names) of labor productivity, total factor productivity, cost to sales ratio, and labor distribution ratio are defined and grouped as the second factor of the material industry (factor of productivity: factor 2).

Further, the indexes (variable names) of the number of claims filed share C, the number of claims filed share B, and the number of claims filed share G are defined and grouped as the third factor of the material industry (factor of patent/technology share: factor 3).

Further, the indexes (variable names) of equity to asset ratio and sales volume research and development cost ratio (-1) are defined and grouped as the material fourth factor (factor of research and development: factor 4).

Further, the indexes (variable names) of patent concentration degree B and patent concentration degree G are defined and grouped as the fifth factor of the material industry (factor of concentration of patent/ technology: factor 5).

Fig. 22 is a chart showing the results of the calculation of the factor loading C, the eigenvalue C, the contribution ratio C and the cumulative contribution ratio C for the composite engineering industry (charts showing the factor loading, eigenvalue, and cumulative contribution ratio of composite engineering).

In the example shown in Fig. 22, the indexes (variable names) of the patent granted stock ratio (to patent application stock), the average remaining years of effective patents, the examination request stock ratio (to patent application stock), the average years before examination request, and average years required to be granted are defined and grouped as the first factor of the composite engineering industry (factor of patent time management: factor 1), and the indexes (variable names) of the number of claims filed share B, the number of claims filed share C, the number of claims filed share G, and the number of claims filed share H are defined and grouped as the second factor of the composite engineering industry (factor of patent/technology share: factor 2).

Further, the indexes (variable names) of labor productivity, total factor productivity, and labor distribution ratio are defined and grouped as the third factor of the composite engineering industry (factor of productivity: factor 3), the indexes (variable names) of the patent concentration degree and the index of the patent concentration degree B are defined and grouped as the fourth factor of the composite engineering industry (factor of concentration of patent/technology: factor 4), and the indexes (variable names) of research and development cost per inventor (-1) are defined and grouped as the fifth factor of the composite engineering industry (factor of research and development: factor 5).

In the illustrated examples, the eigenvalue C and the contribution ratio C are calculated for each factor C of the composite engineering industry, and the factor loadings C are arranged and represented for each factor of the composite engineering industry in the order from the one taking large eigenvalue C. Although the illustrated examples shows cases of adopting up to the fifth factor, the number of factors C to be adopted for the composite engineering industry is not limited to fifth.

The results of comparison between the material industry and the composite engineering industry through comparison of the factor analysis results shown in Fig. 21 and Fig. 22 are now explained.

As shown in Fig. 22, the first factor to the fifth factor are adopted for the factor C of the composite engineering enterprise. The eigenvalue C of the fifth factor is calculated as 0.608, and, although the value of the eigenvalue C does not exceed 1, the cumulative contribution ratio C including the fifth factor exceeds 70%. In addition, since the value of the factor loading C of the "research and development cost per inventor (-1)" is high at 0.629 even when it is compared with the factor loading C of the respective variables (indexes) of the sixth factor, this is adopted as the fifth factor. Incidentally, (-1) of the "research and development cost per inventor (-1)" shows that the value of the previous year of the previous term (minus 1 year or minus 1 term) is used.

Meanwhile, the first factor to fifth factor are adopted for the factor C of the material industry as shown in Fig. 21. The value of the eigenvalue C in the respective factors C exceeds 1, and the factor C for which the value of the cumulative contribution ratio C changes until it becomes greater than 70% is adopted.

Further, when Fig. 21 and Fig. 22 are compared with each other, the main difference between the factor C for the material industry and the factor C for the composite engineering industry is in the factor C representing the "research and development" and the factor C representing the "productivity". Regarding the factor C representing the "research and development", this is composed of the "equity to asset ratio" and the "sales volume research and development cost ratio (-1)" in the material industry shown in Fig. 21. Meanwhile, this is derived only from the "research and development cost per inventor (-1)" in the composite engineering industry shown in Fig. 22.

The reason the "equity to asset ratio" is included in the fourth factor in the case of the material industry is that a long-term research and development period is required for achieving results in research and development in the material industry (particularly with pharmaceuticals). Another reason is that financial power for supporting such long-term research and development cost is required in the material industry.

Since research and development is a highly uncertain activity, it is often difficult to procure funds from financial institutions. Thus, it is often the case that only material industry enterprises with financial strength can maintain and continue research and development activities, and such activities are likely to achieve favorable research and development results.

When the comparison is made focusing on the factor C representing the "productivity", the index of "cost to sales ratio" is not included as a constituent element in the case of the composite engineering industry shown in Fig. 22 although the "cost to sales ratio" exists as one constituent element in the case of the material industry shown in Fig. 21. This shows that in the composite engineering industry, the labor costs are likely to affect the productivity, and not the purchase of raw materials.

Fig. 23 is a chart showing the definition of the factor C of the material industry (chart showing the factor list of the material industry).

As shown in Fig. 23, since the first factor of the material industry (factor 1) is composed of the indexes of patent granted stock ratio (to patent application stock), the average remaining years of effective patents, the examination request stock ratio (to patent application stock), the average years before examination request, and average years required to be granted, these indexes are summarized, defined and grouped as a factor of the "patent time management". Further, the concept of summarizing the indexes included in the factors of the "patent time management" can be considered as "a factor for shortening the years from the filing of application to the examination request and years from the filing of application to the patent registration, improving the examination request stock ratio (to patent application stock) and the patent granted stock ratio (to patent application stock) and prolonging the term of patents. In other words, this can be considered as a factor for obtaining a patent early and maintaining the patent".

Further, since the second factor of the material industry (factor 2) is composed of the indexes of labor productivity, the total factor productivity, the cost to sales ratio, and the labor distribution ratio, these indexes are summarized, defined and grouped as factors of the "productivity". Further, the concept of summarizing the indexes contained in the factor of the "productivity" can be considered as "a factor for improving the productivity by controlling the manufacturing costs and labor costs while improving the labor productivity and the technological innovative power".

Further, since the third factor of the material industry (factor 3) is composed of the indexes of the number of claims filed share C, the number of claims filed share B, and the number of claims filed share G, these indexes are summarized, defined and grouped as a factor of the "patent/technology share". Further, the concept of summarizing the indexes contained in the factor of the "patent/technology share" can be considered as "a factor showing the number of patent applications filed and the share and influence based on the technology market. The number of filed patent applications may be affected by the arbitrary filing of applications by enterprises, but this can be considered as the enterprise's position in the recent competition of the research and development or the technological development".

Further, since the fourth factor of the material industry (factor 4) is composed of the indexes of equity to asset ratio and the sales volume research and development cost ratio (-1), these index are summarized, defined and grouped as a factor of the "research and development". Further, the concept of summarizing the indexes contained in the factor of the "research and development" can be considered as "a factor for improving outcome of the research and development cost of the previous term and enhancing the equity capital".

Further, since the fifth factor of the material industry (factor 5) is composed of the indexes of patent concentration degree B and the patent concentration degree G, these indexes are summarized, defined and grouped as a factor of the "concentration of patent/technology". Further, the concept of summarizing the indexes contained in the factor of the "concentration of patent/technology" can be considered as "a factor showing the concentration of patents, the research and development or the technological development. The concentration level of patent applications reflects the research and development or technological development concentrated on a specified field. Further, this also shows the attempt of obtaining patents in a concentrated manner, and improving the asset value of patents".

Regarding the definition based on the indexes contained in the factor C, user may aggregate the factors hidden behind the factor C, viewing the indexes of the extracted operation results and name the definitions.

Fig. 24 is a chart showing the definition of the factor C of composite engineering (chart showing the factor list of the composite engineering industry).

As shown in Fig. 24, since the first factor of the composite engineering industry (factor 1) is composed of the indexes of the examination request stock ratio (to patent application stock), patent granted stock ratio (to patent application stock), the average remaining years of effective patents, the average years before examination request, and the average years required to be granted, these indexes are summarized, defined and grouped as a factor of the "patent time management". Further, the concept of summarizing the indexes contained in the factor of the "patent time management" can be considered as "a factor for shortening years to examination request and the years from the filing of an application to registration, improving the examination request stock ratio (to patent application stock) and the patent granted stock ratio (to patent application stock) and prolonging the term of patents. In other words, this can be considered as a factor for obtaining a patent early and maintaining such patent".

Further, since the second factor of the composite engineering industry (factor 2) is composed of the indexes of the number of claims filed share C, the number of claims filed share B, the number of claims filed share G, and the number of claims filed share H, these indexes are summarized, defined and grouped as factors of the "patent/technology share". Further, the concept of summarizing the indexes contained in the factor of the "patent/technology share" can be considered as "a factor showing the number of filed patent applications and the share and influence based on the technology market. The number of filed patent applications may be affected by the arbitrary filing of patent applications by enterprises, but this can be considered as the enterprise's position in the recent competition of the research and development or the technological development".

Further, since the third factor of the composite engineering industry (factor 3) is composed of the indexes of labor productivity, the total factor productivity, and the labor distribution ratio, these indexes are summarized, defined and grouped as a factor of the "productivity". Further, the concept of summarizing the indexes contained in the factor of the "productivity" can be considered as "a factor for improving the productivity by controlling the labor costs while improving the labor productivity and the technological innovative power".

Further, since the fourth factor of the composite engineering industry (factor 4) is composed of the indexes of patent concentration degree and the patent concentration degree B, these indexes are summarized, defined and grouped as a factor of the "concentration of patent/technology". Further, the concept of summarizing the indexes contained in the factor of the "concentration of patent/technology" can be considered as "a factor showing the concentration of patents, research and development or technological development. The concentration level of patent applications reflects the research and development or technological development concentrated on a specified field. Further, this also shows the attempt of obtaining patents in a concentrated manner, and improving the asset value of patents".

Further, since the fifth factor of the composite engineering industry (factor 5) is derived from the index of research and development cost per inventor (-1), this index is summarized, defined and groups as a factor of the "research and development". Further, the concept of this index contained in the factor of the "research and development" can be considered as "a factor showing that the research and development cost of the previous year is yielding results".

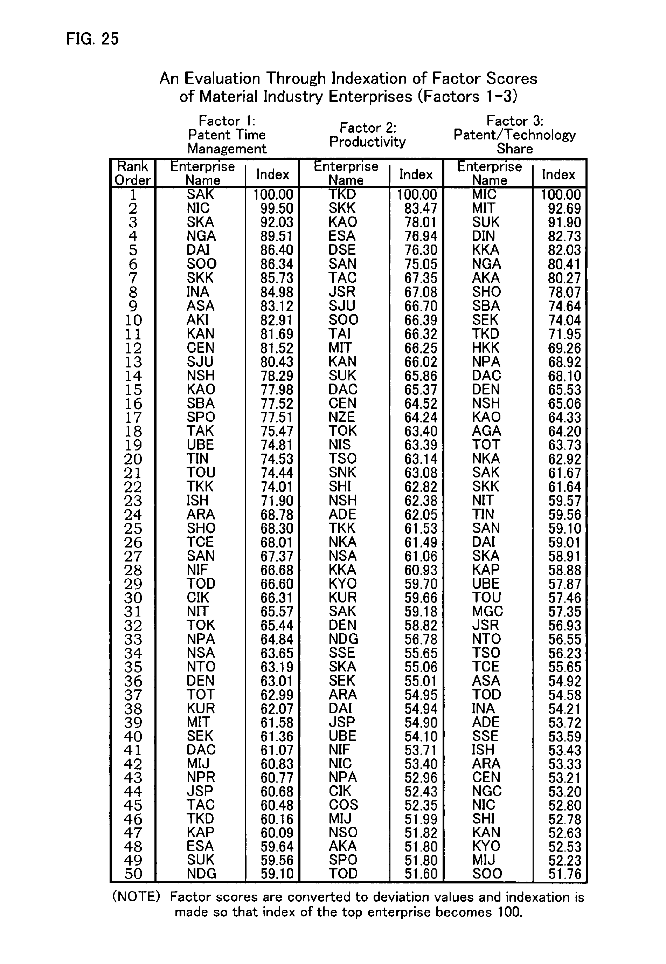

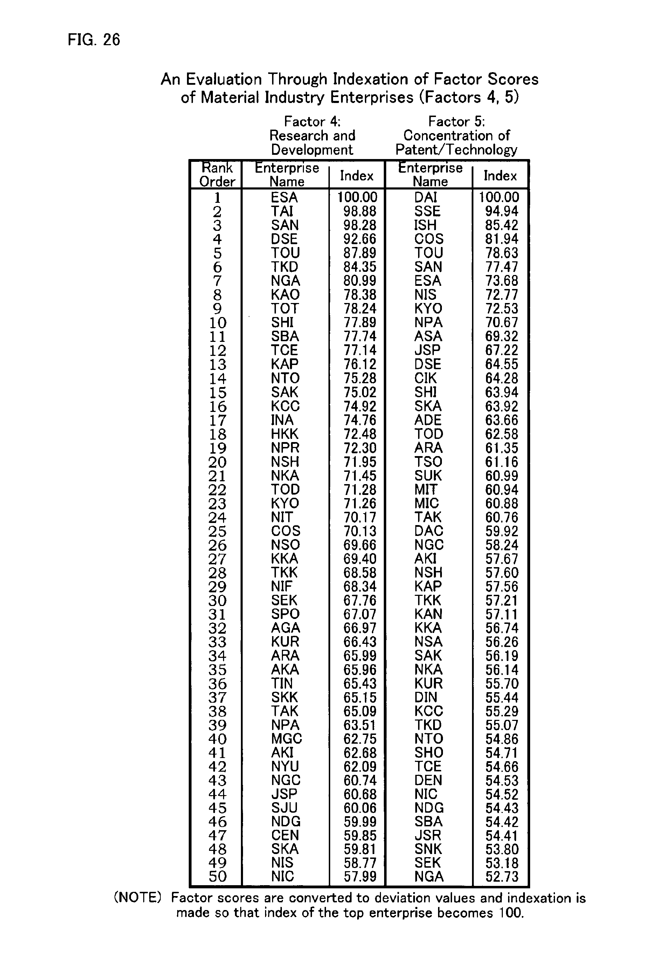

Fig. 25 and Fig. 26 are charts showing the indexation value C of each factor C calculated regarding each material industry enterprise (chart showing the evaluation through indexation of factor scores of the material industry enterprises).

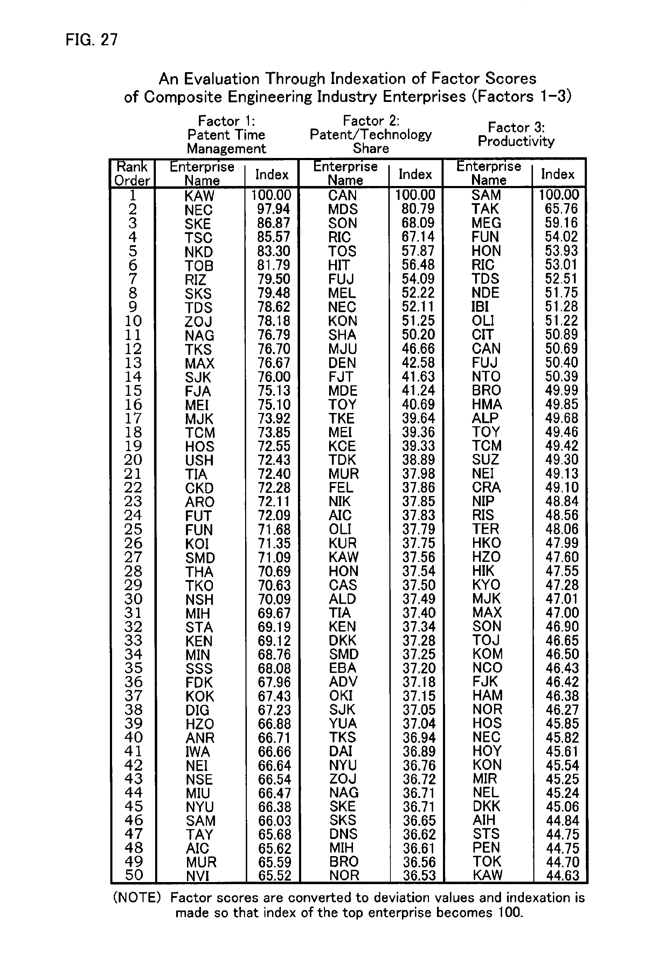

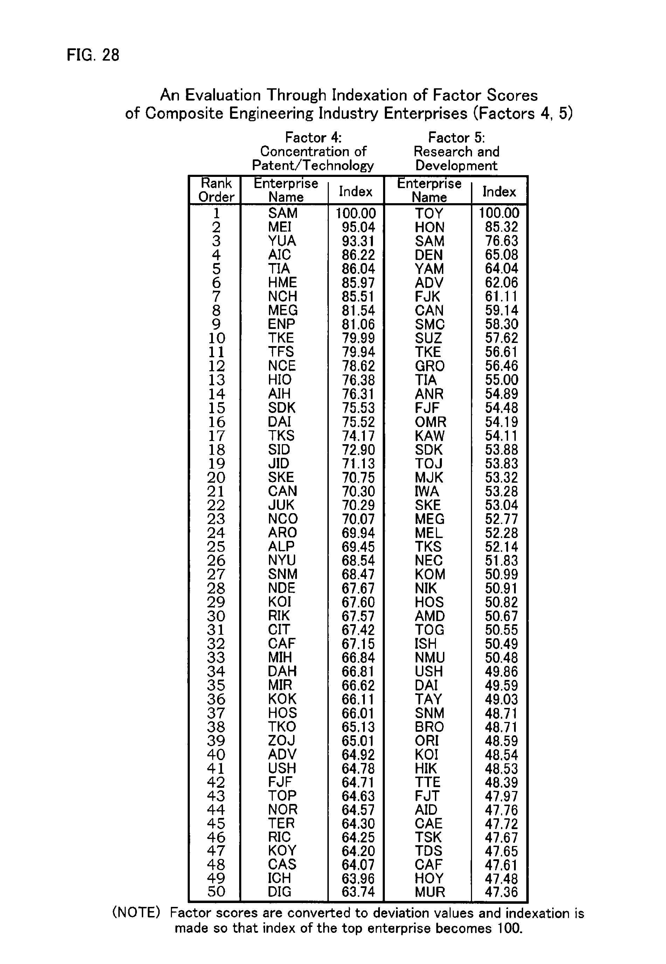

Fig. 27 and Fig. 28 are charts showing the indexation value C of each factor C calculated regarding each composite engineering industry enterprise (chart showing the evaluation through indexation of factor scores of the composite engineering industry enterprises).

Since the indexation values shown in these figures are values obtained for the convenience of viewing, by calculating the deviation values of the factor score C and performing calculation so that the indexation value of the top enterprise is 100, it is possible to know the ranking by factor of each enterprise, and, for instance, it will be possible to know the positioning of one's own enterprise or of the enterprise to be researched. Further, the trend of each enterprise can be known.

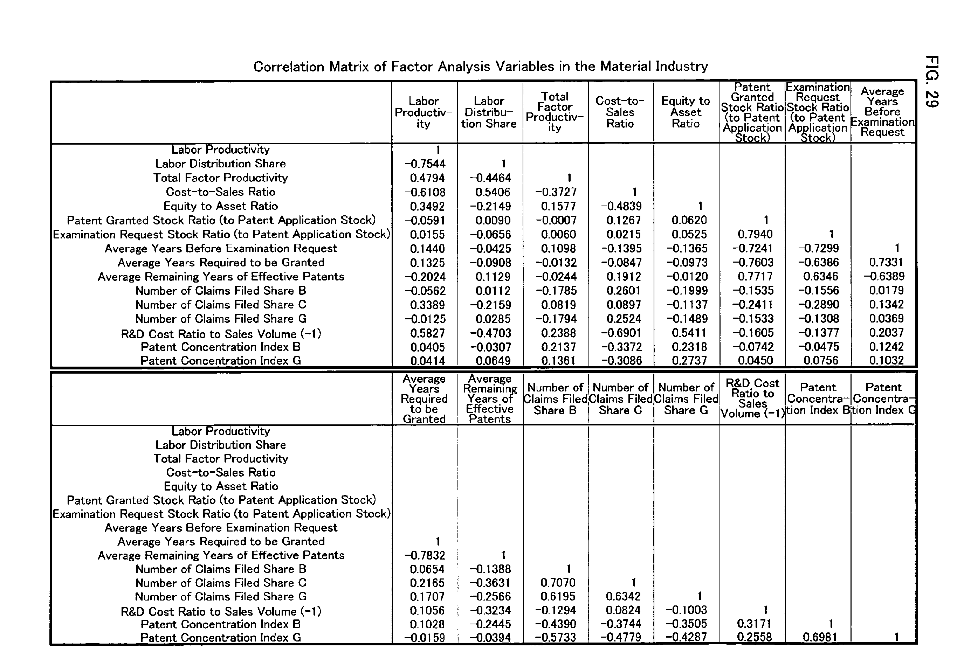

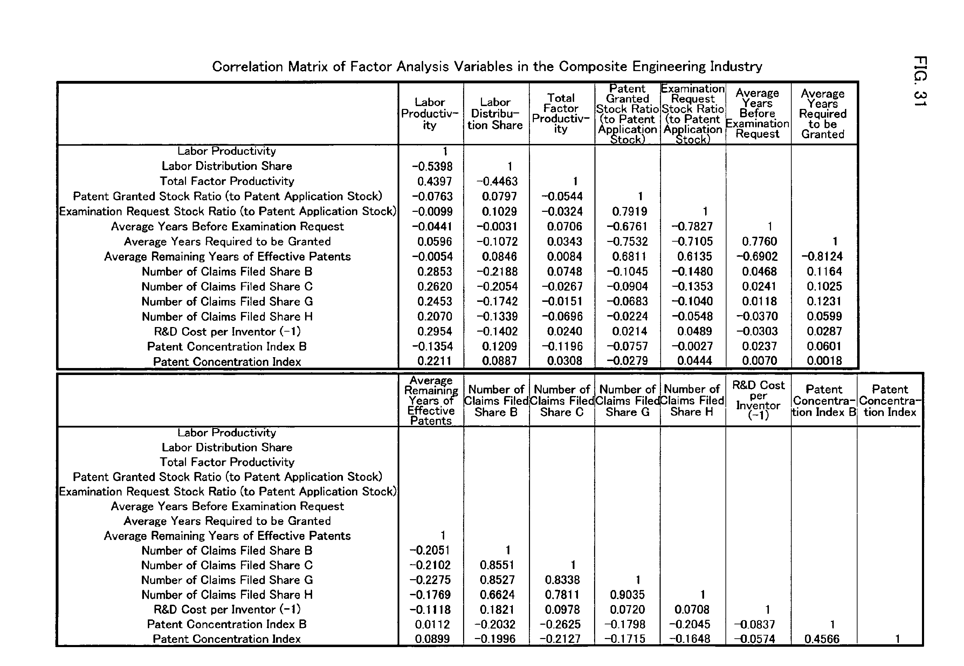

Fig. 29 and Fig. 31 are charts showing the correlation matrix C of the factor analysis variable of the material industry and the composite engineering industry.

The correlation matrix shown in Fig. 29 and Fig. 31 are charts for calculating the correlation of the indexes reduced in number in the processing shown in Fig. 21 and Fig. 22 and confirming whether the correlation can be acknowledged in the extracted indexes. As shown in these figures, there is significant correlation in the extracted indexes.

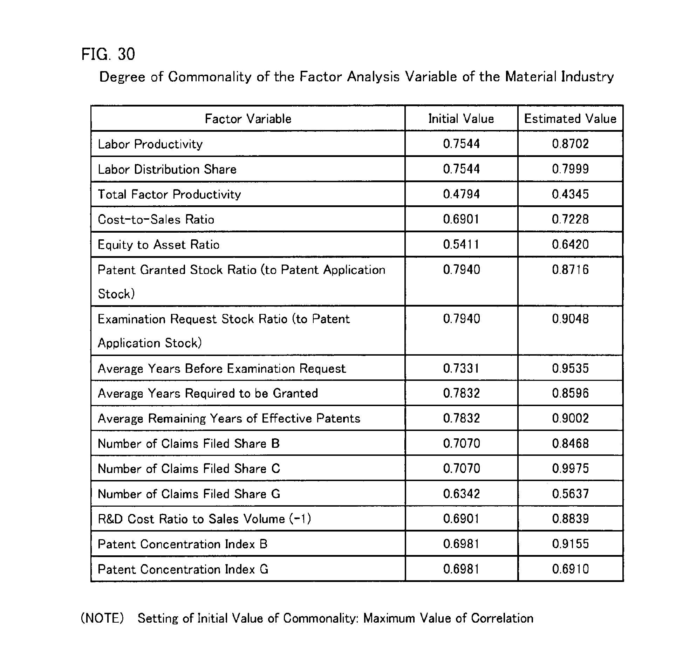

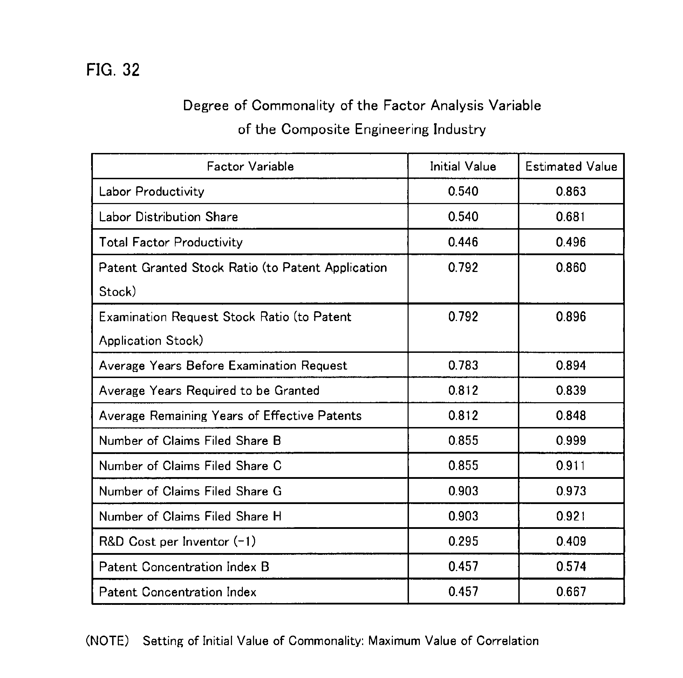

Fig. 30 and Fig. 32 are charts showing the degree of commonality C of the factor analysis variable of the material industry and the composite engineering industry.

The correlation matrix of the factor analysis variable shown in Fig. 29 and Fig. 31 and the degree of commonality of the factor analysis variable shown in Fig. 30 and Fig. 32 may be displayed together with the factor loading C, eigenvalue C, cumulative contribution ratio C and so forth shown in Fig. 21 and Fig. 22.

Multiple regression analysis processing is now explained.

Fig. 17 is a flowchart showing the processing of designating a comprehensive evaluation index (criterion variable), performing multiple regression analysis to see the degree of contribution ratio J of each factor C obtained in the foregoing factor analysis C in relation to the comprehensive evaluation index (criterion variable), and displaying the result of the analysis together with the contribution ratio J and the correlation (factor loading).

An example of the comprehensive evaluation index (criterion variable) to be subject to the calculation of the contribution ratio J is shown in Fig. 10.

Multiple regression analysis is obtained as a linear (primary) relational expressions with quantitative data as the variable to be predicted, and is used as a prediction relation for obtaining the respective coefficients concerning characteristics and causes. The variable to be predicted is referred to as a criterion variable, and the characteristics and causes are referred to as explanatory variables. In this multiple regression analysis, correlation between the respective variables is calculated and a multiple regression equation is sought.

The multiple regression equation is generally represented with the following formula (Formula 5), and shows that closer the absolute value of the value of the multiple correlation coefficient is to 1, the higher the reliability is.

$$(Formula\ 5)$$

$$Y = a + bX_1 + cX_2 + ... + nX_m$$

Provided,

Y: Criterion variable

$X_m$: Explanatory variable a: Constant

b, c, ..., n: Partial regression coefficient pertaining to respective explanatory variables

Incidentally, the selection of the explanatory variable is important in multiple regression analysis. Not only with the selection of the explanatory variables improve the reliability of multiple regression equation, it will also have a great influence on the obtained findings. In multiple regression analysis, whether the correlation between the explanatory variables and the criterion variable is high is checked first. Then, whether the explanatory variables are mutually independent is confirmed. Therefore, it is important to select an explanatory variable having a high correlation coefficient with the criterion variable and a low correlation coefficient with other explanatory variables.

Incidentally, when performing multiple regression analysis to calculate the contribution ratio J regarding the comprehensive evaluation index (criterion variable), it is necessary to input the comprehensive evaluation index and the factor (factor score). In this embodiment, a case is explained where the index of ROAδ = (operating profit + patent royalty income)/(total assets) is selected among the comprehensive evaluation indexes shown in Fig. 10.

In order to see how much the explanatory variable is affecting (contributing to) the criterion variable, the user needs to view the partial regression coefficient of the sought multiple regression equation. Normally, it can be said that larger the partial regression coefficient, the greater the influence on the criterion variable is. Nevertheless, when the units are different between the explanatory variables, since the units will also inflict influence, the value of the partial regression coefficient cannot be simply compared to decide this value.

Thus, in order to eliminate the influence of units, processing for standardizing the example data is performed. By standardizing data in which average = 0, and dispersion = 1, the influence of units will no longer be inflicted. Thus, the partial regression coefficient is sought from the standardized data. The partial regression coefficient obtained from such standardized data is referred to as a standard partial regression coefficient.

It could be said that the larger the standard partial regression coefficient is, the greater the influence on the criterion variable is, and the greater the contribution of the explanatory variable is. Standardization of data, for instance, can be calculated with the following formula (Formula 6).

$$(Formula\ 6)$$

$$X = (x-avg(x))/\sigma$$

Provided,

σ: Standard deviation

avg(x): Average value

When the processing to be executed by the information processing means 380 proceeds to S213 of Fig. 3, the processing branches to S600 "multiple regression analysis processing" shown in Fig. 17, and thereafter proceeds to the subsequent processing at S602 "designate comprehensive evaluation index".

At S602, the information processing means 380 acquires the comprehensive evaluation index designated by the user at S109 shown in Fig. 3 from the comprehensive evaluation index list. As described above, in this embodiment, an example is explained where the index of ROAδ = (operating profit + patent royalty income)/(total assets) is selected from the comprehensive evaluation indexes shown in Fig. 10.

At subsequent step S604 "perform multiple regression analysis", the information processing means 380 performs multiple regression analysis using the comprehensive evaluation index acquired at S602, and a factor containing one or more indexes, and performs processing for calculating the partial regression coefficient, the standard partial regression coefficient, the T value, and the P value. Further, the information processing means 380 creates a correlation matrix J using the foregoing comprehensive evaluation index and factor, and performs processing for calculating the correlation coefficient of the factor in relation to the comprehensive evaluation index. Incidentally, as the factor for performing multiple regression analysis, it is desirable to select a deeply related factor. Thus, in this embodiment, a provisional calculation is conducted using the index C and its factor C extracted as a result of performing the afore mentioned factor analysis C. However, the present invention is not limited to this embodiment.

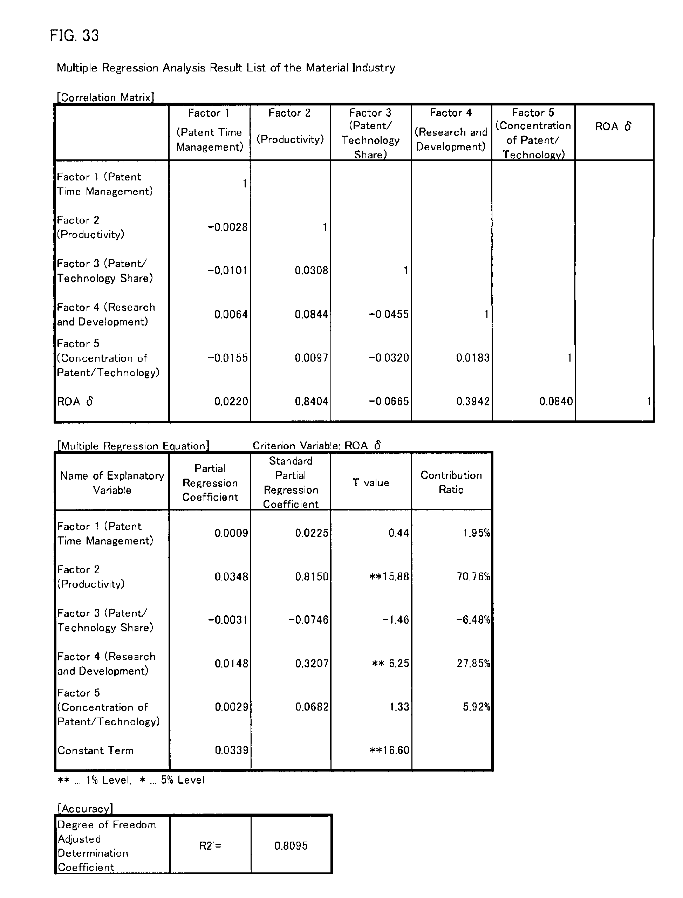

Fig. 33 is a chart showing the result of calculation of the multiple regression analysis J regarding how much the five factors C extracted as a result of performing factor analysis C regarding the material industry are contributing to the ROA$\delta$ (one comprehensive evaluation index) of the material industry (chart showing the multiple regression analysis result list of the material industry).

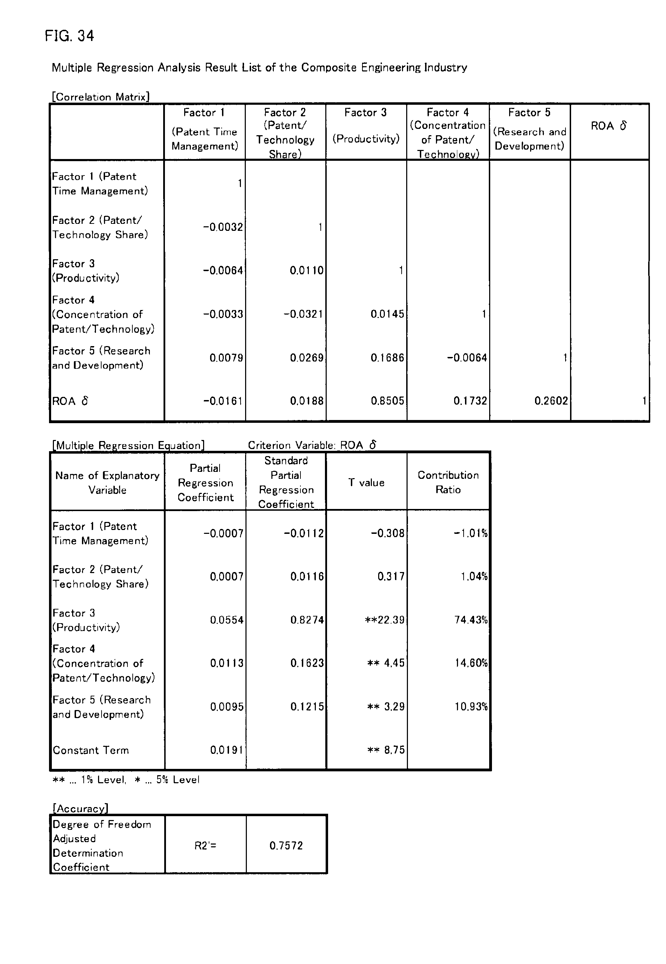

Further, Fig. 34 is a chart showing the result of the calculation of the multiple regression analysis J regarding how much the five factors C extracted as a result of performing factor analysis C regarding the composite engineering industry are contributing to the ROA$\delta$ (one comprehensive evaluation index) of the composite engineering industry (chart showing the multiple regression analysis result list for the composite engineering industry).

At subsequent step S606 "select factor in which level of T value is at a 5% (1%) level", the information processing means 380 performs processing of acquiring a threshold value from the threshold value recording means which stores the threshold value of the T value, and compares it with the T value, selecting the factor J in which the level of the T value is at the 5% level (or another threshold value such as 1% may be used, or the factor J may be extracted based on the P value. Further, the factor J may be extracted based on the contribution ratio J).

As shown in Fig. 33 and Fig. 34, the factor C of the first factor (factor 1) to the fifth factor (factor 5) and the correlation matrix J of the ROA$\delta$ are calculated, and it is possible to extract the factor J in which the level of the T value is at 1% level.

At subsequent step S608 "determine significance of selected factor", the information processing means 380 performs processing for determining the significance of the factor J selected at S606.

As shown in the list of calculation result of the multiple regression analysis shown in Fig. 33 and Fig. 34, determined coefficients of both the material industry and the composite engineering industry with the degree of freedom having been adjusted are respectively 0.8095 and 0.7572, showing a high level of interpretability. When viewing whether the respective factors J are significant, in the material industry shown in Fig. 33, it is evident that the second factor J of the material industry (factor 2 of "productivity": contribution ratio of roughly 71%) and the fourth factor J the material industry (factor 4 of "research and development": contribution ratio of roughly 28%) are significant.

Further, in the composite engineering industry shown in Fig. 34, it is evident that the third factor J of composite engineering industry (factor 3 of "productivity": contribution ratio of roughly 74%), the fourth factor of the composite engineering J (factor 4 of "concentration of patent/technology": contribution ratio of roughly 15%), and the fifth factor J of the composite engineering (factor 5 of "research and development": contribution ratio of roughly 11%) are significant.

Even with the display format of Fig. 33 and Fig. 34, it would be ideal to extract only the indexes C having a large contribution ratio J value, and to represent this with favorable visibility although it is possible to know the index C contributing to the value of the comprehensive evaluation index (for instance, ROA$\delta$) and the degree thereof (contribution ratio J) by reading the value of the contribution ratio J. Further, although it is possible to define each factor J as shown in Fig. 23 and Fig. 24, it does not necessarily mean that the definition that summarizes the nature of the extracted factor J will be provided, when the contribution ratio J is automatically calculated from each index C.

Further, since an object of the present invention is to extract the index C contributing to the comprehensive evaluation index (for instance, ROA$\delta$) and to notify the user of such index C and the level of contribution thereof, it is desirable to display, in an easy-to-view manner, the factor J and its contribution ratio J, the index C configuring the factor J, and the factor loading C of the index C.

Thus, in the present invention, the factor J contributing to the comprehensive evaluation index and its contribution ratio J are represented graphically. Further, as needed, the meaning and name of factors with a large contribution ratio J can also be displayed together. Further, as needed, the index C configuring the factor J and its factor loading C can also be displayed together. In the following processing at S610 "display relationship diagram of comprehensive evaluation index, significant factor and index (append contribution ratio based on factor loading and standard partial regression coefficient)", the comprehensive evaluation index and the factor J and the contribution ratio J are displayed and notified to the user.

When the display of the relationship diagram is ended, the processing to be performed by the information processing means 380 proceeds to S612 "store the relationship diagram of comprehensive evaluation index, significant factor and index by industry" and performs the processing of recording the calculated information in the recording means 384 and the like. When this recording processing is ended, the processing to be performed by the information processing means 380 proceeds to the subsequent processing at S614 "end", and returns to the original processing routine.

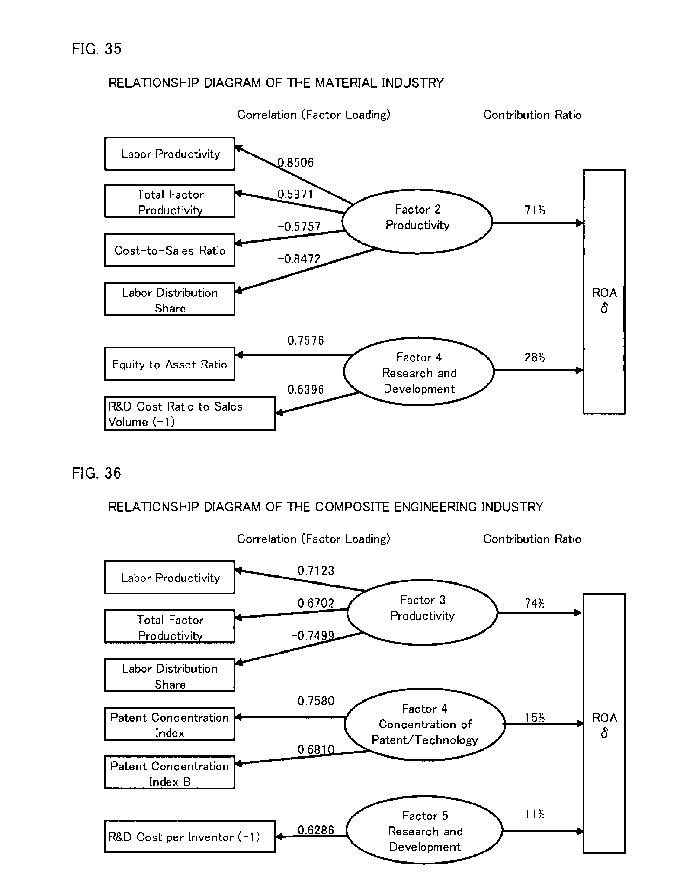

Fig. 35 is a relationship diagram showing an example of collectively displaying, in an easy-to-view manner, the comprehensive evaluation index and the factor J and the contribution ratio J and the factor loading C of each factor regarding the analysis of the material industry (diagram showing the relationship diagram of the material industry). Further, Fig. 36 is a relationship diagram showing an example of collectively displaying, in an easy-to-view manner, the comprehensive evaluation index and the factor J and the contribution ratio J and the factor loading C of each factor J regarding the analysis of the composite engineering industry (diagram showing the relationship diagram of the composite engineering industry).

Foremost, in the analysis of the composite engineering industry shown in the relationship diagram of Fig. 36, the progress rate of the comprehensive evaluation index based on the "productivity" with the largest contribution ratio J value is 74%, the progress rate of the comprehensive evaluation index based on the "concentration of patent/technology" is 15%, and the progress rate of the comprehensive evaluation index based on the investment of "research and development" is 11%. Fig. 36 shows the factor J contributing to the expansion of the comprehensive evaluation index ROAδ and its contribution ratio J. In the example shown in Fig. 36, the contribution ratio J required in the trinity management of the third factor J of the composite engineering industry named "productivity" (business strategy), the fourth factor J of the composite engineering industry named "concentration of patent/technology" (intellectual property strategy), and the fifth factor J of the composite engineering industry named "research and development" (research and development strategy), and the index J extracted as having correlation among the indexes C and the factor loading C thereof are clarified, and these are displayed in an easy-to-view manner.

For example, as the index J having correlation to the intellectual property strategy related index, the patent concentration degree and the patent concentration degree B exist in the fourth factor J of the composite engineering industry named "concentration of patent/technology", and shows that this is an index worthy of taking note as an index related and contributing to the ROAδ (return on asset δ).

Further, regarding the value of the contribution ratio J displayed in the relationship diagram of Fig. 36, the factor J of the "productivity" is contributing at 7.4, the factor J of the "concentration of patent/technology" is contributing at 1.5, and the factor J of the "research and development" is contributing at 1.1 on the premise that the ROAδ value is 10.0.

Further, in order to raise the "productivity" by one point, for instance, it is necessary to increase the "labor productivity" by 0.7123 points, or lower the "labor distribution ratio" by 0.7449 points.

Meanwhile, in the analysis of the material industry shown in the relationship diagram of Fig. 35, regarding the factor J contributing to the comprehensive evaluation index ROAδ, the progress rate of the comprehensive evaluation index based on the second factor J of the material industry (business strategy) named "productivity" is 71%, and the progress rate of the comprehensive evaluation index based on the fourth factor J of the material industry (research and development strategy) named "research and development" is 28%.

Further, in order to raise the "productivity" by one point, for instance, it is necessary to increase the "labor productivity" by 0.8506 points, or lower the factor loading C of the "total factor productivity" by 0.5971 points. Or, instead, the factor loading C of the "cost to sales ratio" can be lowered by 0.5757 points, or the "labor distribution ratio" can be lowered by 0.8472 points.

In the example shown in the relationship diagram of Fig. 35, since the third factor J of the material industry "patent/technology share" and the fifth factor J of the material industry "concentration of patent/technology" have a small contribution ratio J value, these are not displayed as significant factors. The reason for this is considered to be from the technological characteristics of the material industry. In the case of the material industry, a single patent may yield a huge cash flow, and the technology itself is often considered first before the number of patents or the concentrated acquisition of patents. Nevertheless, it is necessary to keep in mind that this does not mean that the concentrated strategy of patents can be ignored.

In the example shown in the relationship diagram of Fig. 36, the fourth factor J of the composite engineering industry, signifying the "concentration of patent/technology" is displayed as a contribution ratio of 15%. In the composite engineering industry, since numerous patents cover a single product, the number of patent applications is large by necessity. Further, in order to restrain the imitation or design around by other companies, the number of patent applications tends to increase. Thereupon, it becomes necessary to file and obtain patents in a concentrated manner in a specific field or technology. In such a case, it will be possible to prevent other companies from following and to increase profits as the pioneer. The factor J of the "concentration of patent/technology" can be considered to contribute significantly to the expansion of profits for the composite engineering industry.

Principal component analysis processing is now explained.

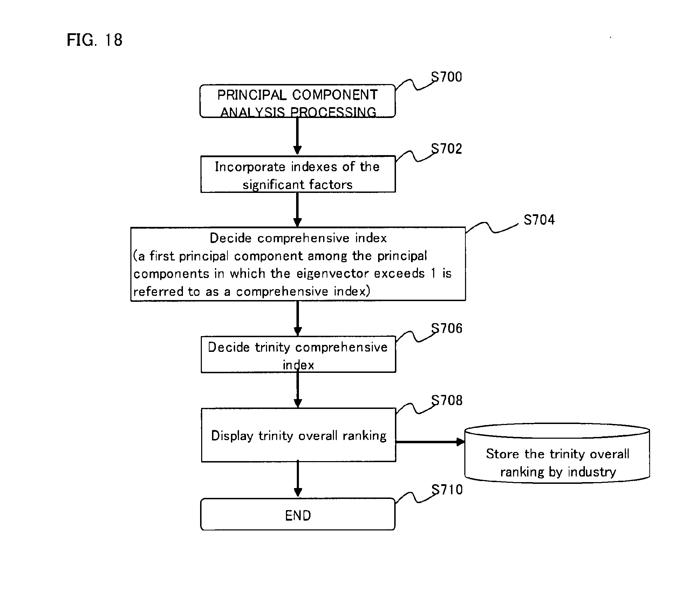

Fig. 18 is a flowchart showing the processing of performing principal component analysis using a factor that is deeply related and having a strong connection, and the comprehensive evaluation index, and displaying the enterprise's comprehensive evaluation score (principal component score S) and its ranking for researching the comprehensive evaluation of enterprises.

As a variable to be used for performing the principal component analysis, the principal component analysis can be performed by using the enterprise index having a factor loading that is larger than the threshold value among the enterprise indexes composing the factor J with a high contribution ratio J extracted based on the T value level (for instance, 1%) by performing multiple regression analysis in the processing at S606 or the like shown in Fig. 17, and the comprehensive evaluation index. This is because the factor J calculated by performing the multiple regression analysis can be as a factor that is deeply related and having a strong connection. Further, an enterprise index selected according to other methods may also be used.

Principal component analysis is an analysis method of integrating (compressing) certain variables of a plurality of variables that are mutually correlated to create several components, and obtaining the comprehensive strength and characteristics thereof. In the principal component analysis, a criterion variable is not given as in multiple regression analysis or discriminant analysis. This is used for integrating (compressing) the explanatory variables and checking the characteristics thereof.

Normally, in order to find the principal component, one straight line passing through the median point of the sample data is drawn. This straight line is given an appropriate weight $a_i$ and considered with the following linear formula (Formula 7).

$$\text{(Formula 7)}$$

$$Z = a_1x_1 + a_2x_2 + \ldots + a_nx_n$$

The straight line mentioned above (represented by Formula 7) needs to be drawn such that the distance from the respective points to the straight line will be minimum. In order to realize this, under the conditions of the following formula (Formula 8), the distribution of the synthesis variable Z is maximized.

$$\text{(Formula 8)}$$

$$a_1{}^2 + a_2{}^2 + \ldots + a_n{}^2 = 1$$

Further, the obtained synthesis variable with the maximum dispersion is referred to as a first principal component, and the one with the second largest dispersion and uncorrelated with the first principal component is referred to as a second principal component. Generally, if the number of variables (explanatory variable) is n, then it is possible to seek up to n number of principal components.

When the processing to be executed by the information processing means 380 proceeds to S214 of Fig. 3, the processing branches to S700 "principal component analysis processing" shown in Fig. 18, and thereafter proceeds to the subsequent processing at S702 "incorporate indexes of the significant factors".

At S702, the information processing means 380 acquires the comprehensive evaluation index designated by the user at S109 shown in Fig. 3, and the indexes configuring the factors that are deeply related and having strong connections. As described above, in this embodiment, the principal component analysis can be performed by using the enterprise indexes having factor loadings that are greater than the threshold value (for instance, 0.5) of the enterprise indexes configuring the factors J with high contribution ratios J extracted as a result of performing multiple regression analysis in the processing at S606 or the like shown.

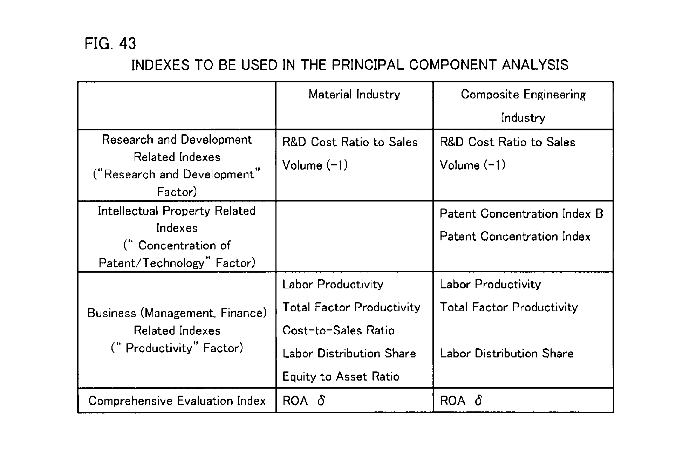

Fig. 43 is a chart showing the names of the indexes and the factors thereof used in the principal component analysis (chart showing the indexes to be used in the principal component analysis).

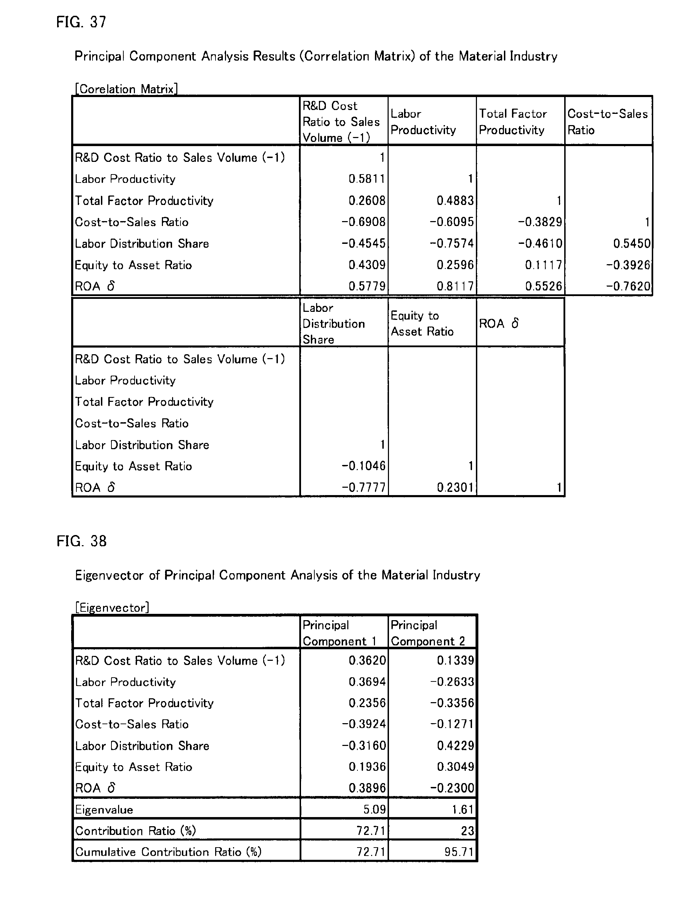

Regarding the index J configuring two factors J which became significant as a result of performing multiple regression analysis based on the index C of the material industry, there are a total of seven profit related ROAδ selected as the labor productivity, the total factor productivity, the cost to sales ratio, the labor distribution ratio, the equity to asset ratio, the sales volume research and development cost ratio (-1), and the comprehensive evaluation index. In this embodiment, the principal component analysis was performed using these indexes J. Incidentally, the indexes to be used in the principal component analysis are not limited to the above mentioned indexes J. The correlation matrix S resulting from the principal component analysis is shown in Fig. 37.

Fig. 37 is a chart showing the correlation matrix S using the material industry indexes extracted by performing multiple regression analysis (chart showing the principal component analysis result of the material industry).

Fig. 38 is a chart showing the eigenvector of the principal component analysis in the material industry.

In Fig. 38, only the principal components in which the eigenvector value exceeds 1 are extracted. As shown in Fig. 38, it is evident that over 70% of the amount of information (contribution ratio S) having the 7 indexes is explained with only the first principal component. Further, when viewing the positive or negative relationship of the factors pertaining to each index, the rise in the eigenvector of the "sales volume research and development cost ratio (-1)", "patent concentration degree", "labor productivity", "total factor productivity", and "equity to asset ratio" tends to work positively, and the rise in the eigenvector of the "cost to sales ratio" and "labor distribution ratio" tends to work negatively.

At subsequent step S704 "decide comprehensive index (a first principal component among the principal components in which the eigenvector exceeds 1 is referred to as a comprehensive index)" and S706 "decide trinity comprehensive index", the information processing means 380 performs processing for deciding the first principal components of the principal components in which the eigenvector exceeds 1 to be the trinity comprehensive index.

As shown in Fig. 38, due to the consistency as a result of using the indexes extracted by performing factor analysis C and multiple regression analysis, the first principal component can be used as the comprehensive index showing the management performance status of the material industry.

At subsequent step S708 "display trinity overall ranking", the information processing means 380 performs processing for counting the comprehensive scores and displaying the overall ranking in the order of scores.

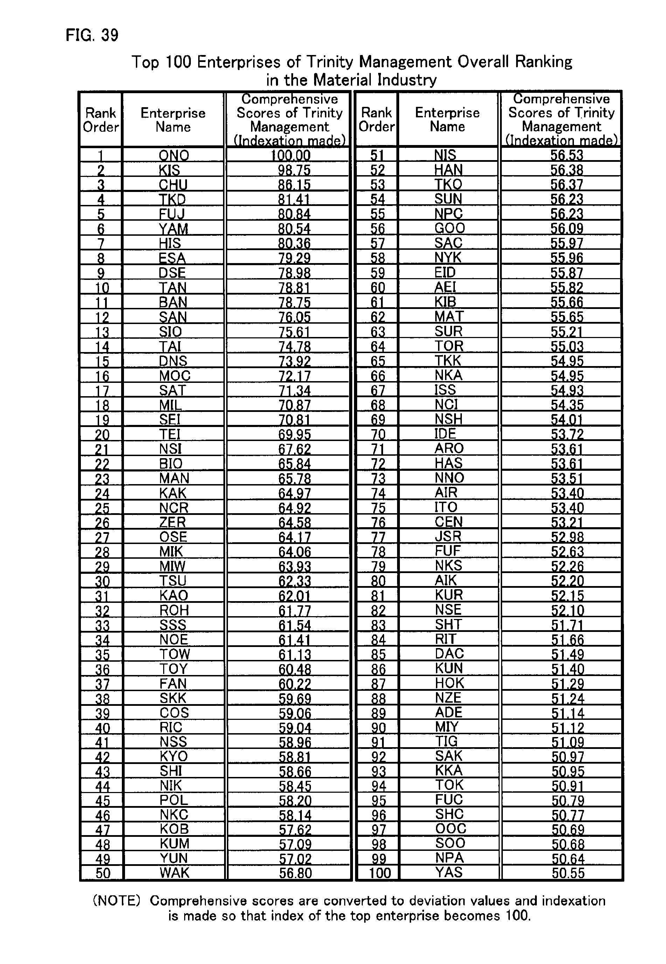

When the comprehensive scores are calculated by performing the principal component analysis regarding material industry enterprises and listing the enterprise names in the order of comprehensive scores up to the 100th enterprise, it is possible to know the status of the enterprise to be researched, discover the weaknesses of such enterprise under research, and consider the future strategy and measures of the researched enterprise. Incidentally, by creating a deviation value regarding the factor score S, and calculating the comprehensive scores so that the score of the top enterprise becomes 100, the chart can be displayed in an easy-to-view manner. This chart is shown in Fig. 39.

Fig. 39 is a chart listing the enterprise names in the order of comprehensive scores obtained by counting the comprehensive scores by performing principal component analysis regarding material enterprises (chart showing the trinity management overall ranking of the material industry).

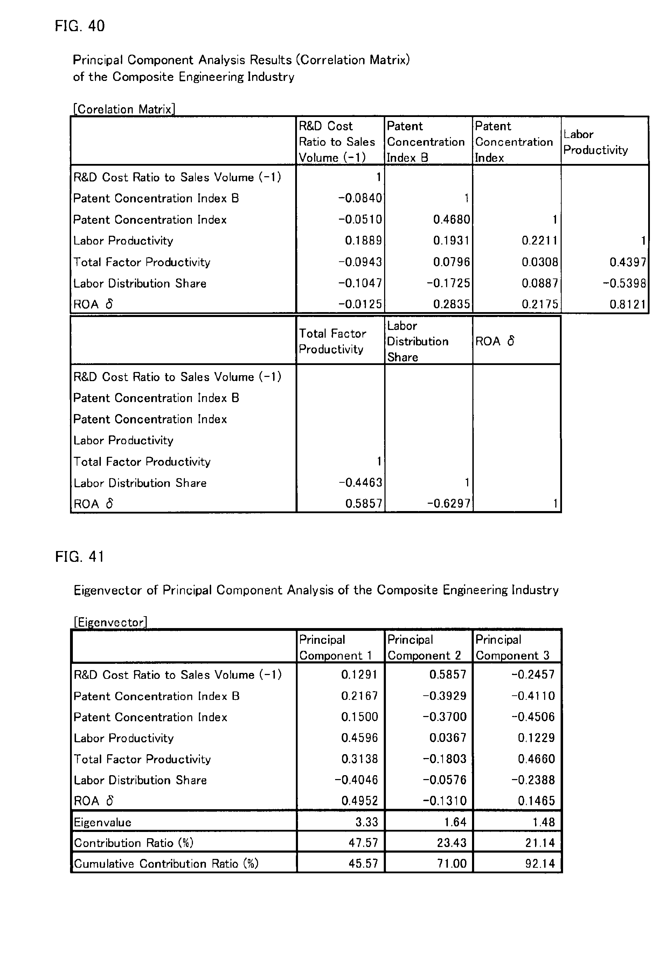

Fig. 40 is a chart showing the correlation matrix S using the indexes of the composite engineering industry extracted by performing multiple regression analysis (chart showing the principal component analysis result of the composite engineering industry).

Fig. 41 is a chart showing the eigenvector of the principal component analysis in the composite engineering industry.

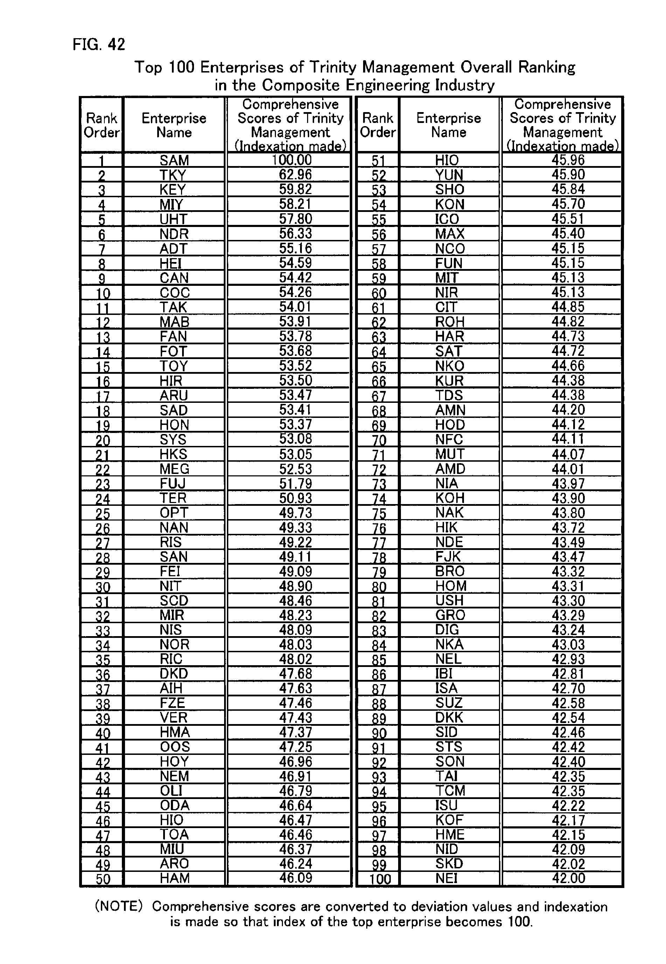

Fig. 42 is a chart listing the enterprise names in the order of comprehensive scores obtained by counting the comprehensive scores by performing principal component analysis regarding composite engineering enterprises (chart showing the trinity management overall ranking of the composite engineering industry).

In the composite engineering industry, for instance, regarding the index J configuring three factors J which became significant as a result of performing multiple regression analysis, there are a total of seven profit related ROAδ selected as the labor productivity, the total factor productivity, the labor distribution ratio, the patent concentration degree B, the patent concentration degree, the sales volume research and development cost ratio (-1), and the comprehensive evaluation index. In this embodiment, the principal component analysis was performed using these indexes J. Incidentally, the indexes to be used in the principal component analysis are not limited to the foregoing indexes J. The correlation matrix S resulting from the principal component analysis is shown in Fig. 40, and Fig. 41 is a chart showing the eigenvector of the principal component analysis.

By calculating the comprehensive scores as a result of performing the principal component analysis regarding the material industry enterprises, and creating deviation values and calculating the comprehensive scores so that the value of the top enterprise becomes 100, it is possible to list the enterprise names up to the 100th enterprise in the order of the comprehensive scores as shown in Fig. 42.

Another calculation example in a case where the user selects medium classification at S107 shown in Fig. 3 is now explained.

When the user selects the machinery industry (machines, shipbuilding, automobiles, transport equipment) and the electronics related industry (electrical equipment, precision equipment), it is possible to perform the factor analysis, the multiple regression analysis, and the principal component analysis by using the enterprise indexes of these industries to check the management strategy of enterprises.

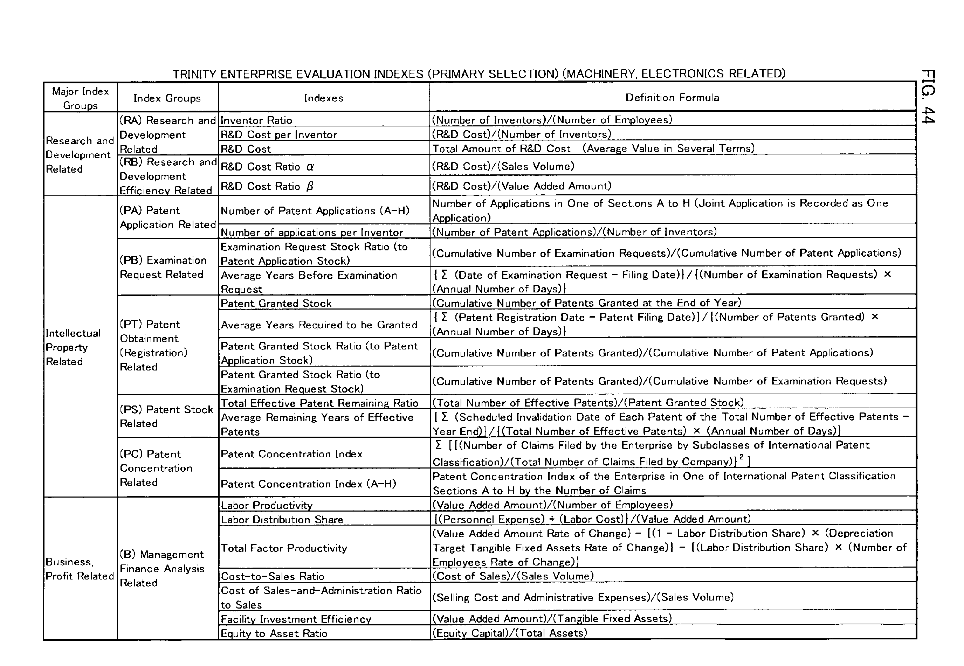

Factor analysis is performed first to extract factors B up to a factor in which the cumulative contribution ratio B value exceeds 70%, or a factor B in which the eigenvalue B value is 1 or more, whereby indexes that are hardly related are eliminated. The indexes subject to the foregoing primary selection are shown in Fig. 44.

Fig. 44 is a chart showing the indexes subject to primary selection as a result of performing factor analysis with the indexes shown in Fig. 11 to Fig. 14 regarding the machinery industry and the electronics related industry (chart showing the trinity enterprise evaluation index).

As shown in Fig. 44, the indexes subject to primary selection are reduced in number into a total of 38 types; namely, 5 types of the research and development related indexes, 26 types of the intellectual property related indexes, and 7 types of the business-management related indexes. Incidentally, the number of claims filed share A to H and the patent concentration degree A to H are respectively counted as 8 indexes.

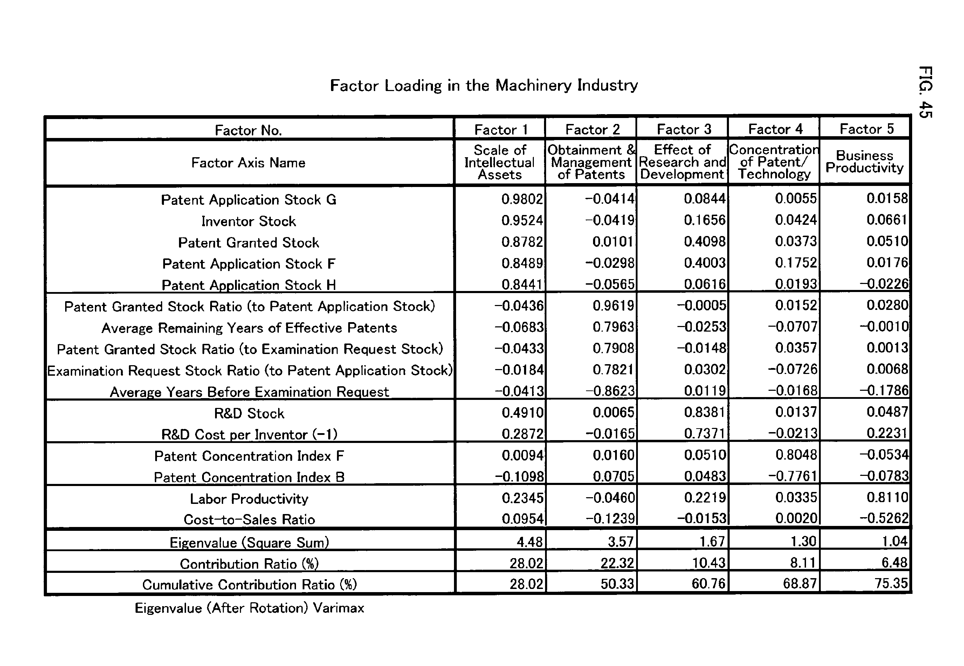

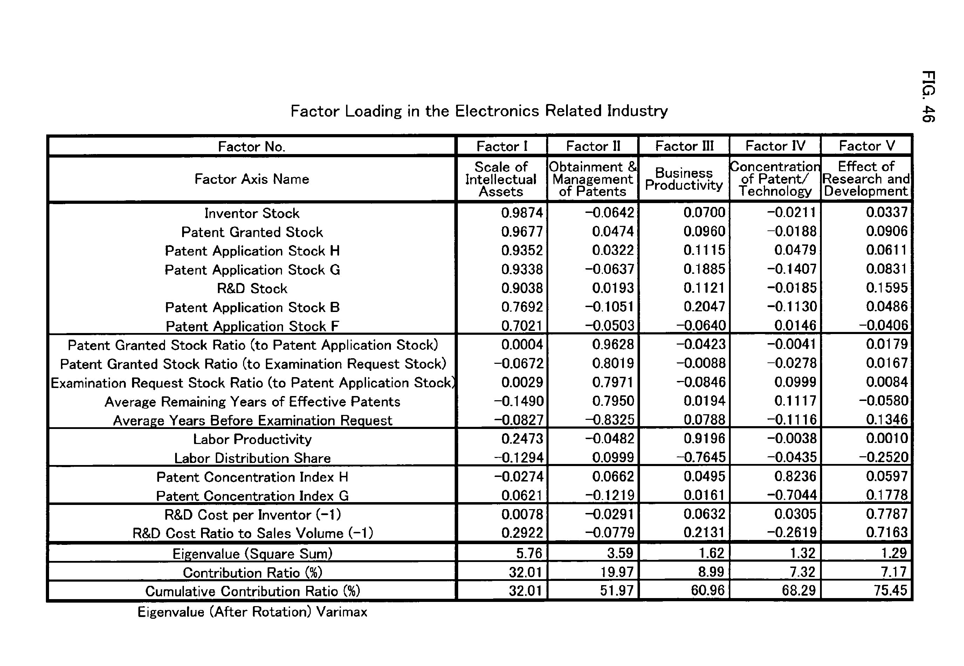

As a result of performing factor analysis C using these indexes, in the machinery industry, 5 factors C were extracted and 16 indexes were extracted. Further, in the electronics related industry, 5 factors C were extracted and 18 indexes were extracted. The factor loading C, the eigenvalue C, the contribution ratio C, and the cumulative contribution ratio C obtained as a result of performing the factor analysis C are shown in Fig. 45 and Fig. 46. Incidentally, in Fig. 45 and Fig. 46, the value of the "factor loading C" is indicated, "factor C" is indicated as "factor 1" to "factor 5", "eigenvalue C" is indicated as "eigenvalue", "contribution ratio C" is indicated as "contribution ratio", and "cumulative contribution ratio C" is indicated as "cumulative contribution ratio".

Fig. 45 is a chart showing the results of the calculation of the factor loading C, the eigenvalue C, the contribution ratio C, and the cumulative contribution ratio C in the machinery industry (chart showing the factor loading of the machinery industry).

In the example shown in Fig. 45, the indexes (variable names) of the patent application stock G, the inventor stock, the patent granted stock, the patent application stock F, and the patent application stock H are defined and grouped as a machinery industry first factor (factor of scale of intellectual assets: factor 1).

Further, the indexes (variable names) of the patent granted stock ratio (to patent application stock), the average remaining years of effective patents, the patent granted stock ratio (to examination request stock), the examination request stock ratio (to patent application stock), and the average years before examination request are defined and grouped as a second factor of the machinery industry (factor of obtainment and management of patents: factor 2).

Further, the indexes (variable names) of the research and development stock, and the research and development cost per inventor (-1) are defined and grouped as a third factor of the machinery industry (factor on effects of research and development: factor 3).

Further, the indexes (variable names) of the patent concentration degree F, and the patent concentration degree B are defined and grouped as a fourth factor of the machinery industry (factor of concentration of patent/technology: factor 4).

Further, the indexes (variable names) of the labor productivity, and the cost to sales ratio are defined and grouped as a fifth factor of the machinery industry (factor of business productivity: factor 5).

In the example shown in Fig. 45, the eigenvalue C and the contribution ratio C of each factor of the machinery industry are calculated, and the factor loadings C are arranged and represented for each machinery industry factor in the order from the largest eigenvalue C. In the example shown in Fig. 45, illustrated is a case where up to the fifth factor are adopted in a group that inflicts a significant impact.

Fig. 46 is a chart showing results of the calculation of the factor loading C, eigenvalue C, contribution ratio C, and cumulative contribution ratio C in the electronics related industry (chart showing the factor loading of the electronics related industry).

In the example shown in Fig. 46, the indexes (variable names) of the inventor stock, the patent granted stock, the patent application stock H, the patent application stock G, the research and development stock, the patent application stock B, and the patent application stock F are defined and grouped as a first factor of an electronics related industry (factor of scale of intellectual assets: factor 1).

Further, the indexes (variable names) of the patent granted stock ratio (to patent application stock), the patent granted stock ratio (to examination request stock), the examination request stock ratio (to patent application stock), the average remaining years of effective patents, and the average years before examination request are defined and grouped as a second factor of the electronics related industry (factor of obtainment and management of patents: factor 2).

Further, the indexes (variable names) of the labor productivity, and the labor distribution ratio are defined and grouped as a third factor of the electronics related industry (factor of business productivity: factor 3).

Further, the indexes (variable names) of the patent concentration degree H, and the patent concentration degree G are defined and grouped as a fourth factor of the electronics related industry (factor of concentration of patent/technology: factor 4).

Further, the indexes (variable names) of the research and development cost per inventor (-1), and the sales volume research and development cost ratio (-1) are defined and grouped as a fifth factor of the electronics related industry (factor one effect of research and development: factor 5).

In the example shown in Fig. 46, the eigenvalue C and the contribution ratio C of each factor of the electronics related industry are calculated, and the factor loadings C are arranged and represented for each electronics related industry factor in the order from the largest eigenvalue C. In the example shown in Fig. 46, illustrated is a case where up to the fifth factor (factor 5) are adopted as a group that inflicts a significant impact.

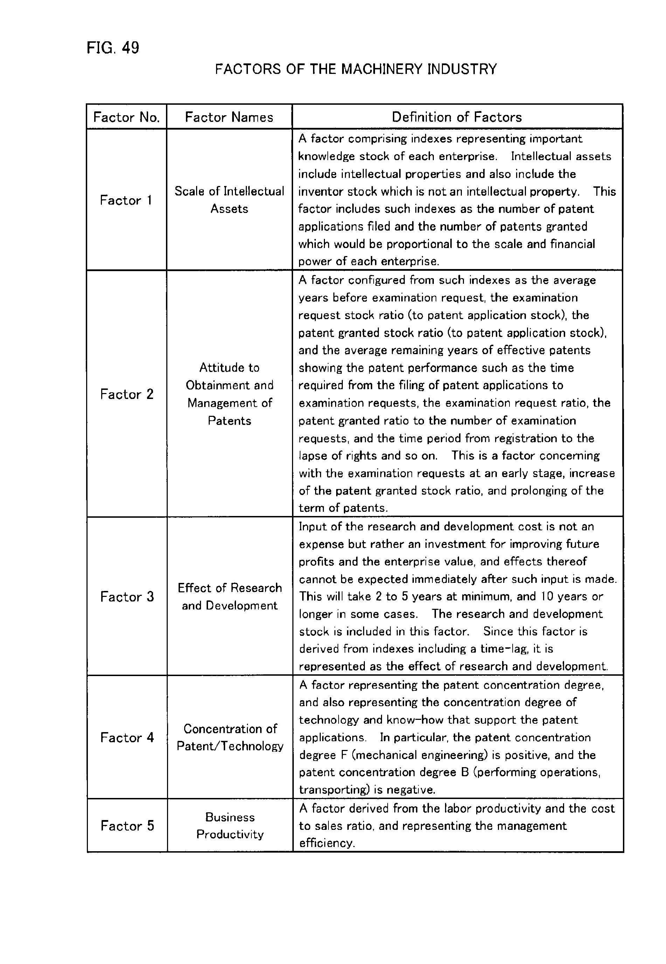

Fig. 49 is a diagram showing the definitions of the factors of the machinery industry (chart showing the factors of the machinery industry).

As shown in Fig. 49, the first factor of the machinery industry (factor 1) is defined and grouped as a factor of "scale of intellectual assets". Further, the concept of summarizing the indexes contained in the factor of the "scale of intellectual assets" can be considered as "a factor comprising indexes representing important knowledge stock of each enterprise. Intellectual assets include intellectual properties and also include the inventor stock which is not an intellectual property. This factor includes such indexes as the number of patent applications filed and the number of patents granted which would be proportional to the scale and financial power of each enterprise".

Further, the machinery industry second factor (factor 2) is defined and grouped as a factor of the "obtainment and management of patents". Further, the concept of summarizing the indexes contained in the factor of the "obtainment and management of patents" can be considered as "a factor configured from such indexes as the average years before examination request, the examination request stock ratio (to patent application stock), the patent granted stock ratio (to patent application stock), and the average remaining years of effective patents showing the patent performance such as the time required from the filing of patent applications to examination requests, the examination request ratio, the patent granted ratio to the number of examination requests, and the time period from registration to the lapse of rights and so on. This is a factor concerning with the examination requests at an early stage, increase of the patent granted stock ratio, and prolonging of the term of patents".

Further, the third factor of the machinery industry (factor 3) is defined and grouped as a factor of the "effect of research and development". Further, the concept of summarizing the indexes included in the factor of the "effect of research and development" can be considered as "input of the research and development cost is not an expense but rather an investment for improving future profits and the enterprise value, and effects thereof cannot be expected immediately after such input is made. This will take 2 to 5 years at minimum, and 10 years or longer in some cases. The research and development stock is included in this factor. Since this factor is derived from indexes including a time-lag, it is represented as the effect of research and development".

Further, the fourth factor of the machinery industry (factor 4) is defined and grouped as a factor of the "concentration of patent/technology". Further, the concept of summarizing the indexes included in the factor of the "concentration of patent/technology" can be considered as "a factor representing the patent concentration degree, and also representing the concentration degree of technology and know-how that support the patent applications. In particular, the patent concentration degree F (mechanical engineering) is positive, and the patent concentration degree B (performing operations, transporting) is negative".

Further, the fifth factor of the machinery industry (factor 5) is defined and grouped as a factor of the "business productivity". Further, the concept of summarizing the indexes included in the factor of the "business productivity" can be considered as "a factor derived from the labor productivity and the cost to sales ratio, and representing the management efficiency".

Regarding the definition based on the indexes included in these factors, the user may aggregate the factors hidden behind the factors, viewing the indexes of the extracted operation results and name the definitions.

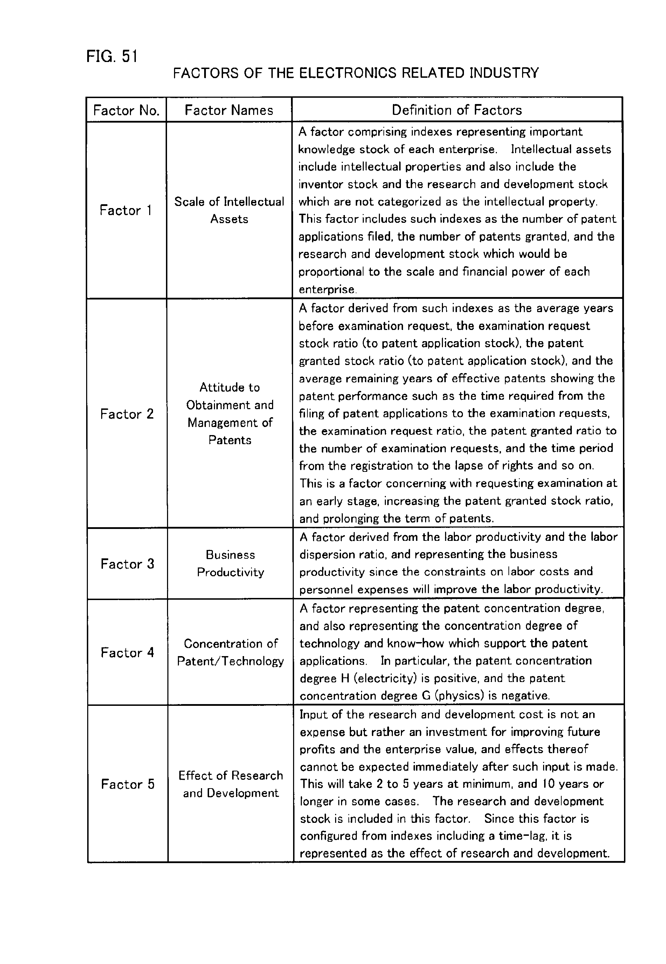

Fig. 51 is a chart showing the definitions of the factors of the electronics related industry (chart showing the factors of the electronics related industry).

As shown in Fig. 51, a first factor of the electronics related industry (factor 1) is defined and grouped as a factor of "scale of intellectual assets". Further, the concept of summarizing the indexes included in the factor of the "scale of intellectual assets" can be considered as "a factor comprising indexes representing important knowledge stock of each enterprise. Intellectual assets include intellectual properties and also include the inventor stock and the research and development stock which are not categorized as the intellectual property. This factor includes such indexes as the number of patent applications filed, the number of patents granted, and the research and development stock which would be proportional to the scale and financial power of each enterprise".

Further, a second factor of the electronics related industry (factor 2) is defined and grouped as a factor of the "obtainment and management trend for patents". Further, the concept of summarizing the indexes included in the factor of the "obtainment and management trend for patents" can be considered as "a factor derived from such indexes as the average years before examination request, the examination request stock ratio (to patent application stock), the patent granted stock ratio (to patent application stock), and the average remaining years of effective patents showing the patent performance such as the time required from the filing of patent applications to the examination requests, the examination request ratio, the patent granted ratio to the number of examination requests, and the time period from the registration to the lapse of rights and so on. This is a factor concerning with requesting examination at an early stage, increasing the patent granted stock ratio, and prolonging the term of patents".

Further, the third factor of the electronics related industry (factor 3) is defined and grouped as a factor of the "business productivity". Further, the concept of summarizing the indexes contained in the factor of the "business productivity" can be considered as "a factor derived from the labor productivity and the labor dispersion ratio, and representing the business productivity since the constraints on labor costs and personnel expenses will improve the labor productivity".

Further, a fourth factor of the electronics related industry (factor 4) is defined and grouped as a factor of the "concentration of patent/technology". Further, the concept of summarizing the indexes included in the factor of the "concentration of patent/technology" can be considered as "a factor representing the patent concentration degree, and also representing the concentration degree of technology and know-how which support the patent applications. In particular, the patent concentration degree H (electricity) is positive, and the patent concentration degree G (physics) is negative".

Further, a fifth factor of the electronics related industry (factor 5) is defined and grouped as a factor of the "effect of research and development". Further, as the concept of summarizing the indexes included in the factor of the "effect of research and development", it can be considered that the "input of the research and development cost is not an expense but rather an investment for improving future profits and the enterprise value, and effects thereof cannot be expected immediately after such input is made. This will take 2 to 5 years at minimum, and 10 years or longer in some cases. The research and development stock is included in this factor. Since this factor is configured from indexes including a time-lag, it is represented as the effect of research and development".

Regarding the definition based on the indexes contained in these factors, the user may aggregate the factors hidden behind the factors as a result of viewing the indexes of the extracted operation results and name the definitions.

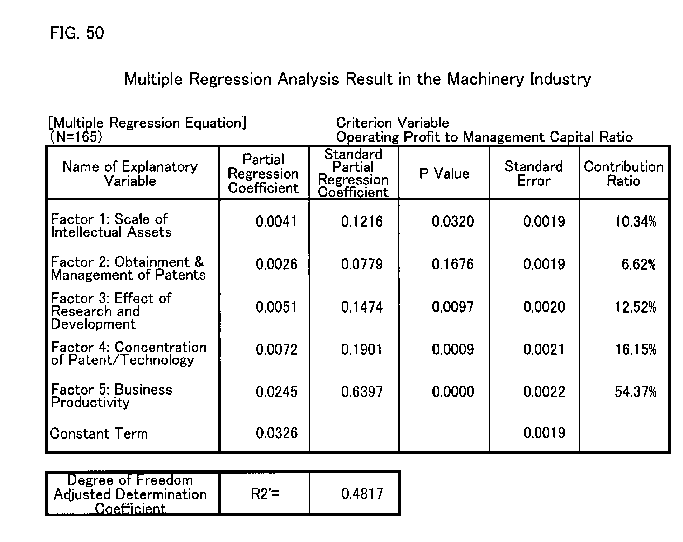

Fig. 50 is a chart showing the results of calculation of multiple regression analysis regarding how much the 5 factors C extracted by performing factor analysis C regarding the machinery industry is contributing to the ROAδ (one comprehensive evaluation index) of the machinery industry (chart showing the multiple regression analysis result of the machinery industry).

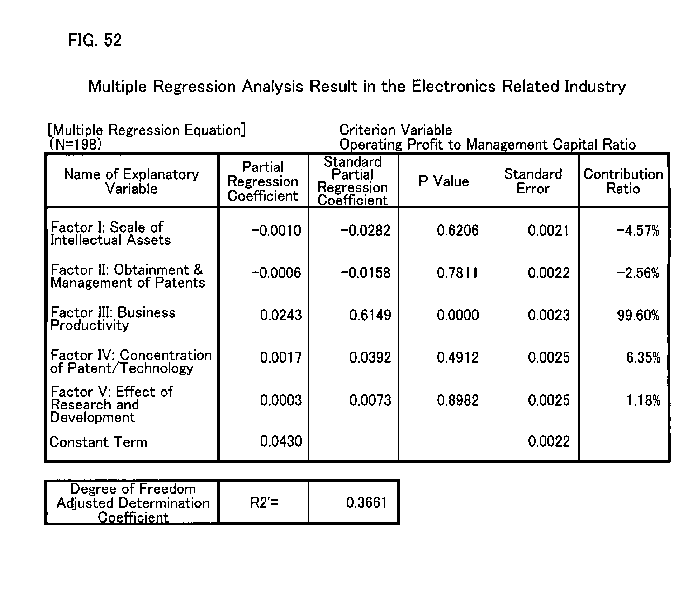

Further, Fig. 52 is a chart showing the results of calculation of multiple regression analysis regarding how much the 5 factors C extracted by performing factor analysis C regarding the electronics related industry is contributing to the ROAδ (one comprehensive evaluation index) of the electronics related industry (chart showing the result of the multiple regression analysis of the electronics related industry).

As shown in Fig. 50 and Fig. 52, the factors C of the first factor (factor 1) to fifth factor (factor 5) and the correlation matrix J of the ROAδ are calculated.

When it is viewed whether the factors J in the machinery industry are significant, the four factors excluding the machinery industry second factor J (factor 2) "attitude to obtainment and management of patents" are significant. In relation to the enterprise profit ROAδ, it is evident that the fifth factor J of the machinery industry (factor 5) "business productivity" yields a contribution ratio of roughly 54%, the fourth actor J of the machinery industry (factor 4) "concentration of patent/ technology" yields a contribution ratio of roughly 16%, the third factor J of the machinery industry (factor 3) "research and development" yields a contribution ratio of roughly 13%, and the first factor J of the machinery industry (factor 1) "scale of intellectual property" yields a contribution ratio of roughly 10%.

The first factor J of the machinery industry (factor 1) "scale of intellectual property", in addition to the contribution of the intellectual assets stock to the profitability, is considered to have an aspect of contribution based on the scale of economic efficiency. The number of patent applications filed and the number of patents granted, the number of inventors and other quantities are proportional to the scale of the enterprise. As a result of working the economic efficiency due to the scale, it is considered that the contribution for portions that reduced production and sales costs are also included therein.

The first factor J of the machinery industry (factor 1) "scale of intellectual property", in addition to the contribution of the intellectual assets stock to the profitability, is considered to have an aspect of contribution based on the scale of the economic efficiency. The number of patent applications filed and the number of patents granted, the number of inventors and other quantities are proportional to the scale of the enterprise. As a result of working the economic efficiency due to the scale, it is considered that the contribution for portions that reduced production and sales costs are also included therein.

The third factor J of the machinery industry (factor 3) "effect of research and development" includes the research and development cost and the research and development cost per inventor (-1), and, in the machinery industry, it is possible to know the trend of how much research and development costs must be invested in order to improve profits.

In the fourth factor J of the machinery industry (factor 4) "patent technology concentration", the "patent concentration degree F" (F: mechanical engineering; illumination; heating; weapons; explosions) is positive, and the "patent concentration degree B" (B: treatment operation, transport) is negative. When the level of the "concentration of patent/ technology" is increased by 1 point, it is evident that the "patent concentration degree F" will increase by 0.8048 points, and, contrarily, the patent concentration degree B will decrease by 0.7761 points. To put it the other way around, profits can be increased by increasing (concentration) the "patent concentration degree F" and lowering (diversifying) the "patent concentration degree B".

This shows that the "selection and concentration" of patents is contributing to the profits of enterprises. It is also possible to see which field should be concentrated on. Although major enterprise tend to diversify their patents and technology, specialty enterprises tend to have high profitability since they are concentrating their patents on a certain target.

The fifth factor J of the machinery industry (factor 5) "business productivity" represents the production efficiency in the commercialized field. Profits can be increased if the "labor productivity" is high and the "cost to sales ratio" is low. It is evident that "business productivity" is contributing significantly to the profits at 54%.

When it is viewed whether the factors J in the electronics related industry are significant with reference to the result of the multiple regression analysis of Fig. 52, of the 5 electronics related industry factors J shown in Fig. 51, it is evident that the factor J of the electronics related industry "business productivity" yields a contribution ratio of roughly 99.6%, and shows a contribution ratio that is close to 100% in relation to the enterprise profit ROAδ. Further, it is evident that profits can be increased if the "labor productivity" is high and the "labor distribution ratio" is low.

Nevertheless, just because the other factors were not listed as contributing to the profits of enterprises, this does not mean that patents and technology can be neglected. There may be cases where numerous patent applications are filed and vast amounts of research and development cost are invested but showing no effects of "selection and concentration" based on the first factor J of the electronics related industry (factor 1) "scale of intellectual assets", the fifth factor J of the electronics related industry (factor 5) "effect of research and development", and the fourth factor J of the electronics related industry (factor 4) "concentration of patent/technology". The fact that these factors J are not contributing to the enterprise profit, implies that this industry is subject to fierce competition.

Furthermore, in the electronics related industry, research and development is not contributing to the profits, and it is considered that new products are yielded from externally licensed technology or acquisition of other enterprises. Thus, one option to contribute to the enterprise profits would be to conduct the internal research and development jointly with other companies, or allocate the money required for such research and development to acquiring licenses or other enterprises.

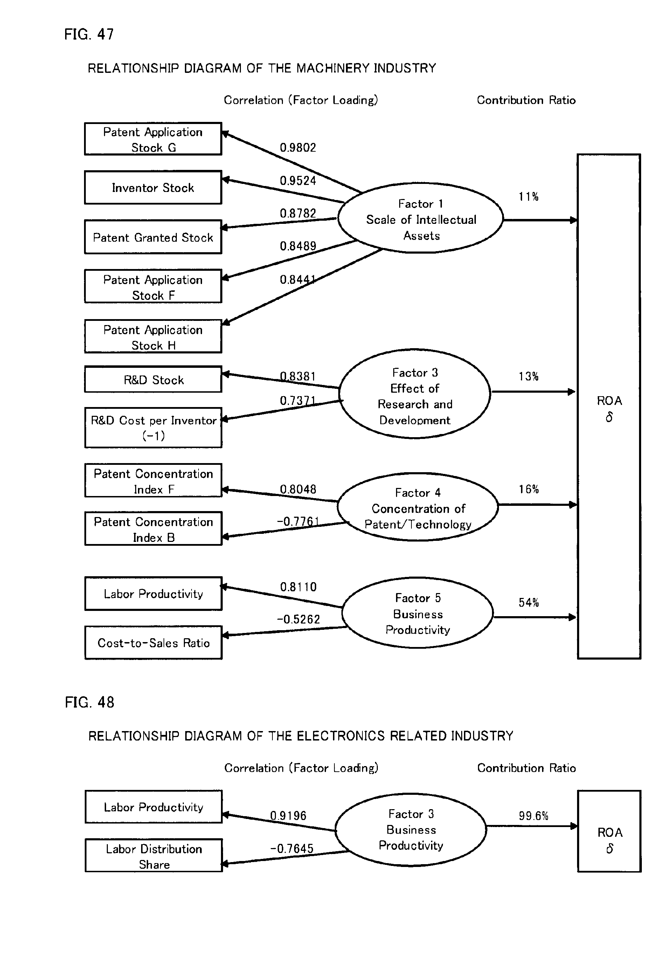

Fig. 47 is a relationship diagram showing an example of collectively displaying, in an easy-to-view manner, the comprehensive evaluation index, factor J, contribution ratio J, and factor loading C of each factor based on the analysis of the machinery industry (relationship diagram of the machinery industry).

Further, Fig. 48 is a relationship diagram showing an example of collectively displaying, in an easy-to-view manner, the comprehensive evaluation index, factor J, contribution ratio J, and factor loading C of each factor based on the analysis of the electronics related industry (relationship diagram of the electronics related industry).

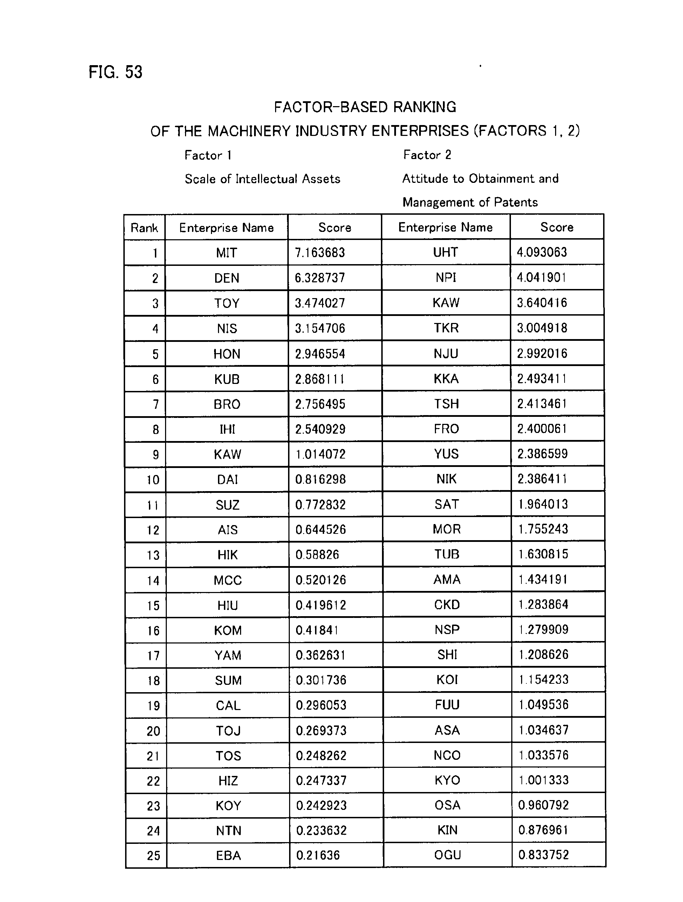

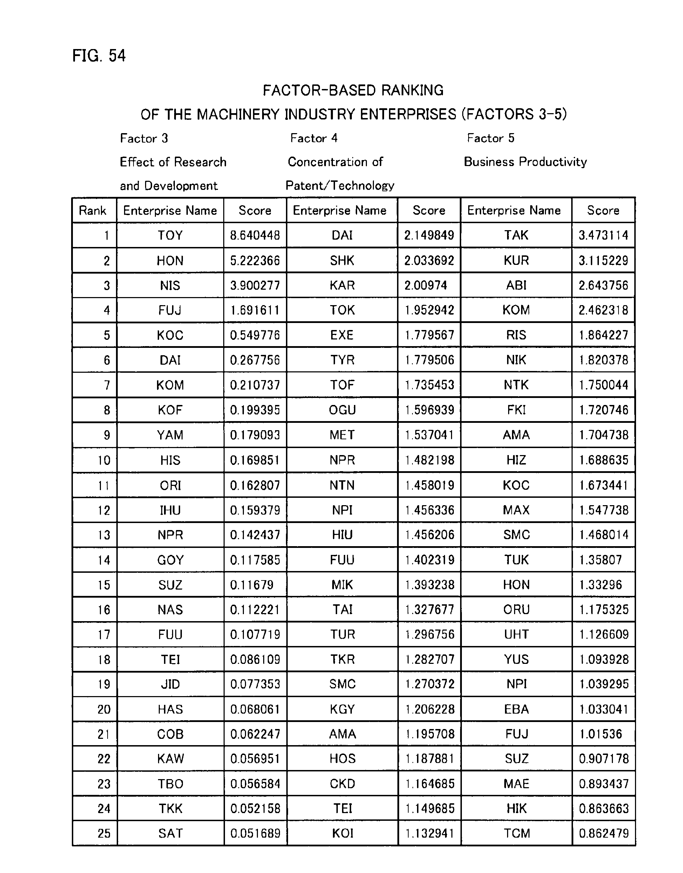

Fig. 53 and Fig. 54 are charts showing the scores per a factor calculated regarding each machinery enterprise (charts showing the factor-based ranking of the machinery industry enterprises).

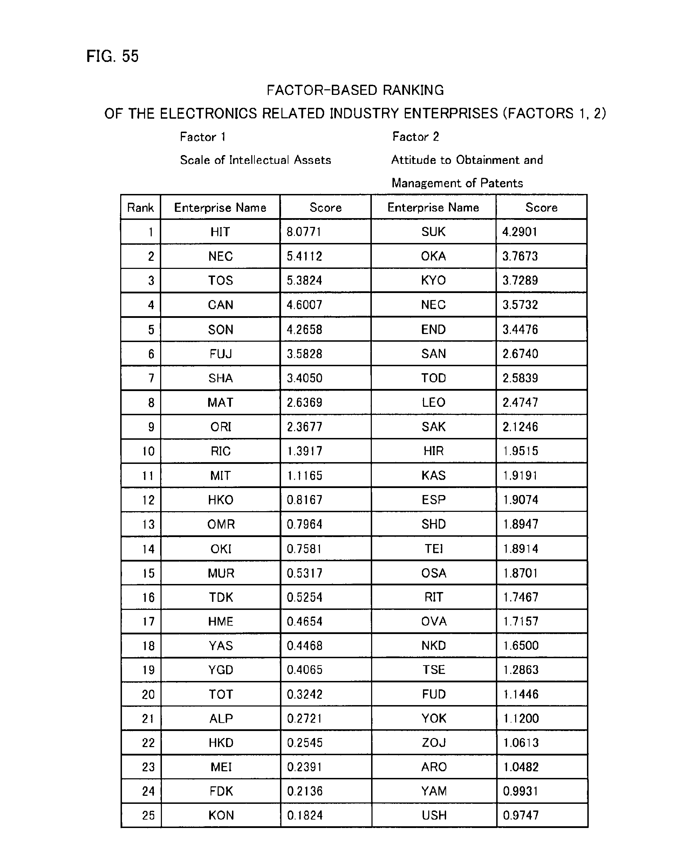

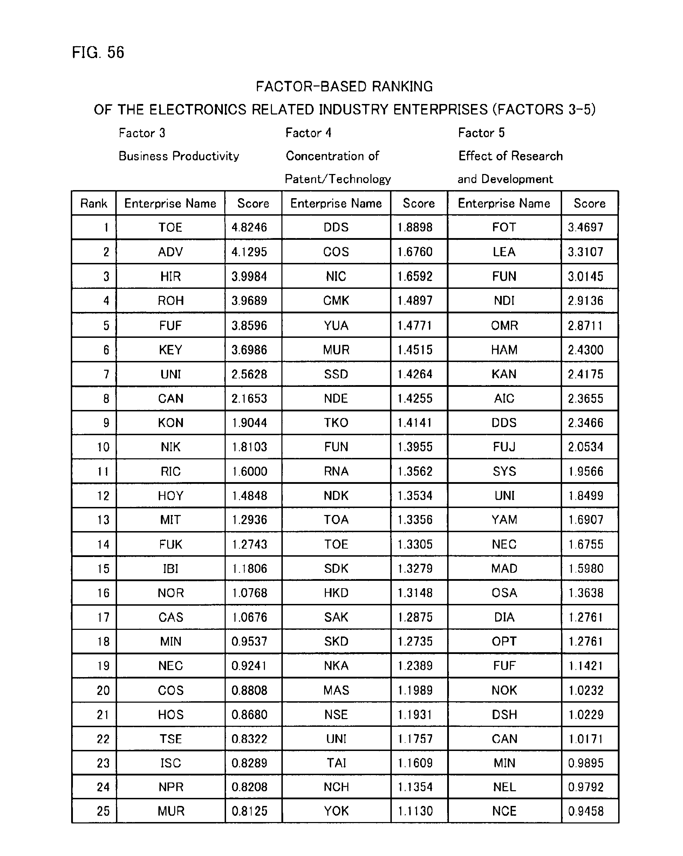

Fig. 55 and Fig. 56 are charts showing the scores per a factor calculated regarding each electronics related industry enterprise (charts showing the factor-based ranking of the electronics related industry enterprises).

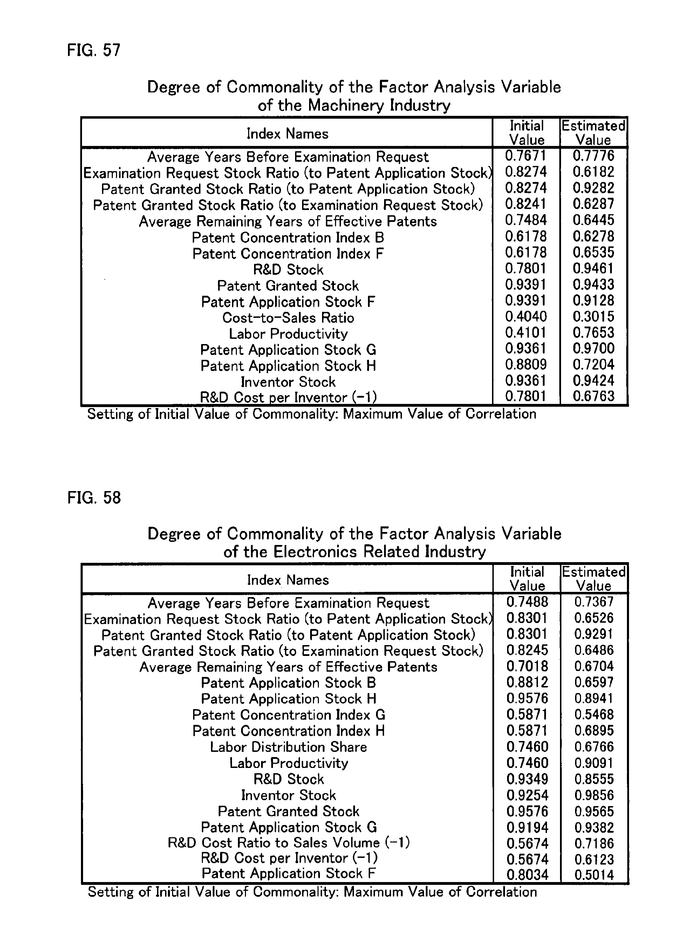

Fig. 57 and Fig. 58 are charts showing the degree of commonality of the indexes (factor analysis variables) of the machinery industry and the electronics related industry. It is possible to display these as options and notify the displayed information to the user.

Although the foregoing example showed a calculation example when the user selected medium classification, it is possible to execute the same calculation even in cases when the user selected minor classification or individually selected enterprise names at S107 shown in Fig. 3.

As described above, whether it is calculated by enterprise industry of major classification or by enterprise industry of medium classification, it is evident that the factors and indexes contributing to the respective industries will differ even when the contributing indexes upon unifying the target result index with the enterprise profit (ROAδ or the like) are obtained.

Further, by inputting the enterprise or industry to be researched or of one's interest, it is possible to know the indexes that are contributing to the profit related index. This will help in planning the trinity enterprise strategy.

INDUSTRIAL APPLICABILITY

According to the present invention, it is possible to represent the trinity enterprise strategy index and indexes contributing to the final evaluation index of the industry to which the enterprise belongs with simple and few enterprise indexes. Thus, it is possible to show the contribution of the enterprise index with a quantitative and objective numerical value.

By the user perusing the calculation results, the user will be able to know the status of a specified enterprise, and discover the points required in improving the enterprise profit and weaknesses to be overcome in the future. Thus, this can be used as reference materials upon planning strategies for the enterprise.

Further, according to the present invention, it will be possible to objectively determine what to emphasize in business in order to increase the final evaluation index.

Further, by inputting simple information such as the industry or enterprise name, or final evaluation index according to the displayed input screen, the user will be able to obtain necessary information.

For example, according to the calculation results of the composite engineering industry in the foregoing embodiments, as shown in Fig. 36, there are 6 enterprise indexes contributing to the ROAδ among the enterprise profits. With the enterprise index belonging to the factor 3 "productivity", the existence of "labor productivity" and "total factor productivity" working positively in the comprehensive evaluation index can be acknowledged, and the existence of "labor distribution ratio" working negatively against the comprehensive evaluation index can be acknowledged.

Further, as the enterprise indexes belonging to the factor 4 "concentration of patent/technology", the existence of "patent concentration degree" and "patent concentration degree B" working positively in the comprehensive evaluation index can be acknowledged, and, as the index belonging to the factor 5 "research and development", the existence of "research and development cost per inventor (-1)" working positively in the comprehensive evaluation index can be acknowledged.

Further, in the case of the material industry, as shown in Fig. 35, there are 6 enterprise indexes contributing to the ROAδ of the enterprise profits. With the enterprise index belonging to the factor 2 "productivity", the existence of "labor productivity" and "total factor productivity" working positively in the comprehensive evaluation index can be acknowledged, and the existence of "cost to sales ratio" and "labor distribution ratio" working negatively against the comprehensive evaluation index can be acknowledged.

Further, as the enterprise indexes belonging to the factor 4 "research and development", the existence of "equity to asset ratio" and "sales volume research and development cost ratio (-1)" working positively in the comprehensive evaluation index can be acknowledged. Like this, since it is possible to easily know which index is contributing to the profits, the existence and contribution ratio of enterprise indexes contributing to the profit ROAδ will become clear, and help in planning the trinity enterprise strategy.

Further, according to the present invention, it will be possible to know the enterprise ranking by industry, or by factor of each enterprise, and the position of the enterprise to be researched, or one's own company, in the industry. Further, since it will be possible to know the comprehensive ranking of enterprises, it will be possible to know the positioning of one's own company or the enterprise to be researched, and this will be useful when investing in stocks or the like.

According to the present invention, whether it is by enterprise industry of major classification or by enterprise industry of medium classification, it is evident that the factors and indexes contributing to the respective industries will differ even when seeking the contributing indexes upon unifying the target result index with the enterprise profit (ROAδ or the like).

According to the present invention, it has been discovered that enterprise evaluation should be performed upon selecting indexes through analysis by industry since the characteristics of enterprises of each industry are different. Therefore, from now, it will be possible to objectively and quantitatively capture the enterprise indexes contributing to the comprehensive evaluation index (criterion variable) for each enterprise group. By viewing the foregoing results, enterprises will be able to discover their weaknesses, and plan their future strategy.

**Claims**

1.   An enterprise evaluation device, comprising:

   enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;
   comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
   factor analysis means for extracting enterprise indexes by performing factor analysis using said acquired enterprise indexes;
   contribution ratio calculation means for calculating a contribution ratio J in relation to said comprehensive evaluation index by performing multiple regression analysis using said enterprise indexes and said comprehensive evaluation index; and
   output means for outputting each of said extracted enterprise indexes and contribution ratio J thereof, and said comprehensive evaluation index to display means, printing means, recording medium, or another telecommunications device via a communication line.

2.   An enterprise evaluation device, comprising:

   enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

factor analysis means for creating a factor C by performing factor analysis using said acquired enterprise indexes, and calculating a factor score C for each enterprise; and

output means for outputting said factor scores C and enterprise names corresponding thereto in the order of said factor score C to display means, printing means, recording medium, or another telecommunications device via a communication line.

3. An enterprise evaluation device, comprising:

enterprise index acquisition means for acquiring enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

contribution ratio calculation means for calculating a contribution ratio J in relation to a comprehensive evaluation index by performing multiple regression analysis using said acquired enterprise indexes and said comprehensive evaluation index; and

output means for outputting each enterprise index and contribution ratio J thereof, and said comprehensive evaluation index to display means, printing means, recording medium, or another telecommunications device via a communication line.

4. An enterprise evaluation device, comprising:

enterprise index acquisition means for acquiring, for a plurality of enterprises, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit;

principal component analysis means for calculating a principal component score of each enterprise by performing principal component analysis based on said enterprise indexes and said comprehensive evaluation index of each enterprise;

output means for outputting said principal component scores to display means, printing means, recording medium, or another telecommunications device via a communication line.

5. The enterprise evaluation device according to claim 4, further comprising:

factor analysis means for extracting factors C by performing factor analysis using said enterprise indexes acquired by said enterprise index acquisition means; and

contribution ratio calculation means for calculating a contribution ratio J of each factor C in relation to the comprehensive evaluation index by performing multiple regression analysis using said factors C of each enterprise extracted by said factor analysis means and said comprehensive evaluation index of each enterprise acquired by said comprehensive evaluation index acquisition means, and further selecting a factor J from said factors C based on said contribution ratio J;

wherein said principal component analysis means performs the principal component analysis based on said enterprise indexes configuring the factor J selected by said contribution ratio calculation means, and said comprehensive evaluation index.

6. A device for identifying factor and/or index contributing to enterprise evaluation, comprising:

enterprise index acquisition means for acquiring, for a plurality of enterprises, industry by industry, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit;

factor analysis means for extracting factors C by performing, industry by industry, factor analysis using said acquired enterprise indexes;

contribution ratio calculation means for calculating a contribution ratio J of each factor C in relation, to the comprehensive evaluation index by performing, industry by industry, multiple regression analysis using said factors C of each enterprise and said comprehensive evaluation index of each enterprise, and further selecting a factor J from said factors C based on said contribution ratio J; and

output means for outputting, industry by industry, said enterprise indexes configuring the factor J selected by said contribution ratio calculation means to display means, printing means, recording medium, or another telecommunications device via a communication line.

7. A device for identifying factor and/or index contributing to enterprise evaluation, comprising:

enterprise index acquisition means for acquiring, for each of a plurality of enterprises,

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

contribution ratio calculation means for calculating a contribution ratio J of each enterprise index in relation to said comprehensive evaluation index by performing multiple regression analysis using said acquired enterprise indexes and the comprehensive evaluation index; and

output means for outputting, industry by industry, each enterprise index and contribution ratio J thereof to display means, printing means, recording medium, or another telecommunications device via a communication line.

8. An enterprise evaluation program for causing a computer to execute:

a function of enterprise index acquisition for acquiring

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a function of factor analysis for extracting enterprise indexes by performing factor analysis using said acquired enterprise indexes;

a function of contribution ratio calculation for calculating a contribution ratio J in relation to said comprehensive evaluation index by performing multiple regression analysis using said enterprise indexes and said comprehensive evaluation index; and

a function of output for outputting said extracted each enterprise index and contribution ratio J thereof, and said comprehensive evaluation index to display means, printing means, recording medium, or another telecommunications device via a communication line.

9. An enterprise evaluation program for causing a computer to execute:

a function of enterprise index acquisition for acquiring

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of factor analysis for creating a factor C by performing factor analysis using said acquired enterprise indexes, and calculating a factor score C for each enterprise; and

a function of output for outputting said factor scores C and enterprise names corresponding thereto in the order of said factor score C to display means, printing means, recording medium, or another telecommunications device via a communication line.

**10.** An enterprise evaluation program for causing a computer to execute:

a function of enterprise index acquisition for acquiring

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a function of contribution ratio calculation for calculating a contribution ratio J in relation to a comprehensive evaluation index by performing multiple regression analysis using said acquired enterprise indexes and said comprehensive evaluation index; and

a function of output for outputting each enterprise index and contribution ratio J thereof, and said comprehensive evaluation index to display means, printing means, recording medium, or another telecommunications device via a communication line.

**11.** An enterprise evaluation program for causing a computer to execute:

a function of enterprise index acquisition for acquiring, for a plurality of enterprises,

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit;

a function of principal component analysis for calculating a principal component score of each enterprise by performing principal component analysis based on said enterprise indexes and said comprehensive evaluation index of each enterprise;

a function of output for outputting said principal component score to display means, printing means, recording medium, or another telecommunications device via a communication line.

**12.** The enterprise evaluation program according to claim 11, further causing the computer to execute:

a function of factor analysis for extracting factors C by performing factor analysis using said enterprise indexes acquired by said function of enterprise index acquisition; and

a function of contribution ratio calculation for calculating a contribution ratio J of each factor C in relation to the comprehensive evaluation index by performing multiple regression analysis using said factors C of each enterprise extracted by said function of factor analysis and said comprehensive evaluation index of each enterprise acquired by said function of comprehensive evaluation index acquisition, and further selecting a factor J from said factors C based on said contribution ratio J;

wherein said function of principal component analysis is to perform the principal component analysis based on said enterprise indexes configuring the factor J selected by said function of contribution ratio calculation, and said comprehensive evaluation index.

**13.** A program for identifying factor and/or index contributing to enterprise evaluation by causing a computer to execute:

a function of enterprise index acquisition for acquiring, for each of a plurality of enterprises, industry by industry, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit;

a function of factor analysis for extracting factors C by performing, industry by industry, factor analysis using said acquired enterprise indexes;

a function of contribution ratio calculation for calculating a contribution ratio J of each factor C in relation to the comprehensive evaluation index by performing, industry by industry, multiple regression analysis using said factors C of each enterprise and said comprehensive evaluation index of each enterprise, and further selecting a factor J from said factors C based on said contribution ratio J; and

a function of output for outputting, industry by industry, said enterprise indexes configuring the factor J selected by said function of contribution ratio calculation to display means, printing means, recording medium, or another telecommunications device via a communication line.

**14.** A program for identifying factor and/or index contributing to enterprise evaluation by causing a computer to execute:

a function of enterprise index acquisition for acquiring, for each of a plurality of enterprises, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a function of contribution ratio calculation for calculating a contribution ratio J of each enterprise index in relation to said comprehensive evaluation index by performing multiple regression analysis using said acquired enterprise indexes and the comprehensive evaluation index; and

a function of output for outputting, industry by industry, each enterprise index and contribution ratio J thereof to display means, printing means, recording medium, or another telecommunications device via a communication line.

**15.** An enterprise evaluation method, comprising:

a step of enterprise index acquisition for acquiring

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a step of factor analysis for extracting enterprise indexes by performing factor analysis using said acquired enterprise indexes;

a step of contribution ratio calculation for calculating a contribution ratio J in relation to said comprehensive evaluation index by performing multiple regression analysis using said enterprise indexes and said comprehensive evaluation index; and

a step of output for outputting said extracted each enterprise index and contribution ratio J thereof, and said comprehensive evaluation index to display means, printing means, recording medium, or another telecommunications device via a communication line.

**16.** An enterprise evaluation method, comprising:

a step of enterprise index acquisition for acquiring

enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of factor analysis for creating a factor C by performing factor analysis using said acquired enterprise indexes, and calculating a factor score C for each enterprise; and

a step of output for outputting said factor scores C and enterprise names corresponding thereto in the order of said factor score C to display means, printing means, recording medium, or another telecommunications device via a communication line.

**17.** An enterprise evaluation method, comprising:

a step of enterprise index acquisition for acquiring
enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a step of contribution ratio calculation for calculating a contribution ratio J in relation to a comprehensive evaluation index by performing multiple regression analysis using said acquired enterprise indexes and said comprehensive evaluation index; and

a step of output for outputting each enterprise index and contribution ratio J thereof, and said comprehensive evaluation index to display means, printing means, recording medium, or another telecommunications device via a communication line.

**18.** An enterprise evaluation method, comprising:

a step of enterprise index acquisition for acquiring, for a plurality of enterprises, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit;

a step of principal component analysis for calculating a principal component score of each enterprise by performing principal component analysis based on said enterprise indexes and said comprehensive evaluation index of each enterprise;

a step of output for outputting said principal component score to display means, printing means, recording medium, or another telecommunications device via a communication line.

**19.** The enterprise evaluation method according to claim 18, further comprising:

a step of factor analysis for extracting factors C by performing factor analysis using said enterprise indexes acquired by said step of enterprise index acquisition; and

a step of contribution ratio calculation for calculating a contribution ratio J of each factor C in relation to the comprehensive evaluation index by performing multiple regression analysis using said factors C of each enterprise extracted by said step of factor analysis and said comprehensive evaluation index of each enterprise acquired by said step of comprehensive evaluation index acquisition, and further selecting a factor J from said factors C based on said contribution ratio J;

wherein said step of principal component analysis is to perform the principal component analysis based on said enterprise indexes configuring the factor J selected by said step of contribution ratio calculation, and said comprehensive evaluation index.

**20.** A method for identifying factor and/or index contributing to enterprise evaluation, comprising:

a step of enterprise index acquisition for acquiring, for each of a plurality of enterprises, industry by industry, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit;

a step of factor analysis for extracting factors C by performing, industry by industry, factor analysis using said acquired enterprise indexes;

a step of contribution ratio calculation for calculating a contribution ratio J of each factor C in relation to the comprehensive evaluation index by performing, industry by industry, multiple regression analysis using said factors C of each enterprise and said comprehensive evaluation index of each enterprise, and further selecting a factor J from said factors C based on said contribution ratio J; and

a step of output for outputting, industry by industry, said enterprise indexes configuring the factor J selected by said step of contribution ratio calculation to display means, printing means, recording medium, or another telecommunications device via a communication line.

**21.** A method for identifying factor and/or index contributing to enterprise evaluation, comprising:

a step of enterprise index acquisition for acquiring, for each of a plurality of enterprises, enterprise indexes such as an enterprise investment related index such as capital investment amount and investment trend index; a management-finance analysis related index such as capital investment efficiency, labor productivity, total factor productivity, and cost to sales ratio; a research and development related index such as research and development cost, the number of inventors, inventor ratio, and research and development cost per an inventor; a research and development efficiency related index such as research and development cost ratio, research and development efficiency, and patent application productivity; a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;
a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
a step of contribution ratio calculation for calculating a contribution ratio J of each enterprise index in relation to said comprehensive evaluation index by performing multiple regression analysis using said acquired enterprise indexes and the comprehensive evaluation index; and
a step of output for outputting, industry by industry, each enterprise index and contribution ratio J thereof to display means, printing means, recording medium, or another telecommunications device via a communication line.

**Amended claims under Art. 19.1 PCT**

**1.** (amended) An enterprise evaluation device, comprising:

enterprise index acquisition means for acquiring (a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;
comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
factor analysis means for extracting enterprise indexes by performing factor analysis using said acquired enterprise indexes;
contribution ratio calculation means for calculating a contribution ratio J in relation to said comprehensive evaluation index by performing multiple regression analysis using said enterprise indexes and said comprehensive evaluation index; and
output means for outputting each of said extracted enterprise indexes and contribution ratio J thereof, and said comprehensive evaluation index to display means, printing means, recording medium, or another telecommunications device via a communication line.

**2.** (amended) An enterprise evaluation device, comprising:

enterprise index acquisition means for acquiring (a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;
factor analysis means for creating a factor C by performing factor analysis using said acquired enterprise indexes, and calculating a factor score C for each enterprise; and
output means for outputting said factor scores C and enterprise names corresponding thereto in the order of said factor score C to display means, printing means, recording medium, or another telecommunications device via a communication line.

**3.** (amended) An enterprise evaluation device, comprising:

enterprise index acquisition means for acquiring (a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;
comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
contribution ratio calculation means for calculating a contribution ratio J in relation to a comprehensive evaluation index by performing multiple regression analysis using said acquired enterprise indexes and said comprehensive evaluation index; and
output means for outputting each enterprise index and contribution ratio J thereof, and said comprehensive evaluation index to display means, printing means, recording medium, or another telecommunications device via a communication line.

**4.** (amended) An enterprise evaluation device, comprising:

enterprise index acquisition means for acquiring, for a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit;
principal component analysis means for calculating a principal component score of each enterprise by performing principal component analysis based on said enterprise indexes and said comprehensive evaluation index of each enterprise;
output means for outputting said principal component scores to display means, printing means, recording medium, or another telecommunications device via a communication line.

**5.** The enterprise evaluation device according to claim 4, further comprising:

factor analysis means for extracting factors C by performing factor analysis using said enterprise indexes acquired by said enterprise index acquisition means; and
contribution ratio calculation means for calculating a contribution ratio J of each factor C in relation to the comprehensive evaluation index by performing multiple regression analysis using said factors C of each enterprise extracted by said factor analysis means and said comprehensive evaluation index of each enterprise acquired by said comprehensive evaluation index acquisition means, and further selecting a factor J from said factors C based on said contribution ratio J;

wherein said principal component analysis means performs the principal component analysis based on said enterprise indexes configuring the factor J selected by said contribution ratio calculation means, and said comprehensive evaluation index.

**6.** (amended) A device for identifying factor and/or index contributing to enterprise evaluation, comprising:

enterprise index acquisition means for acquiring, for a plurality of enterprises, industry by industry,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit; factor analysis means for extracting factors C by performing, industry by industry, factor analysis using said acquired enterprise indexes;

contribution ratio calculation means for calculating a contribution ratio J of each factor C in relation to the comprehensive evaluation index by performing, industry by industry, multiple regression analysis using said factors C of each enterprise and said comprehensive evaluation index of each enterprise, and further selecting a factor J from said factors C based on said contribution ratio J; and

output means for outputting, industry by industry, said enterprise indexes configuring the factor J selected by said contribution ratio calculation means to display means, printing means, recording medium, or another telecommunications device via a communication line.

**7.** (amended) A device for identifying factor and/or index contributing to enterprise evaluation, comprising:

enterprise index acquisition means for acquiring, for each of a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

comprehensive evaluation index acquisition means for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

contribution ratio calculation means for calculating a contribution ratio J of each enterprise index in relation to said comprehensive evaluation index by performing multiple regression analysis using said acquired enterprise indexes and the comprehensive evaluation index; and

output means for outputting, industry by industry, each enterprise index and contribution ratio J thereof to display means, printing means, recording medium, or another telecommunications device via a communication line.

**8.** (amended) An enterprise evaluation program for causing a computer to execute:

a function of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
a function of factor analysis for extracting enterprise indexes by performing factor analysis using said acquired enterprise indexes;
a function of contribution ratio calculation for calculating a contribution ratio J in relation to said comprehensive evaluation index by performing multiple regression analysis using said enterprise indexes and said comprehensive evaluation index; and
a function of output for outputting said extracted each enterprise index and contribution ratio J thereof, and said comprehensive evaluation index to display means, printing means, recording medium, or another telecommunications device via a communication line.

**9.** (amended) An enterprise evaluation program for causing a computer to execute:

a function of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of factor analysis for creating a factor C by performing factor analysis using said acquired enterprise indexes, and calculating a factor score C for each enterprise; and
a function of output for outputting said factor scores C and enterprise names corresponding thereto in the order of said factor score C to display means, printing means, recording medium, or another telecommunications device via a communication line.

**10.** (amended) An enterprise evaluation program for causing a computer to execute:

a function of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and (c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
a function of contribution ratio calculation for calculating a contribution ratio J in relation to a comprehensive evaluation index by performing multiple regression analysis using said acquired enterprise indexes and said comprehensive evaluation index; and
a function of output for outputting each enterprise index and contribution ratio J thereof, and said comprehensive evaluation index to display means, printing means, recording medium, or another telecommunications device via a communication line.

**11.** (amended) An enterprise evaluation program for causing a computer to execute:

a function of enterprise index acquisition for acquiring, for a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit;
a function of principal component analysis for calculating a principal component score of each enterprise by performing principal component analysis based on said enterprise indexes and said comprehensive evaluation index of each enterprise;
a function of output for outputting said principal component score to display means, printing means, recording medium, or another telecommunications device via a communication line.

**12.** The enterprise evaluation program according to claim 11, further causing the computer to execute:

a function of factor analysis for extracting factors C by performing factor analysis using said enterprise indexes acquired by said function of enterprise index acquisition; and
a function of contribution ratio calculation for calculating a contribution ratio J of each factor C in relation to the comprehensive evaluation index by performing multiple regression analysis using said factors C of each enterprise extracted by said function of factor analysis and said comprehensive evaluation index of each enterprise acquired by said function of comprehensive evaluation index acquisition, and further selecting a factor J from said factors C based on said contribution ratio J;

wherein said function of principal component analysis is to perform the principal component analysis based on said enterprise indexes configuring the factor J selected by said function of contribution ratio calculation, and said comprehensive evaluation index.

**13.** (amended) A program for identifying factor and/or index contributing to enterprise evaluation by causing a computer to execute:

a function of enterprise index acquisition for acquiring, for each of a plurality of enterprises, industry by industry,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit;

a function of factor analysis for extracting factors C by performing, industry by industry, factor analysis using said acquired enterprise indexes;

a function of contribution ratio calculation for calculating a contribution ratio J of each factor C in relation to the comprehensive evaluation index by performing, industry by industry, multiple regression analysis using said factors C of each enterprise and said comprehensive evaluation index of each enterprise, and further selecting a factor J from said factors C based on said contribution ratio J; and

a function of output for outputting, industry by industry, said enterprise indexes configuring the factor J selected by said function of contribution ratio calculation to display means, printing means, recording medium, or another telecommunications device via a communication line.

**14.** (amended) A program for identifying factor and/or index contributing to enterprise evaluation by causing a computer to execute:

a function of enterprise index acquisition for acquiring, for each of a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application;

an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a function of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a function of contribution ratio calculation for calculating a contribution ratio J of each enterprise index in relation to said comprehensive evaluation index by performing multiple regression analysis using said acquired enterprise indexes and the comprehensive evaluation index; and

a function of output for outputting, industry by industry, each enterprise index and contribution ratio J thereof to display means, printing means, recording medium, or another telecommunications device via a communication line.

**15.** (amended) An enterprise evaluation method, comprising:

a step of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;

(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and

(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a step of factor analysis for extracting enterprise indexes by performing factor analysis using said acquired enterprise indexes;

a step of contribution ratio calculation for calculating a contribution ratio J in relation to said comprehensive evaluation index by performing multiple regression analysis using said enterprise indexes and said comprehensive evaluation index; and

a step of output for outputting said extracted each enterprise index and contribution ratio J thereof, and said comprehensive evaluation index to display means, printing means, recording medium, or another telecommunications device via a communication line.

**16.** (amended) An enterprise evaluation method, comprising:

a step of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;

(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of factor analysis for creating a factor C by performing factor analysis using said acquired enterprise indexes, and calculating a factor score C for each enterprise; and
a step of output for outputting said factor scores C and enterprise names corresponding thereto in the order of said factor score C to display means, printing means, recording medium, or another telecommunications device via a communication line.

**17.** (amended) An enterprise evaluation method, comprising:

a step of enterprise index acquisition for acquiring

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and
(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;
a step of contribution ratio calculation for calculating a contribution ratio J in relation to a comprehensive evaluation index by performing multiple regression analysis using said acquired enterprise indexes and said comprehensive evaluation index; and
a step of output for outputting each enterprise index and contribution ratio J thereof, and said comprehensive evaluation index to display means, printing means, recording medium, or another telecommunications device via a communication line.

**18.** (amended) An enterprise evaluation method, comprising:

a step of enterprise index acquisition for acquiring, for a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;
(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and (c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring, for each of said plurality of enterprises, a comprehensive evaluation index such as a profit related index such as sales volume, patent and other royalty income, and operating profit; an excess profit related index such as excess value added amount and excess operating profit; or a market evaluation related index such as expected intellectual property profit; a step of principal component analysis for calculating a principal component score of each enterprise by performing principal component analysis based on said enterprise indexes and said comprehensive evaluation index of each enterprise; a step of output for outputting said principal component score to display means, printing means, recording medium, or another telecommunications device via a communication line.

**19.** The enterprise evaluation method according to claim 18, further comprising:

a step of factor analysis for extracting factors C by performing factor analysis using said enterprise indexes acquired by said step of enterprise index acquisition; and a step of contribution ratio calculation for calculating a contribution ratio J of each factor C in relation to the comprehensive evaluation index by performing multiple regression analysis using said factors C of each enterprise extracted by said step of factor analysis and said comprehensive evaluation index of each enterprise acquired by said step of comprehensive evaluation index acquisition, and further selecting a factor J from said factors C based on said contribution ratio J;

wherein said step of principal component analysis is to perform the principal component analysis based on said enterprise indexes configuring the factor J selected by said step of contribution ratio calculation, and said comprehensive evaluation index.

**20.** (amended) A method for identifying factor and/or index contributing to enterprise evaluation, comprising:

a step of enterprise index acquisition for acquiring, for each of a plurality of enterprises, industry by industry,

(a) a management-finance related enterprise index including an enterprise investment related index such as capital investment amount and investment trend index; or a management-finance analysis related index such as capital investment efficiency, labor productivity, total factor productivity, and cost to sales ratio; (b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and (c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring, for each of said plurality of enterprises, industry by industry, a comprehensive evaluation index such as a profit related index such as sales volume, patent and other royalty income, and operating profit; an excess profit related index such as excess value added amount and excess operating profit; or a market evaluation related index such as expected intellectual property profit;

a step of factor analysis for extracting factors C by performing, industry by industry, factor analysis using said acquired enterprise indexes;

a step of contribution ratio calculation for calculating a contribution ratio J of each factor C in relation to the comprehensive evaluation index by performing, industry by industry, multiple regression analysis using said factors C of each enterprise and said comprehensive evaluation index of each enterprise, and further selecting a factor J from said factors C based on said contribution ratio J; and

a step of output for outputting, industry by industry, said enterprise indexes configuring the factor J selected by said step of contribution ratio calculation to display means, printing means, recording medium, or another telecommunications device via a communication line.

**21.** (amended) A method for identifying factor and/or index contributing to enterprise evaluation, comprising:

a step of enterprise index acquisition for acquiring, for each of a plurality of enterprises,

(a) a management-finance related enterprise index including an enterprise investment related index such as capital investment amount and investment trend index; or a management-finance analysis related index such as capital investment efficiency, labor productivity, total factor productivity, and cost to sales ratio;

(b) a research and development related enterprise index including a research and development related index such as research and development cost, the number of inventors, inventor ratio, and research and development cost per an inventor; or a research and development efficiency related index such as research and development cost ratio, research and development efficiency, and patent application productivity; and

(c) an intellectual property related enterprise index including a patent application related index such as the number of patent applications, the number of claims filed, and the number of claims filed per an application; an examination request related index such as the number of examination requests, average years before examination request, and examination request ratio; a patent obtainment related index such as the number of patents granted, the number of claims granted, and the number of patents granted per an inventor; a patent stock related index such as the total number of effective patents and total effective patent remaining ratio; a patent concentration degree related index such as the number of claims filed share and patent concentration degree; or a patent profitability related index;

a step of comprehensive evaluation index acquisition for acquiring a comprehensive evaluation index such as a profit related index such as sales volume, patent and other royalty income, and operating profit; an excess profit related index such as excess value added amount and excess operating profit; or a market evaluation related index such as expected intellectual property profit;

a step of contribution ratio calculation for calculating a contribution ratio J of each enterprise index in relation to said comprehensive evaluation index by performing multiple regression analysis using said acquired enterprise indexes and the comprehensive evaluation index; and

a step of output for outputting, industry by industry, each enterprise index and contribution ratio J thereof to display means, printing means, recording medium, or another telecommunications device via a communication line.

**Statement under Art. 19.1 PCT**

1. This amendment clarifies, among the alternative compositions in each of claims 1-4, 6-11, 13-18, 20 and 21, by

(a) giving name "management-finance related enterprise index" to the "enterprise investment related index" and the "management-finance analysis related index",

(b) giving name "research and development related enterprise index" to the "research and development related index" and the "research and development efficiency related index", and

(c) giving name "intellectual property related enterprise index" to the "patent application related index", the "examination request related index", the "patent acquisition related index", the "patent stock related index", the "patent concentration degree related index" and the "patent profitability related index",

that these three types of enterprise indexes of (a) "management-finance related enterprise index", (b) "research and development related enterprise index" and (c) "intellectual property related enterprise index" are all acquired by the "enterprise index acquisition means", the "function of enterprise index acquisition" or the "step of enterprise index acquisition".

2. The amended claims 1-4, 6-11, 13-18, 20 and 21 acquires the three types of enterprise indexes of (a) "management-finance related enterprise index", (b) "research and development related enterprise index" and (c) "intellectual property related enterprise index" having different features from each other and analyses in a bundle, thereby enables to comprehensively evaluate the true enterprise value including intangible assets such as patents or intellectual properties. According to the amended claims, the multiple regression analysis, for example, enables to calculate and identify the factor and/or index contributing to enterprise evaluation from both of the tangible assets and the intangible assets. Further, the factor analysis or the principal component analysis enables to calculate the enterprise score in consideration to both of the tangible assets and the intangible assets.

As noted above, this amendment clarifies the original concept of the present application to enable the enterprise evaluation of triunity management of business strategy, research and development strategy and intellectual property strategy of enterprise.

FIG. 1

DATABASE
(a) MANAGEMENT-
    FINANCE INFORMATION
(b) PATENT INFORMATION
(c) MARKET VALUE
    INFORMATION
(d) TECHNICAL
    DOCUMENTS

20

30

COMMUNICATION
NETWORK

10

FIG. 2

364

365 TRANSMISSION/
RECEPTION
MEANS

30

370 INPUT MEANS
(LCD DISPLAY)

371 INPUT I/F

372 DISPLAY MEANS
(CRT, etc)

373 DISPLAY I/F

32 PRINTER

374 PRINTER I/F

399

380 CPU
(INFORMATION
PROCESSING
MEANS)

381 MEMORY

385 RECORDING
MEANS I/F

384 HDD
(RECORDING
MEANS)

379 RECORDING
MEDIUM I/F

378 RECORDING
MEDIUM
MOUNTING UNIT

RECORDING
MEDIUM

377

390 CALENDAR
CLOCK

FIG. 3

| OPERATOR | ENTERPRISE VALUE EVALUATION DEVICE |

**S101** Enterprise evaluation start input

**S202** Display search screen

Classification data by industry name or enterprise name (classify enterprises to major classification, medium classification, minor classification)

**S103** Select industry list (enterprise names attached) or industry list (enterprise names in alphabetical order)

**S204** Display enterprise selection screen

Industry enterprise database

**S105** Select industry name or enterprise name

**S206** Display search screen

**S107** Select comprehensive evaluation index list

**S208** Display comprehensive evaluation index selection screen

Comprehensive evaluation index database

**S109** Select necessary index from comprehensive evaluation indexes

**S210** Display search screen

Comprehensive evaluation index list data (sales volume, value added amount, ROA, etc.)

**S111** Select screen from screen display list

**S212** Factor analysis processing
· Designate factors and indexes
· Calculate correlation matrix, commonality, factor loading, eigenvalue, cumulative contribution ratio
· Extract deeply related indexes (reduce the number of indexes)
· Calculate ranking and scores of enterprises for each factor

Enterprise index data – Numerical data of business/profit related index, research and development related index, intellectual property related index

**S213** Multiple regression analysis processing
· Calculate contribution ratio (and significance) of each factor to the comprehensive evaluation index through multiple regression analysis

Recording device for index data

**S214** Principal component analysis processing
· Select the factors (significant factors in the multiple regression analysis) and the comprehensive evaluation index
· Incorporate indexes of the significant factors
· Calculate comprehensive evaluation score of enterprise by performing principal component analysis

Information for factors
– name of factor
– indexes contained in factor
– definition of factor

**S215** Screen display determination processing

Store to database

| END | END |

FIG. 4

EP 1 783 624 A1

TRINITY ENTERPRISE VALUE EVALUATION FLOW

| Select enterprise or industry | | (Index to enterprise – select industry from enterprise) (ex. in alphabetical order) or (Index to industry – enterprise names are described for each industry) (ex. in alphabetical order) |
| set | |
| back | |

| Select comprehensive evaluation index | | (Profit related index is preferable for the comprehensive evaluation index) |
| set | |
| back | |

| A correlation diagram is displayed (on screen) | |
| back | |
| | |
| option | Result of factor analysis |
| | Correlation matrix table |
| | Indexes and factor loading, eigen value, cumulative contribution ratio |
| | Name and definition of factor |
| | Result of multiple regression analysis |
| | Enterprise ranking | Factor 1 |
| | | Factor 2 |
| | | – – – |
| | | Factor n |
| | | Overall ranking |

FIG. 5

SEARCH SCREEN

Select industry name from the list

(Industry names)

Selection is available from either one

Industry list (enterprise names attached)

Industry list (in alphabetical order of enterprise names)

Select comprehensive evaluation index from the list

(Comprehensive evaluation indexes)

Comprehensive evaluation index list

Select display screen from the options

(Select screen)

Display screen list

Search

Back

FIG. 6

TRINITY ENTERPRISE EVALUATION MENU SCREEN (INDUSTRY SELECTION SCREEN)

EP 1 783 624 A1

| Major classification | Medium classification | Minor classification | Enterprise name (in alphabetical order in each industry) |
|---|---|---|---|
| Raw material | Metal | Steel, nonferrous | XXX Steel, XXX Material, XXX Iron Works, – – – |
| | | Metal products | XXX, XXX, XXX Bridge, XXX, – – – |
| | | Mining | XXX Coal Mining, XXX Iron Mining, XXX Mine, – – – |
| | Organic material | Fabric, pulp & paper | XXX Manufacturing, XXX Paper, XXX, WXX, – – – |
| | | Oils & rubbers | XXX Oil, XXX, XXX, YXX Rubber, – – – |
| Material | Chemicals | Chemical | XXX, XXX Chemical, XXX, LXX, – – – |
| | | Pharmaceutical | XXX, XXX Ferment, XXX Pharmaceutical, – – – |
| | | Ceramic | XXX Grass, XXX Cement, NXX Co., Ltd., – – – |
| Composite engineering | Machinery | Machines & shipbuilding | AXX Engineering, XXX, XXX Shipbuilding, RXX, – – – |
| | | Automobiles | XXX Motors, XXX Motor, XXX Motor, – – – |
| | | Transport equipment | AXX Manufacturing, XXX, XXX Factory, XXX Engine, – – – |
| | Electronics related | Electrical equipment | XXX, XXX, XXX Ceramics, RXX, – – – |
| | | Precision equipment | XXX, XXX, XXX, XXX Watch Manufacturing, – – – |
| Other manufacturing | Consumer products | Food | XXX Beer, XXX, XXX Tobacco Industry, – – – |
| | | Fishery/agriculture/forestry | XXX Seeding, XXX, XXX Seeds, XXX, – – – |
| | | Electricity & gas | XXX Gas, XXX Gas, XXX Electric Power, XXX Gas, – – – |
| | Technical for consumers | Construction | XXX, XXX, XXX Construction, XXX Construction, – – – |
| | | Information/communication | XX Software, XXX, XX Research Institute, XX Information System, |
| | | Other products | XXX, XXX Factory, XXX Musical Instruments, YXX, – – – |
| Non-manufacturing | Trade & Finance | Trade | XXX, XXX, XXX, XXX Electric, – – – |
| | | Finance & insurance | XXX, XXX Securities, XXX, XXX Bank, – – – |
| | Services | Service | XXX, XXX, NXX, XXX, – – – |
| | | Land, marine, air transport | XX Electric Railway, XX Shipping, XX Airways, XX Mail Ship, ――― |
| | | Real estate, warehousing | XX Real Estate, XX Warehousing, XX Real Estate, XX Estate, ――― |

FIG. 7

EP 1 783 624 A1

66

TRINITY ENTERPRISE EVALUATION MENU SCREEN (INDUSTRY SELECTION SCREEN)

| Major classification | Medium classification | Minor classification | Enterprise name |
|---|---|---|---|
| Raw material | Metal | Steel, nonferrous | XXX Steel, XXX Material, XXX Iron Works, − − − |
| | | Metal products | XXX, XXX, XXX Bridge, XXX, − − − |
| | | Mining | XXX Coal Mining, XXX Iron Mining, XXX Mine, − − − |
| | Organic material | Fabric, pulp & paper | XXX Manufacturing, XXX Paper, XXX, WXX, − − − |
| | | Oils & rubbers | XXX Oil, XXX, XXX, YXX Rubber, − − − |
| Material | Chemicals | Chemical | XXX, XXX Chemical, XXX, LXX, − − − |
| | | Pharmaceutical | XXX, XXX Ferment, XXX Pharmaceutical, − − − |
| | | Ceramic | XXX Grass, XXX Cement, NXX Co., Ltd., − − − |
| Composite engineering | Machinery | Machines & shipbuilding | AXX Engineering, XXX, XXX Shipbuilding, RXX, − − − |
| | | Automobiles | XXX Motors, XXX Motor, XXX Motor, − − − |
| | | Transport equipment | AXX Manufacturing, XXX, XXX Factory, XXX Engine, − − − |
| | Electronics related | Electrical equipment | XXX, XXX, XXX Ceramics, RXX, − − − |
| | | Precision equipment | XXX, XXX, XXX, XXX Watch Manufacturing, − − − |
| Other manufacturing | Consumer products | Food | XXX Beer, XXX, XXX Tobacco Industry, − − − |
| | | Fishery/agriculture/forestry | XXX Seeding, XXX, XXX Seeds, XXX, − − − |
| | | Electricity & gas | XXX Gas, XXX Gas, XXX Electric Power, XXX Gas, − − − |
| | Technical for consumers | Construction | XXX, XXX, XXX Construction, XXX Construction, − − − |
| | | Information/communication | XX Software, XXX, XX Research Institute, XX Information System, |
| | | Other products | XXX, XXX Factory, XXX Musical Instruments, YXX, − − − |
| Non-manufacturing | Trade & Finance | Trade | XXX, XXX, XXX, XXX Electric, − − − |
| | | Finance & insurance | XXX, XXX Securities, XXX, XXX Bank, − − − |
| | Services | Service | XXX, XXX, NXX, XXX, − − − |
| | | Land, marine, air transport | XX Electric Railway, XX Shipping, XX Airways, XX Mail Ship, −−− |
| | | Real estate, warehousing | XX Real Estate, XX Warehousing, XX Real Estate, XX Estate, −−− |

FIG. 8

TRINITY ENTERPRISE EVALUATION MENU SCREEN
(IN ALPHABETICAL ORDER: ENTERPRISE INDUSTRY INDEX SCREEN)

| Enterprise name | Minor classification | Medium classification | Major classification |
|---|---|---|---|
| (A, O) | | | |
| AXX Manufacturing | Transport equipment | Machinery | Composite engineering |
| AXX Precision | Transport equipment | Machinery | Composite engineering |
| AXX Engineering | Machines & shipbuilding | Machinery | Composite engineering |
| – – – | | | |
| OXX | Machines & shipbuilding | Machinery | Composite engineering |
| (K, C) | | | |
| KXX | Chemical | Chemicals | Material |
| KXX Manufacturing | Transport equipment | Machinery | Composite engineering |
| CXX Calculator | Electrical equipment | Electronics related | Composite engineering |
| – – – | | | |
| CXX | Other products | Technical for consumers | Other manufacturing |
| (S) | | | |
| SXX | Machines & shipbuilding | Machinery | Composite engineering |
| SXX | Machines & shipbuilding | Machinery | Composite engineering |
| SXX | Pharmaceutical | Chemicals | Material |
| – – – | | | |
| SXX | Electrical equipment | Electronics related | Composite engineering |
| (T, D) | | | |
| DXX Pharmacy | Chemical | Chemicals | Material |
| DXX Pharmaceutical | Pharmaceutical | Chemicals | Material |
| DXX Paper | Fabric, pulp & paper | Organic material | Raw material |
| – – – | | | |
| TXX Body | Transport equipment | Machinery | Composite engineering |
| (N) | | | |
| NXX Radio | Electrical equipment | Electronics related | Composite engineering |
| NXX | Transport equipment | Machinery | Composite engineering |
| NXX | Service | Services | Non-manufacturing |
| – – – | | | |
| NXX Co., Ltd. | Ceramic | Chemicals | Material |
| (H, P) | | | |
| PXX | Electrical equipment | Electronics related | Composite engineering |
| PXX | Metal products | Metal | Raw material |
| PXX Home | Construction | Technical for consumers | Other manufacturing |
| – – – | | | |
| HXX Motor | Automobiles | Machinery | Composite engineering |
| (M) | | | |
| MXX Construction | Construction | Technical for consumers | Other manufacturing |
| MXX | Machines & shipbuilding | Machinery | Composite engineering |
| MXX Electric | Electrical equipment | Electronics related | Composite engineering |
| – – – | | | |
| MXX | Electrical equipment | Electronics related | Composite engineering |
| (Y) | | | |
| YXX Industry | Transport equipment | Machinery | Composite engineering |
| YXX Electric | Electrical equipment | Electronics related | Composite engineering |
| – – – | | | |
| YXX Rubber | Oils & rubbers | Organic material | Raw material |
| (R, L) | | | |
| LXX | Chemical | Chemicals | Material |
| RXX | Machines & shipbuilding | Machinery | Composite engineering |
| – – – | | | |
| RXX | Electrical equipment | Electronics related | Composite engineering |
| (W, Y) | | | |
| YXX | Other products | Technical for consumers | Other manufacturing |
| – – – | | | |
| WXX | Fabric, pulp & paper | Organic material | Raw material |

FIG. 9

TRINITY ENTERPRISE EVALUATION MENU SCREEN
(IN ALPHABETICAL ORDER: ENTERPRISE INDUSTRY INDEX SCREEN)

| Enterprise name | Minor classification | Medium classification | Major classification |
|---|---|---|---|
| (A, O) | | | |
| AXX Manufacturing | Transport equipment | Machinery | Composite engineering |
| AXX Precision | Transport equipment | Machinery | Composite engineering |
| AXX Engineering | Machines & shipbuilding | Machinery | Composite engineering |
| - - - | | | |
| OXX | Machines & shipbuilding | Machinery | Composite engineering |
| (K, C) | | | |
| KXX | Chemical | Chemicals | Material |
| KXX Manufacturing | Transport equipment | Machinery | Composite engineering |
| CXX Calculator | Electrical equipment | Electronics related | Composite engineering |
| - - - | | | |
| CXX | Other products | Technical for consumers | Other manufacturing |
| (S) | | | |
| SXX | Machines & shipbuilding | Machinery | Composite engineering |
| SXX | Machines & shipbuilding | Machinery | Composite engineering |
| SXX | Pharmaceutical | Chemicals | Material |
| - - - | | | |
| SXX | Electrical equipment | Electronics related | Composite engineering |
| (T, D) | | | |
| DXX Pharmacy | Chemical | Chemicals | Material |
| DXX Pharmaceutical | Pharmaceutical | Chemicals | Material |
| DXX Paper | Fabric, pulp & paper | Organic material | Raw material |
| - - - | | | |
| TXX Body | Transport equipment | Machinery | Composite engineering |
| (N) | | | |
| NXX Radio | Electrical equipment | Electronics related | Composite engineering |
| NXX | Transport equipment | Machinery | Composite engineering |
| NXX | Service | Services | Non-manufacturing |
| - - - | | | |
| NXX Co., Ltd. | Ceramic | Chemicals | Material |
| (H, P) | | | |
| PXX | Electrical equipment | Electronics related | Composite engineering |
| PXX | Metal products | Metal | Raw material |
| PXX Home | Construction | Technical for consumers | Other manufacturing |
| - - - | | | |
| HXX Motor | Automobiles | Machinery | Composite engineering |
| (M) | | | |
| MXX Construction | Construction | Technical for consumers | Other manufacturing |
| MXX | Machines & shipbuilding | Machinery | Composite engineering |
| MXX Electric | Electrical equipment | Electronics related | Composite engineering |
| - - - | | | |
| MXX | Electrical equipment | Electronics related | Composite engineering |
| (Y) | | | |
| YXX Industry | Transport equipment | Machinery | Composite engineering |
| YXX Electric | Electrical equipment | Electronics related | Composite engineering |
| - - - | | | |
| YXX Rubber | Oils & rubbers | Organic material | Raw material |
| (R, L) | | | |
| LXX | Chemical | Chemicals | Material |
| RXX | Machines & shipbuilding | Machinery | Composite engineering |
| - - - | | | |
| RXX | Electrical equipment | Electronics related | Composite engineering |
| (W, Y) | | | |
| YXX | Other products | Technical for consumers | Other manufacturing |
| - - - | | | |
| WXX | Fabric, pulp & paper | Organic material | Raw material |

FIG. 10

EP 1 783 624 A1

LIST OF COMPREHENSIVE EVALUATION INDEXES (EXAMPLE)

[COMPREHENSIVE EVALUATION INDEXES]

| | | |
|---|---|---|
| Profit Related | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) − (Interest Paid and Discount) |
| | Gross BusinessProfit (GOP) | (Operating Profit) + (R&D Cost) |
| | Gross Operating Profit (GBP) | (Gross Business Profit (GOP)) + (Patent Royalty Income) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) − (Interest Paid and Discount) |
| | Patent Royalty Income | (Patent Royalty Income (Including Royalty Income of Trademarks and Brands, etc.)) |
| | ROA $\alpha$ | [(Value Added Amount) + (Patent Royalty Income)] /(Total Assets) |
| | ROA $\beta$ | [(GOP) + (Patent Royalty Income)] /(Total Assets) |
| | ROA $\gamma$ | [(EBITDA) + (Patent Royalty Income)] /(Total Assets) |
| | ROA $\delta$ | [(Operating Profit) + (Patent Royalty Income)] /(Total Assets) |
| | Earnings on Intellectual Asset (EOIA) | [(GOP) + (Patent Royalty Income)] − [(Financial Assets) × (Profit Ratio m)] + [(Tangible Fixed Assets) × (Profit Ratio f)] (Profit Ratio m): Application of Short Term Prime Rate; (Profit Ratio f): Application of Long Term Prime Rate |
| | Return On Intellectual Asset (ROIA) | (Earnings on Intellectual Asset)/(Total Assets) |
| Excess Profit Related | Excess Value Added Amount | Sales Volume × [(Value Added Amount)/(Sales Volume) − (Industry Average Value Added Amount)/(Industry Average Sales Volume)] |
| | Excess GOP | Sales Volume × [(GOP)/(Sales Volume) − (Industry Average GOP)/(Industry Average Sales Volume)] |
| | Excess GBP | Sales Volume × [(GBP)/(Sales Volume) − (Industry Average GBP)/(Industry Average Sales Volume)] |
| | Excess EBITDA | Sales Volume × [(EBITDA)/(Sales Volume) − (Industry Average EBITDA)/(Industry Average Sales Volume)] |
| | Excess Operating Profit | Sales Volume × [(Operating Profit)/(Sales Volume) − (Industry Average Operating Profit)/(Industry Average Sales Volume)] |
| | Excess ROA $\alpha$ | (ROA $\alpha$) − (Industry Average ROA $\alpha$) |
| | Excess ROA $\beta$ | (ROA $\beta$) − (Industry Average ROA $\beta$) |
| | Excess ROA $\gamma$ | (ROA $\gamma$) − (Industry Average ROA $\gamma$) |
| | Excess ROA $\delta$ | (ROA $\delta$) − (Industry Average ROA $\delta$) |
| | Excess Earnings on Intellectual Asset (EXEOIA) | (Total Assets) × [(Earnings on Intellectual Asset)/(Total Assets) − (Industry Average Earnings on Intellectual Asset)/(Industry Average Total Assets)] |
| Market Value Related | MVA | (Value of Stock) − (Shareholders' Equity)     (Value of Stock) = (Total Number of Outstanding Stock) × (Stock Price) |
| | PBR | (Value of Stock)/(Equity Capital) |
| | Expected Intellectual Property Profit | (Expected Profit Based on the Enterprise Value) − [(Financial Assets) × (Profit Ratio m) + (Tangible Fixed Assets) × (Profit Ratio f)] (Expected Profit Based on the Enterprise Value) = (Fixed Liabilities) × (Profit Ratio a) + (Value of Stock) × (Profit Ratio p); (Profit Ratio a): (Weighted Average of Long Term Prime Rate and Bond Rate) × (1 − Corporate Tax); (Profit Ratio p): Calculated Based on Capital Asset Pricing Model (CAPM). Yield on Long Term 10-Year Government Bonds, Stock Investment Profit Ratio, $\beta$ Value were used |

FIG. 11

TRINITY ENTERPRISE VALUE EVALUATION SYSTEM – LIST OF INDEXES

A: Business, Management Related Indexes

| Index Groups | Indexes | Factor | Calculation Formula |
|---|---|---|---|
| (A) Investment Related | Facility Investment Amount | (b) | {(Current Term Tangible Fixed Assets) – (Previous Term Tangible Fixed Assets)} + (Current Term Depreciation Cost) |
| | Investment Trend Index | (b) | Term-on-Term Ratio of {(Facility Investment Amount) + (R&D Cost)} |
| (B) Management Finance Analysis Related | Facility Investment Efficiency | (b) | (Value Added Amount)/(Tangible Fixed Assets) |
| | Labor Productivity | (b) | (Value Added Amount)/(Number of Employees) |
| | Labor Equipment Ratio | (b) | (Tangible Fixed Assets)/(Number of Employees) |
| | Labor Distribution Share | (b) | {(Personnel Expense to be Included in Selling Cost and Administrative Expenses) + (Labor Cost to be Included in Manufacturing Cost)}/(Value Added Amount) |
| | Total Factor Productivity | (b) | (Value Added Amount Rate of Change) – {(1 – Labor Distribution Share) × (Depreciation Target Tangible Fixed Assets Rate of Change)} – {(Labor Distribution Share) × (Number of Employees Rate of Change)} |
| | Cost-to-Sales Ratio | (b) | (Cost of Sales)/(Sales Volume) |
| | Cost of Sales-and-Administration Ratio to Sales | (b) | (Selling Cost and Administrative Expenses)/(Sales Volume) |
| | Interest Bearing Debt Ratio | (b) | (Interest Bearing Debt)/(Total Assets) |
| | Equity to Asset Ratio | (d) | (Equity Capital)/(Total Assets) |

EP 1 783 624 A1

FIG. 12

TRINITY ENTERPRISE VALUE EVALUATION SYSTEM - LIST OF INDEXES

B: Research and Development Related Indexes

| Index Groups | Indexes | Factor | Calculation Formula |
|---|---|---|---|
| (RA) Research and Development Related | R&D Cost | (d) | Total Amount of R&D Cost   (Preferable to Use Average Value in Several Terms) |
| | R&D Stock | (d) | Cumulative Total Amount of R&D Cost |
| | Number of Inventors | (d) | (Calculated Based on "Inventor" Column of Laid-Open Publications) |
| | Inventor Stock | (d) | Cumulative Number of Inventors |
| | Inventor Ratio | (d) | (Number of Inventors)/(Number of Employees) |
| | R&D Cost per Inventor | (d) | (R&D Cost)/(Number of Inventors) |
| (RB) Research and Development Efficiency Related | R&D Cost Ratio $\alpha$ | (d) | (R&D Cost)/(Sales Volume) |
| | R&D Cost Ratio $\beta$ | (d) | (R&D Cost)/(Value Added Amount) |
| | R&D Cost Ratio $\gamma$ | (d) | (R&D Cost)/(GOP) |
| | R&D Cost Ratio $\delta$ | (d) | (R&D Cost)/(Total Assets) |
| | R&D Efficiency | (d) | (Operating Profit)/(R&D Cost)<br>(Preferable to Use Average Value in Several Terms for R&D Cost) |
| | Patent Application Productivity | (d) | (Number of Claims of Patent Applications)/(R&D Cost)<br>(Preferable to Use Average Value in Several Terms for R&D Cost) |
| | Examination Request Productivity | (d) | Correction of (Patent Application Productivity).<br>(Patent Application Productivity) × (Estimated Examination Request Ratio)<br>(Estimated Examination Request Ratio: Sought Based on Number of Examination Requests for Previous Applications in which the term for Examination Request is expired.) |
| | Patent Obtainment Productivity | (d) | Correction of (Patent Application Productivity).<br>(Patent Application Productivity) × (Estimated Patent Granted Ratio (to Number of Applications))<br>(Estimated Patent Granted Ratio (to Number of Applications): Sought Based on Number of Registrations of Previous Applications, Lapsed Years, Average Required Years to Patent Granted) |

FIG. 13

TRINITY ENTERPRISE VALUE EVALUATION SYSTEM - LIST OF INDEXES

C: Intellectual Property Related Indexes (1)

| Index Groups | Indexes | Factor | Calculation Formula |
|---|---|---|---|
| (PA) Patent Application Related | Number of Patent Applications | (a) | (Joint Application is Recorded as One Application) |
| | Patent Application Stock | (a) | (Cumulative Number of Patent Applications) |
| | Patent Application Stock (A to H) | (a) | (Cumulative Number of Patent Applications by Section) |
| | Number of Claims Filed | (a) | (Sum of Number of Claims of Laid-Open Publications) |
| | Number of Claims per Patent Application | (a) | (Number of Claims Filed)/(Number of Patent Applications) |
| | Number of applications per Inventor | (a) | (Number of Patent Applications)/(Number of Inventors)<br>(Number of Patent Applications Does Not Include Number of Joint Applications) |
| | Number of Claims per Inventor | (a) | (Number of Claims Filed)/(Number of Inventors)<br>(Number of Patent Applications Does Not Include Number of Joint Applications) |
| | Number of Joint Applications | (a) | (Number of Joint Applications Among Patent Applications) |
| | Joint Filing Ratio | (a) | (Number of Joint Applications)/(Number of Patent Applications) |
| | Number of Applicants in Joint Filing | (a) | (Number of Joint Applicants in Joint Applications) |
| | Patent Application Stock | (a) | (Cumulative Number of Patent Applications) |
| (PB) Examination Request Related | Number of Examination Requests | (a) | (Number of Examination Requests Filed) |
| | Average Years Before Examination Request | (a) | [ Σ (Date of Examination Request - Filing Date)] / [(Number of Examination Requests) × (Annual Number of Days)] |
| | Examination Request Ratio | (a) | (Examination Request Ratio Pertaining to Number of Patent Applications of Each Year) |
| | Examination Request Stock | (a) | (Cumulative Number of Examination Requests) |
| | Examination Request Stock Ratio (to Patent Application Stock) | (a) | (Cumulative Number of Examination Requests)/(Cumulative Number of Patent Applications) |
| (PT) Patent Obtainment (Registration) Related | Number of Patents Granted | (a) | (Number of Patents Granted) |
| | Number of Claims Granted | (a) | (Number of Claims in Registration Gazette) |
| | Number of Patents Granted per Inventor | (a) | (Number of Patents Granted)/(Number of Inventors) |
| | Number of Claims Granted per Inventor | (a) | (Number of Claims Granted)/(Number of Inventors) |
| | Average Years Required to be Granted | (a) | [ Σ (Patent Registration Date - Patent Filing Date)] / [(Number of Patents Granted) × (Annual Number of Days)] |
| | Patent Granted Ratio (to Number of Applications) | (a) | (Number of Patents Granted Each Year)/(Number of Patent Applications Filed Each Year) |
| | Patent Granted Stock | (a) | (Cumulative Number of Patents Granted at the End of Year) |
| | Patent Granted Stock Ratio (to Patent Application Stock) | (a) | (Cumulative Number of Patents Granted)/(Cumulative Number of Patent Applications) |
| | Patent Granted Ratio (to Number of Examination Requests) | (a) | (Number of Patents Granted Each Year)/(Number of Examination Requests Filed Each Year) |
| | Patent Granted Stock Ratio (to Examination Request Stock) | (a) | (Cumulative Number of Patents Granted)/(Cumulative Number of Examination Requests) |
| | Number of Effective Patents | (a) | (Number of Patents Granted Each Year) - (Number of Patents Invalidated Among Patents Granted Each Year) |
| | Effective Patent Remaining Ratio | (a) | (Effective Number of Patents Among Patent Granted Each Year)/(Number of Patents Granted Each Year) |

FIG. 14

TRINITY ENTERPRISE VALUE EVALUATION SYSTEM - LIST OF INDEXES

C: Intellectual Property Related Indexes (2)

| Index Groups | Indexes | Factor | Calculation Formula |
|---|---|---|---|
| (PS) Patent Stock Related | Total Number of Effective Patents | (a) | (Patent Granted Stock) - (Patent Invalidation Stock) |
| | Total Effective Patent Remaining Ratio | (a) | (Total Number of Effective Patents)/(Patent Granted Stock) |
| | Average Remaining Years of Total Effective Patents | (a) | { $\Sigma$ (Scheduled Invalidation Date of Each Patent of the Total Number of Effective Patents - Year End)} / {(Total Number of Effective Patents) × (Annual Number of Days)} |
| | Patent Stock Index | (a) | (Total Number of Effective Patents) × (Average Remaining Years of Total Effective Patents) |
| | Total Patent Assets | (a) | {(R&D Cost)/(Number of Patents Granted)} ×(Total Number of Effective Patents) |
| (PC) Patent Concentration Related | Number of Claims Filed Share (A-H) | (c) | (Number of Claims Filed by the Enterprise in One of International Patent Classification Sections A to H)/(Total Number of Claims Filed in the Same International Patent Classification Section) |
| | Patent Concentration Index | (e) | $\Sigma$ [{(Number of Claims Filed by the Enterprise by Subclasses of International Patent Classification)/(Total Number of Claims Filed by Company)}$^2$ ] |
| | Patent Concentration Index (A-H) | (e) | Patent Concentration Index of the Enterprise in One of International Patent Classification Sections A to H by the Number of Claims |
| (PE) Patent Profitability Related | Patent Profitability $\alpha$ | (a) | {(GOP) + (Patent Royalty Income)} /(Total Number of Effective Patents) |
| | Patent Profitability $\beta$ | (a) | {(Excess Value Added) + (Patent Royalty Income)} /(Total Number of Effective Patents) |
| | Patent Profitability $\gamma$ | (a) | {(Excess GOP) + (Patent Royalty Income)} /(Total Number of Effective Patents) |
| | Patent Profitability $\delta$ | (a) | (Excess Earnings on Intellectual Assets)/(Total Number of Effective Patents) |

(cf. Outline of Each Section of International Patent Classification)

A - HUMAN NECESSITIES
B - PERFORMING OPERATIONS; TRANSPORTING
C - CHEMISTRY; METALLURGY
D - TEXTILES; PAPER
E - FIXED CONSTRUCTIONS
F - MECHANICAL ENGINEERING; LIGHTING; HEATING; WEAPONS; BLASTING
G - PHYSICS
H - ELECTRICITY

FIG. 15

RELATIONSHIP OF FACTOR NAME, CLASSIFICATION AND STRATEGY

| Classification | Factor Name | Strategy |
|---|---|---|
| Factor (a) | Patent time management | Intellectual Property Strategy |
| Factor (b) | Productivity | Business Strategy |
| Factor (c) | Patent/technology share | Intellectual Property Strategy |
| Factor (d) | Research and Development | Research and Development Strategy |
| Factor (e) | Concentration of patent/technology | Intellectual Property Strategy |

FIG. 16

```
                    ┌──────────────────────┐  S500
                    │  FACTOR ANALYSIS     │
                    │    PROCESSING        │
                    └──────────────────────┘
                              │
                    ┌──────────────────────┐  S502
                    │   Set initial values │
                    │ Default values: S=45, C=0.3, │
                    │      D=70%, K=1.0    │
                    └──────────────────────┘
                              │
                    ┌──────────────────────┐  S504        ┌──────────────────────────────┐
                    │ Acquire enterprise   │◄─────────────│  Industry/enterprise database │
                    │      name            │              └──────────────────────────────┘
                    └──────────────────────┘
                              │
                    ┌──────────────────────┐              ┌──────────────────────────────┐
                    │ Acquire s number of  │◄─────────────│      Index database          │
                    │ indexes (default = all) │           └──────────────────────────────┘
                    └──────────────────────┘
                         S506 │
                              │
                    ┌──────────────────────┐  S508
                    │ Create correlation matrix │
                    │ among indexes (calculation of │
                    │ correlation coefficient r) │
                    └──────────────────────┘
                              │
                    ┌──────────────────────┐  S510
                    │ Calculate degree of  │
                    │ commonality c of index │
                    └──────────────────────┘
                              │
                    ┌──────────────────────┐  S512
                    │ Reduce indexes (leave only │
                    │ family of c ≥ C)     │
                    └──────────────────────┘
                              │
                   N   ◄──◇   s ≤ S   ◇  S514
                              │ Y
                    ┌──────────────────────┐  S516
                    │ Calculate factor loading of │
                    │ each factor (correlation of │
                    │ factor and index)    │
                    └──────────────────────┘
                              │
                    ┌──────────────────────┐  S518
                    │ Calculate cumulative │
                    │ contribution ratio d (ratio of │
                    │ eigenvalue in each factor) │
                    └──────────────────────┘
                              │
                         ◇  d ≥ D  ◇  S520 ──────────┐
                              │ N                     │
                    ┌──────────────────────┐  S522    │
                    │ Calculate eigenvalue k of │      │
                    │ each factor (square sum of │     │
                    │ factor loading)      │           │
                    └──────────────────────┘           │
                              │                         │
                   N  ◄──◇   k ≥ K   ◇  S524            │
                              │ Y ◄─────────────────────┘
                    ┌──────────────────────┐  S526   ┌──────────────────────────────┐
                    │ Extract n number of  │◄────────│ Refer to adequate number of factors N │
                    │ (default = 5) factors │        │ against the number of indexes S │
                    └──────────────────────┘         └──────────────────────────────┘
                              │
                    ┌──────────────────────┐         ┌──────────────────────────────┐
                    │ Confirm factor contents │◄──────│ List of factor names and definitions │
                    └──────────────────────┘         └──────────────────────────────┘
                         S528 │
                    ┌──────────────────────┐  S530
                    │ Enterprise ranking display for │
                    │      each factor     │──────────┐
                    └──────────────────────┘          │
                              │                  ┌──────────────────────────────┐
                              │                  │        Store results         │
                              │                  └──────────────────────────────┘
                    ┌──────────────────────┐  S532
                    │         END          │
                    └──────────────────────┘
```

FIG. 17

MULTIPLE REGRESSION ANALYSIS PROCESSING — S600

↓

Designate comprehensive evaluation index — S602 ← List of comprehensive evaluation indexes

↓

Perform multiple regression analysis
(Calculate partial regression coefficient, standard partial regression coefficient and T value (P value). Create correlation matrix (Calculate correlation coefficients of factors to the comprehensive evaluation index).) — S604

↓

Select factors in which level of T value is at a 5% (1%) level — S606

↓

Determine significance of selected factors — S608

↓

Display relationship diagram of comprehensive evaluation index, significant factor and index (append contribution ratio based on factor loading and standard partial regression coefficient) — S610

↓

Store the relationship diagram of comprehensive evaluation index, significant factor and index by industry — S612

↓

END — S614

76

FIG. 18

```
        ┌─────────────────────────┐  S700
        │  PRINCIPAL COMPONENT    │
        │  ANALYSIS PROCESSING    │
        └─────────────────────────┘
                     │
                     ▼
        ┌─────────────────────────┐  S702
        │  Incorporate indexes of the │
        │    significant factors   │
        └─────────────────────────┘
                     │
                     ▼
┌─────────────────────────────────────────────┐  S704
│  Decide comprehensive index                   │
│ (a first principal component among the principal │
│  components in which the eigenvector exceeds 1 is │
│  referred to as a comprehensive index)        │
└─────────────────────────────────────────────┘
                     │
                     ▼
        ┌─────────────────────────┐  S706
        │  Decide trinity comprehensive │
        │         index           │
        └─────────────────────────┘
                     │
                     ▼
        ┌─────────────────────────┐  S708        ┌──────────────────────┐
        │  Display trinity overall ranking │────▶│  Store the trinity overall │
        └─────────────────────────┘             │   ranking by industry │
                     │                          └──────────────────────┘
                     ▼
        ┌─────────────────────────┐  S710
        │           END           │
        └─────────────────────────┘
```

FIG. 19

TRINITY ENTERPRISE EVALUATION INDEXES (PRIMARY SELECTION) (MATERIAL, COMPOSITE ENGINEERING)

| Major Index Groups | Index Groups | Indexes | Definition Formula |
|---|---|---|---|
| Research and Development Related | (RA) Research and Development Related | Inventor Ratio | (Number of Inventors)/(Number of Employees) |
| | | R&D Cost per Inventor | (R&D Cost)/(Number of Inventors) |
| | (RB) Research and Development Efficiency Related | R&D Cost Ratio $\alpha$ | (R&D Cost)/(Sales Volume) |
| | | R&D Cost Ratio $\beta$ | (R&D Cost)/(Value Added Amount) |
| | | R&D Efficiency | (Operating Profit)/(R&D Cost) |
| | | Patent Application Productivity | (Number of Claims of Patent Applications)/(R&D Cost) |
| | | Patent Obtainment Productivity | (Patent Application Productivity) × (Estimated Patent Granted Ratio (to Number of Applications)) |
| Intellectual Property Related | (PA) Patent Application Related | Number of Claims per Patent Application | (Number of Claims Filed)/(Number of Patent Applications) |
| | | Number of applications per Inventor | (Number of Patent Applications)/(Number of Inventors) |
| | | Number of Claims per Inventor | (Number of Claims Filed)/(Number of Inventors) |
| | (PB) Examination Request Related | Average Years Before Examination Request | { Σ (Date of Examination Request − Filing Date)} / {(Number of Examination Requests) × (Annual Number of Days)} |
| | | Examination Request Stock Ratio (to Patent Application Stock) | (Cumulative Number of Examination Requests)/(Cumulative Number of Patent Applications) |
| | (PT) Patent Obtainment (Registration) Related | Number of Patents Granted per Inventor | (Number of Patents Granted)/(Number of Inventors) |
| | | Number of Claims Granted per Inventor | (Number of Claims Granted)/(Number of Inventors) |
| | | Average Years Required to be Granted | { Σ (Patent Registration Date − Patent Filing Date)} / {(Number of Patents Granted) × (Annual Number of Days)} |
| | | Patent Granted Stock Ratio (to Patent Application Stock) | (Cumulative Number of Patents Granted)/(Cumulative Number of Patent Applications) |
| | (PS) Patent Stock Related | Total Effective Patent Remaining Ratio | (Total Number of Effective Patents)/(Patent Granted Stock) |
| | | Average Remaining Years of Effective Patents | { Σ (Scheduled Invalidation Date of Each Patent of the Total Number of Effective Patents − Year End)} / {(Total Number of Effective Patents) × (Annual Number of Days)} |
| | (PE) Patent Profitability Related | Patent Profitability $\gamma$ | {(Excess Gross Business Profit) + (Patent Royalty Income)} /(Total Number of Effective Patents) |
| | (PC) Patent Concentration Related | Number of Claims Filed Share (A-H) | (Number of Claims Filed by the Enterprise in One of International Patent Classification Sections A to H)/(Total Number of Claims Filed in the Same International Patent Classification Section) |
| | | Patent Concentration Index | Σ [{(Number of Claims Filed by the Enterprise by Subclasses of International Patent Classification)/(Total Number of Claims Filed by Company)}$^2$ ] |
| | | Patent Concentration Index (A-H) | Patent Concentration Index of the Enterprise in One of International Patent Classification Sections A to H by the Number of Claims |
| Business, Profit Related | (B) Management Finance Analysis Related | Cost-to-Sales Ratio | (Cost of Sales)/(Sales Volume) |
| | | Cost of Sales-and-Administration Ratio to Sales | (Selling Cost and Administrative Expenses)/(Sales Volume) |
| | | Labor Distribution Share | {(Personnel Expense) + (Labor Cost)} /(Value Added Amount) |
| | | Labor Productivity | (Value Added Amount)/(Number of Employees) |
| | | Facility Investment Efficiency | (Value Added Amount)/(Tangible Fixed Assets) |
| | | Total Factor Productivity | (Value Added Amount Rate of Change) − {(1 − Labor Distribution Share) × (Depreciation Target Tangible Fixed Assets Rate of Change)} − {(Labor Distribution Share) × (Number of Employees Rate of Change)} |
| | | Equity to Asset Ratio | (Equity Capital)/(Total Assets) |

FIG. 20

Results of Trinity Evaluation Factor Analysis Variables

| Classification of Index | Material Industry (16 Indexes) | Composite Engineering Industry (15 Indexes) |
|---|---|---|
| Research and Development Related Indexes | R&D Cost Ratio to Sales Volume (-1) | R&D Cost per Inventor (-1) |
| Intellectual Property Related Indexes | Average Years Before Examination Request | Average Years Before Examination Request |
| | Average Years Required to be Granted | Average Years Required to be Granted |
| | Average Remaining Years of Effective Patents | Average Remaining Years of Effective Patents |
| | Examination Request Stock Ratio (to Patent Application Stock) | Examination Request Stock Ratio (to Patent Application Stock) |
| | Patent Granted Stock Ratio (to Patent Application Stock) | Patent Granted Stock Ratio (to Patent Application Stock) |
| | Number of Claims Filed Share B | Number of Claims Filed Share B |
| | Number of Claims Filed Share C | Number of Claims Filed Share C |
| | Number of Claims Filed Share G | Number of Claims Filed Share G |
| | Patent Concentration Index B | Number of Claims Filed Share H |
| | Patent Concentration Index G | Patent Concentration Index |
| | - | Patent Concentration Index B |
| Business (Management, Finance) Related Indexes | Labor Productivity | Labor Productivity |
| | Labor Distribution Share | Labor Distribution Share |
| | Total Factor Productivity | Total Factor Productivity |
| | Cost-to-Sales Ratio | - |
| | Equity to Asset Ratio | - |

(cf. Outline of Each Section of International Patent Classification)

A - HUMAN NECESSITIES

B - PERFORMING OPERATIONS; TRANSPORTING

C - CHEMISTRY; METALLURGY

D - TEXTILES; PAPER

E - FIXED CONSTRUCTIONS

F - MECHANICAL ENGINEERING; LIGHTING; HEATING; WEAPONS; BLASTING

G - PHYSICS

H - ELECTRICITY

FIG. 21

EP 1 783 624 A1

Factor Loading, Eigenvalue, Cumulative Contribution Ratio
in Material Industry

| Variable Name | Factor 1 | Factor 2 | Factor 3 | Factor 4 | Factor 5 |
|---|---|---|---|---|---|
| Patent Granted Stock Ratio (to Patent Application Stock) | 0.906 | 0.003 | −0.089 | −0.035 | 0.019 |
| Average Remaining Years of Effective Patents | 0.838 | −0.085 | −0.240 | −0.086 | −0.214 |
| Examination Request Stock Ratio (to Patent Application Stock) | 0.833 | 0.072 | −0.101 | −0.049 | 0.041 |
| Average Years Before Examination Request | −0.844 | 0.111 | −0.048 | −0.101 | 0.048 |
| Average Years Required to be Granted | −0.880 | 0.068 | 0.061 | −0.054 | 0.020 |
| Labor Productivity | −0.073 | 0.851 | 0.095 | 0.294 | −0.040 |
| Total Factor Productivity | 0.005 | 0.597 | −0.093 | 0.011 | 0.152 |
| Cost−to−Sales Ratio | 0.115 | −0.576 | 0.204 | −0.488 | −0.163 |
| Labor Distribution Share | 0.011 | −0.847 | −0.053 | −0.116 | 0.072 |
| Number of Claims Filed Share C | −0.187 | 0.252 | 0.884 | −0.046 | −0.149 |
| Number of Claims Filed Share B | −0.051 | −0.099 | 0.842 | −0.079 | −0.219 |
| Number of Claims Filed Share G | −0.121 | −0.110 | 0.699 | −0.047 | −0.155 |
| Equity to Asset Ratio | 0.081 | 0.177 | −0.103 | 0.758 | 0.116 |
| R&D Cost Ratio to Sales Volume (−1) | −0.166 | 0.426 | −0.009 | 0.640 | 0.177 |
| Patent Concentration Index B | −0.121 | 0.088 | −0.299 | 0.126 | 0.880 |
| Patent Concentration Index G | −0.010 | 0.009 | −0.467 | 0.209 | 0.621 |
| Eigenvalue | 3.823 | 2.465 | 2.441 | 1.416 | 1.407 |
| Contribution Ratio (%) | 23.89 | 15.41 | 15.25 | 8.85 | 8.79 |
| Cumulative Contribution Ratio (%) | 23.89 | 39.30 | 54.56 | 63.40 | 72.20 |

Factor Loading: After Rotation/Varimax

FIG. 22

EP 1 783 624 A1

Factor Loading, Eigenvalue, Cumulative Contribution Ratio
in Composite Engineering

| Variable Name | Factor 1 | Factor 2 | Factor 3 | Factor 4 | Factor 5 | (Factor 6) |
|---|---|---|---|---|---|---|
| Examination Request Stock Ratio (to Patent Application Stock) | 0.863 | −0.063 | −0.039 | 0.035 | 0.087 | 0.0072 |
| Patent Granted Stock Ratio (to Patent Application Stock) | 0.863 | −0.024 | −0.055 | −0.059 | 0.043 | −0.0540 |
| Average Remaining Years of Effective Patents | 0.837 | −0.159 | 0.027 | 0.050 | −0.145 | 0.0752 |
| Average Years Before Examination Request | −0.881 | −0.042 | 0.005 | −0.003 | −0.052 | 0.0286 |
| Average Years Required to be Granted | −0.895 | 0.053 | 0.050 | 0.045 | 0.046 | −0.0250 |
| Number of Claims Filed Share G | −0.065 | 0.970 | 0.059 | −0.060 | 0.021 | −0.0455 |
| Number of Claims Filed Share H | −0.014 | 0.901 | −0.007 | −0.094 | 0.013 | 0.0311 |
| Number of Claims Filed Share C | −0.075 | 0.890 | 0.056 | −0.162 | 0.043 | 0.1021 |
| Number of Claims Filed Share B | −0.084 | 0.872 | 0.131 | −0.103 | 0.170 | −0.0535 |
| Labor Productivity | 0.008 | 0.219 | 0.712 | 0.149 | 0.359 | 0.3814 |
| Total Factor Productivity | −0.028 | −0.060 | 0.670 | −0.048 | −0.053 | 0.0456 |
| Labor Distribution Share | 0.057 | −0.133 | −0.750 | 0.082 | −0.107 | 0.1673 |
| Patent Concentration Index | 0.018 | −0.121 | 0.061 | 0.758 | −0.026 | 0.2646 |
| Patent Concentration Index B | −0.043 | −0.146 | −0.125 | 0.681 | −0.050 | −0.2563 |
| R&D Cost per Inventor (−1) | −0.002 | 0.061 | 0.084 | −0.051 | 0.629 | 0.0072 |
| Eigenvalue | 3.790 | 3.449 | 1.577 | 1.130 | 0.608 | 0.338 |
| Contribution Ratio (%) | 25.265 | 22.992 | 10.513 | 7.536 | 4.055 | 2.252 |
| Cumulative Contribution Ratio (%) | 25.265 | 48.257 | 58.770 | 66.307 | 70.361 | 72.613 |

Factor Loading: After Rotation/Varimax

FIG. 23

FACTORS OF THE MATERIAL INDUSTRY

| Factor No. | Factor Names | Definition of Factors |
|---|---|---|
| Factor 1 | Patent Time Management | A factor for shortening the years from the filing of application to the examination request and years from the filing of application to the patent registration, improving the examination request stock ratio (to patent application stock) and the patent granted stock ratio (to patent application stock) and prolonging the term of patents.   In other words, this can be considered as a factor for obtaining a patent early and maintaining the patent. |
| Factor 2 | Productivity | A factor for improving the productivity by controlling the manufacturing costs and labor costs while improving the labor productivity and the technological innovative power. |
| Factor 3 | Patent/Technology Share | A factor showing the number of patent applications filed and the share and influence based on the technology market.   The number of filed patent applications may be affected by the arbitrary filing of applications by enterprises, but this can be considered as the enterprise's position in the recent competition of the research and development or the technological development. |
| Factor 4 | Research and Development | A factor for improving outcome of the research and development cost of the previous term and enhancing the equity capital. |
| Factor 5 | Concentration of Patent/Technology | A factor showing the concentration of patents, the research and development or the technological development.   The concentration level of patent applications reflects the research and development or technological development concentrated on a specified field.   Further, this also shows the attempt of obtaining patents in a concentrated manner, and improving the asset value of patents. |

FIG. 24

FACTORS OF THE COMPOSITE ENGINEERING INDUSTRY

| Factor No. | Factor Names | Definition of Factors |
|---|---|---|
| Factor 1 | Patent Time Management | A factor for shortening years to examination request and the years from the filing of an application to registration, improving the examination request stock ratio (to patent application stock) and the patent granted stock ratio (to patent application stock) and prolonging the term of patents.   In other words, this can be considered as a factor for obtaining a patent early and maintaining such patent. |
| Factor 2 | Patent/Technology Share | A factor showing the number of filed patent applications and the share and influence based on the technology market.   The number of filed patent applications may be affected by the arbitrary filing of patent applications by enterprises, but this can be considered as the enterprise's position in the recent competition of the research and development or the technological development. |
| Factor 3 | Productivity | A factor for improving the productivity by controlling the labor costs while improving the labor productivity and the technological innovative power . |
| Factor 4 | Concentration of Patent/Technology | A factor showing the concentration of patents, research and development or technological development.   The concentration level of patent applications reflects the research and development or technological development concentrated on a specified field.   Further, this also shows the attempt of obtaining patents in a concentrated manner, and improving the asset value of patents. |
| Factor 5 | Research and Development | A factor showing that the research and development cost of the previous year is yielding results. |

FIG. 25

**An Evaluation Through Indexation of Factor Scores
of Material Industry Enterprises (Factors 1-3)**

| Rank Order | Factor 1: Patent Time Management | | Factor 2: Productivity | | Factor 3: Patent/Technology Share | |
|---|---|---|---|---|---|---|
| | Enterprise Name | Index | Enterprise Name | Index | Enterprise Name | Index |
| 1 | SAK | 100.00 | TKD | 100.00 | MIC | 100.00 |
| 2 | NIC | 99.50 | SKK | 83.47 | MIT | 92.69 |
| 3 | SKA | 92.03 | KAO | 78.01 | SUK | 91.90 |
| 4 | NGA | 89.51 | ESA | 76.94 | DIN | 82.73 |
| 5 | DAI | 86.40 | DSE | 76.30 | KKA | 82.03 |
| 6 | SOO | 86.34 | SAN | 75.05 | NGA | 80.41 |
| 7 | SKK | 85.73 | TAC | 67.35 | AKA | 80.27 |
| 8 | INA | 84.98 | JSR | 67.08 | SHO | 78.07 |
| 9 | ASA | 83.12 | SJU | 66.70 | SBA | 74.64 |
| 10 | AKI | 82.91 | SOO | 66.39 | SEK | 74.04 |
| 11 | KAN | 81.69 | TAI | 66.32 | TKD | 71.95 |
| 12 | CEN | 81.52 | MIT | 66.25 | HKK | 69.26 |
| 13 | SJU | 80.43 | KAN | 66.02 | NPA | 68.92 |
| 14 | NSH | 78.29 | SUK | 65.86 | DAC | 68.10 |
| 15 | KAO | 77.98 | DAC | 65.37 | DEN | 65.53 |
| 16 | SBA | 77.52 | CEN | 64.52 | NSH | 65.06 |
| 17 | SPO | 77.51 | NZE | 64.24 | KAO | 64.33 |
| 18 | TAK | 75.47 | TOK | 63.40 | AGA | 64.20 |
| 19 | UBE | 74.81 | NIS | 63.39 | TOT | 63.73 |
| 20 | TIN | 74.53 | TSO | 63.14 | NKA | 62.92 |
| 21 | TOU | 74.44 | SNK | 63.08 | SAK | 61.67 |
| 22 | TKK | 74.01 | SHI | 62.82 | SKK | 61.64 |
| 23 | ISH | 71.90 | NSH | 62.38 | NIT | 59.57 |
| 24 | ARA | 68.78 | ADE | 62.05 | TIN | 59.56 |
| 25 | SHO | 68.30 | TKK | 61.53 | SAN | 59.10 |
| 26 | TCE | 68.01 | NKA | 61.49 | DAI | 59.01 |
| 27 | SAN | 67.37 | NSA | 61.06 | SKA | 58.91 |
| 28 | NIF | 66.68 | KKA | 60.93 | KAP | 58.88 |
| 29 | TOD | 66.60 | KYO | 59.70 | UBE | 57.87 |
| 30 | CIK | 66.31 | KUR | 59.66 | TOU | 57.46 |
| 31 | NIT | 65.57 | SAK | 59.18 | MGC | 57.35 |
| 32 | TOK | 65.44 | DEN | 58.82 | JSR | 56.93 |
| 33 | NPA | 64.84 | NDG | 56.78 | NTO | 56.55 |
| 34 | NSA | 63.65 | SSE | 55.65 | TSO | 56.23 |
| 35 | NTO | 63.19 | SKA | 55.06 | TCE | 55.65 |
| 36 | DEN | 63.01 | SEK | 55.01 | ASA | 54.92 |
| 37 | TOT | 62.99 | ARA | 54.95 | TOD | 54.58 |
| 38 | KUR | 62.07 | DAI | 54.94 | INA | 54.21 |
| 39 | MIT | 61.58 | JSP | 54.90 | ADE | 53.72 |
| 40 | SEK | 61.36 | UBE | 54.10 | SSE | 53.59 |
| 41 | DAC | 61.07 | NIF | 53.71 | ISH | 53.43 |
| 42 | MIJ | 60.83 | NIC | 53.40 | ARA | 53.33 |
| 43 | NPR | 60.77 | NPA | 52.96 | CEN | 53.21 |
| 44 | JSP | 60.68 | CIK | 52.43 | NGC | 53.20 |
| 45 | TAC | 60.48 | COS | 52.35 | NIC | 52.80 |
| 46 | TKD | 60.16 | MIJ | 51.99 | SHI | 52.78 |
| 47 | KAP | 60.09 | NSO | 51.82 | KAN | 52.63 |
| 48 | ESA | 59.64 | AKA | 51.80 | KYO | 52.53 |
| 49 | SUK | 59.56 | SPO | 51.80 | MIJ | 52.23 |
| 50 | NDG | 59.10 | TOD | 51.60 | SOO | 51.76 |

(NOTE)  Factor scores are converted to deviation values and indexation is
made so that index of the top enterprise becomes 100.

FIG. 26

## An Evaluation Through Indexation of Factor Scores
## of Material Industry Enterprises (Factors 4, 5)

| Rank Order | Factor 4: Research and Development | | Factor 5: Concentration of Patent/Technology | |
|---|---|---|---|---|
| | Enterprise Name | Index | Enterprise Name | Index |
| 1 | ESA | 100.00 | DAI | 100.00 |
| 2 | TAI | 98.88 | SSE | 94.94 |
| 3 | SAN | 98.28 | ISH | 85.42 |
| 4 | DSE | 92.66 | COS | 81.94 |
| 5 | TOU | 87.89 | TOU | 78.63 |
| 6 | TKD | 84.35 | SAN | 77.47 |
| 7 | NGA | 80.99 | ESA | 73.68 |
| 8 | KAO | 78.38 | NIS | 72.77 |
| 9 | TOT | 78.24 | KYO | 72.53 |
| 10 | SHI | 77.89 | NPA | 70.67 |
| 11 | SBA | 77.74 | ASA | 69.32 |
| 12 | TCE | 77.14 | JSP | 67.22 |
| 13 | KAP | 76.12 | DSE | 64.55 |
| 14 | NTO | 75.28 | CIK | 64.28 |
| 15 | SAK | 75.02 | SHI | 63.94 |
| 16 | KCC | 74.92 | SKA | 63.92 |
| 17 | INA | 74.76 | ADE | 63.66 |
| 18 | HKK | 72.48 | TOD | 62.58 |
| 19 | NPR | 72.30 | ARA | 61.35 |
| 20 | NSH | 71.95 | TSO | 61.16 |
| 21 | NKA | 71.45 | SUK | 60.99 |
| 22 | TOD | 71.28 | MIT | 60.94 |
| 23 | KYO | 71.26 | MIC | 60.88 |
| 24 | NIT | 70.17 | TAK | 60.76 |
| 25 | COS | 70.13 | DAC | 59.92 |
| 26 | NSO | 69.66 | NGC | 58.24 |
| 27 | KKA | 69.40 | AKI | 57.67 |
| 28 | TKK | 68.58 | NSH | 57.60 |
| 29 | NIF | 68.34 | KAP | 57.56 |
| 30 | SEK | 67.76 | TKK | 57.21 |
| 31 | SPO | 67.07 | KAN | 57.11 |
| 32 | AGA | 66.97 | KKA | 56.74 |
| 33 | KUR | 66.43 | NSA | 56.26 |
| 34 | ARA | 65.99 | SAK | 56.19 |
| 35 | AKA | 65.96 | NKA | 56.14 |
| 36 | TIN | 65.43 | KUR | 55.70 |
| 37 | SKK | 65.15 | DIN | 55.44 |
| 38 | TAK | 65.09 | KCC | 55.29 |
| 39 | NPA | 63.51 | TKD | 55.07 |
| 40 | MGC | 62.75 | NTO | 54.86 |
| 41 | AKI | 62.68 | SHO | 54.71 |
| 42 | NYU | 62.09 | TCE | 54.66 |
| 43 | NGC | 60.74 | DEN | 54.53 |
| 44 | JSP | 60.68 | NIC | 54.52 |
| 45 | SJU | 60.06 | NDG | 54.43 |
| 46 | NDG | 59.99 | SBA | 54.42 |
| 47 | CEN | 59.85 | JSR | 54.41 |
| 48 | SKA | 59.81 | SNK | 53.80 |
| 49 | NIS | 58.77 | SEK | 53.18 |
| 50 | NIC | 57.99 | NGA | 52.73 |

(NOTE) Factor scores are converted to deviation values and indexation is made so that index of the top enterprise becomes 100.

FIG. 27

### An Evaluation Through Indexation of Factor Scores
### of Composite Engineering Industry Enterprises (Factors 1–3)

| Rank Order | Factor 1: Patent Time Management | | Factor 2: Patent/Technology Share | | Factor 3: Productivity | |
|---|---|---|---|---|---|---|
| | Enterprise Name | Index | Enterprise Name | Index | Enterprise Name | Index |
| 1 | KAW | 100.00 | CAN | 100.00 | SAM | 100.00 |
| 2 | NEC | 97.94 | MDS | 80.79 | TAK | 65.76 |
| 3 | SKE | 86.87 | SON | 68.09 | MEG | 59.16 |
| 4 | TSC | 85.57 | RIC | 67.14 | FUN | 54.02 |
| 5 | NKD | 83.30 | TOS | 57.87 | HON | 53.93 |
| 6 | TOB | 81.79 | HIT | 56.48 | RIC | 53.01 |
| 7 | RIZ | 79.50 | FUJ | 54.09 | TDS | 52.51 |
| 8 | SKS | 79.48 | MEL | 52.22 | NDE | 51.75 |
| 9 | TDS | 78.62 | NEC | 52.11 | IBI | 51.28 |
| 10 | ZOJ | 78.18 | KON | 51.25 | OLI | 51.22 |
| 11 | NAG | 76.79 | SHA | 50.20 | CIT | 50.89 |
| 12 | TKS | 76.70 | MJU | 46.66 | CAN | 50.69 |
| 13 | MAX | 76.67 | DEN | 42.58 | FUJ | 50.40 |
| 14 | SJK | 76.00 | FJT | 41.63 | NTO | 50.39 |
| 15 | FJA | 75.13 | MDE | 41.24 | BRO | 49.99 |
| 16 | MEI | 75.10 | TOY | 40.69 | HMA | 49.85 |
| 17 | MJK | 73.92 | TKE | 39.64 | ALP | 49.68 |
| 18 | TCM | 73.85 | MEI | 39.36 | TOY | 49.46 |
| 19 | HOS | 72.55 | KCE | 39.33 | TCM | 49.42 |
| 20 | USH | 72.43 | TDK | 38.89 | SUZ | 49.30 |
| 21 | TIA | 72.40 | MUR | 37.98 | NEI | 49.13 |
| 22 | CKD | 72.28 | FEL | 37.86 | CRA | 49.10 |
| 23 | ARO | 72.11 | NIK | 37.85 | NIP | 48.84 |
| 24 | FUT | 72.09 | AIC | 37.83 | RIS | 48.56 |
| 25 | FUN | 71.68 | OLI | 37.79 | TER | 48.06 |
| 26 | KOI | 71.35 | KUR | 37.75 | HKO | 47.99 |
| 27 | SMD | 71.09 | KAW | 37.56 | HZO | 47.60 |
| 28 | THA | 70.69 | HON | 37.54 | HIK | 47.55 |
| 29 | TKO | 70.63 | CAS | 37.50 | KYO | 47.28 |
| 30 | NSH | 70.09 | ALD | 37.49 | MJK | 47.01 |
| 31 | MIH | 69.67 | TIA | 37.40 | MAX | 47.00 |
| 32 | STA | 69.19 | KEN | 37.34 | SON | 46.90 |
| 33 | KEN | 69.12 | DKK | 37.28 | TOJ | 46.65 |
| 34 | MIN | 68.76 | SMD | 37.25 | KOM | 46.50 |
| 35 | SSS | 68.08 | EBA | 37.20 | NCO | 46.43 |
| 36 | FDK | 67.96 | ADV | 37.18 | FJK | 46.42 |
| 37 | KOK | 67.43 | OKI | 37.15 | HAM | 46.38 |
| 38 | DIG | 67.23 | SJK | 37.05 | NOR | 46.27 |
| 39 | HZO | 66.88 | YUA | 37.04 | HOS | 45.85 |
| 40 | ANR | 66.71 | TKS | 36.94 | NEC | 45.82 |
| 41 | IWA | 66.66 | DAI | 36.89 | HOY | 45.61 |
| 42 | NEI | 66.64 | NYU | 36.76 | KON | 45.54 |
| 43 | NSE | 66.54 | ZOJ | 36.72 | MIR | 45.25 |
| 44 | MIU | 66.47 | NAG | 36.71 | NEL | 45.24 |
| 45 | NYU | 66.38 | SKE | 36.71 | DKK | 45.06 |
| 46 | SAM | 66.03 | SKS | 36.65 | AIH | 44.84 |
| 47 | TAY | 65.68 | DNS | 36.62 | STS | 44.75 |
| 48 | AIC | 65.62 | MIH | 36.61 | PEN | 44.75 |
| 49 | MUR | 65.59 | BRO | 36.56 | TOK | 44.70 |
| 50 | NVI | 65.52 | NOR | 36.53 | KAW | 44.63 |

(NOTE) Factor scores are converted to deviation values and indexation is made so that index of the top enterprise becomes 100.

FIG. 28

An Evaluation Through Indexation of Factor Scores
of Composite Engineering Industry Enterprises (Factors 4, 5)

| Rank Order | Factor 4: Concentration of Patent/Technology | | Factor 5: Research and Development | |
|---|---|---|---|---|
| | Enterprise Name | Index | Enterprise Name | Index |
| 1 | SAM | 100.00 | TOY | 100.00 |
| 2 | MEI | 95.04 | HON | 85.32 |
| 3 | YUA | 93.31 | SAM | 76.63 |
| 4 | AIC | 86.22 | DEN | 65.08 |
| 5 | TIA | 86.04 | YAM | 64.04 |
| 6 | HME | 85.97 | ADV | 62.06 |
| 7 | NCH | 85.51 | FJK | 61.11 |
| 8 | MEG | 81.54 | CAN | 59.14 |
| 9 | ENP | 81.06 | SMC | 58.30 |
| 10 | TKE | 79.99 | SUZ | 57.62 |
| 11 | TFS | 79.94 | TKE | 56.61 |
| 12 | NCE | 78.62 | GRO | 56.46 |
| 13 | HIO | 76.38 | TIA | 55.00 |
| 14 | AIH | 76.31 | ANR | 54.89 |
| 15 | SDK | 75.53 | FJF | 54.48 |
| 16 | DAI | 75.52 | OMR | 54.19 |
| 17 | TKS | 74.17 | KAW | 54.11 |
| 18 | SID | 72.90 | SDK | 53.88 |
| 19 | JID | 71.13 | TOJ | 53.83 |
| 20 | SKE | 70.75 | MJK | 53.32 |
| 21 | CAN | 70.30 | IWA | 53.28 |
| 22 | JUK | 70.29 | SKE | 53.04 |
| 23 | NCO | 70.07 | MEG | 52.77 |
| 24 | ARO | 69.94 | MEL | 52.28 |
| 25 | ALP | 69.45 | TKS | 52.14 |
| 26 | NYU | 68.54 | NEC | 51.83 |
| 27 | SNM | 68.47 | KOM | 50.99 |
| 28 | NDE | 67.67 | NIK | 50.91 |
| 29 | KOI | 67.60 | HOS | 50.82 |
| 30 | RIK | 67.57 | AMD | 50.67 |
| 31 | CIT | 67.42 | TOG | 50.55 |
| 32 | CAF | 67.15 | ISH | 50.49 |
| 33 | MIH | 66.84 | NMU | 50.48 |
| 34 | DAH | 66.81 | USH | 49.86 |
| 35 | MIR | 66.62 | DAI | 49.59 |
| 36 | KOK | 66.11 | TAY | 49.03 |
| 37 | HOS | 66.01 | SNM | 48.71 |
| 38 | TKO | 65.13 | BRO | 48.71 |
| 39 | ZOJ | 65.01 | ORI | 48.59 |
| 40 | ADV | 64.92 | KOI | 48.54 |
| 41 | USH | 64.78 | HIK | 48.53 |
| 42 | FJF | 64.71 | TTE | 48.39 |
| 43 | TOP | 64.63 | FJT | 47.97 |
| 44 | NOR | 64.57 | AID | 47.76 |
| 45 | TER | 64.30 | CAE | 47.72 |
| 46 | RIC | 64.25 | TSK | 47.67 |
| 47 | KOY | 64.20 | TDS | 47.65 |
| 48 | CAS | 64.07 | CAF | 47.61 |
| 49 | ICH | 63.96 | HOY | 47.48 |
| 50 | DIG | 63.74 | MUR | 47.36 |

(NOTE) Factor scores are converted to deviation values and indexation is
made so that index of the top enterprise becomes 100.

Correlation Matrix of Factor Analysis Variables in the Material Industry

FIG. 29

EP 1 783 624 A1

| | Labor Productiv- ity | Labor Distribu- tion Share | Total Factor Productiv- ity | Cost-to- Sales Ratio | Equity to Asset Ratio | Patent Granted Stock Ratio (to Patent Application Stock) | Examination Request Stock Ratio (to Patent Application Stock) | Average Years Before Examination Request |
|---|---|---|---|---|---|---|---|---|
| Labor Productivity | 1 | | | | | | | |
| Labor Distribution Share | -0.7544 | 1 | | | | | | |
| Total Factor Productivity | 0.4794 | -0.4464 | 1 | | | | | |
| Cost-to-Sales Ratio | -0.6108 | 0.5406 | -0.3727 | 1 | | | | |
| Equity to Asset Ratio | 0.3492 | -0.2149 | 0.1577 | -0.4839 | 1 | | | |
| Patent Granted Stock Ratio (to Patent Application Stock) | -0.0591 | 0.0090 | -0.0007 | 0.1267 | 0.0620 | 1 | | |
| Examination Request Stock Ratio (to Patent Application Stock) | 0.0155 | -0.0656 | 0.0060 | 0.0215 | 0.0525 | 0.7940 | 1 | |
| Average Years Before Examination Request | 0.1440 | -0.0425 | 0.1098 | -0.1395 | -0.1365 | -0.7241 | -0.7299 | 1 |
| Average Years Required to be Granted | 0.1325 | -0.0908 | -0.0132 | -0.0847 | -0.0973 | -0.7603 | -0.6386 | 0.7331 |
| Average Remaining Years of Effective Patents | -0.2024 | 0.1129 | -0.0244 | 0.1912 | -0.0120 | 0.7717 | 0.6346 | -0.6389 |
| Number of Claims Filed Share B | -0.0562 | 0.0112 | -0.1785 | 0.2601 | -0.1999 | -0.1535 | -0.1556 | 0.0179 |
| Number of Claims Filed Share C | 0.3389 | -0.2159 | 0.0819 | 0.0897 | -0.1137 | -0.2411 | -0.2890 | 0.1342 |
| Number of Claims Filed Share G | -0.0125 | 0.0285 | -0.1794 | 0.2524 | -0.1489 | -0.1533 | -0.1308 | 0.0369 |
| R&D Cost Ratio to Sales Volume (-1) | 0.5827 | -0.4703 | 0.2388 | -0.6901 | 0.5411 | -0.1605 | -0.1377 | 0.2037 |
| Patent Concentration Index B | 0.0405 | -0.0307 | 0.2137 | -0.3372 | 0.2318 | -0.0742 | -0.0475 | 0.1242 |
| Patent Concentration Index G | 0.0414 | 0.0649 | 0.1361 | -0.3086 | 0.2737 | 0.0450 | 0.0756 | 0.1032 |

| | Average Years Required to be Granted | Average Remaining Years of Effective Patents | Number of Claims Filed Share B | Number of Claims Filed Share C | Number of Claims Filed Share G | R&D Cost Ratio to Sales Volume (-1) | Patent Concentra- tion Index B | Patent Concentra- tion Index G |
|---|---|---|---|---|---|---|---|---|
| Labor Productivity | | | | | | | | |
| Labor Distribution Share | | | | | | | | |
| Total Factor Productivity | | | | | | | | |
| Cost-to-Sales Ratio | | | | | | | | |
| Equity to Asset Ratio | | | | | | | | |
| Patent Granted Stock Ratio (to Patent Application Stock) | | | | | | | | |
| Examination Request Stock Ratio (to Patent Application Stock) | | | | | | | | |
| Average Years Before Examination Request | | | | | | | | |
| Average Years Required to be Granted | 1 | | | | | | | |
| Average Remaining Years of Effective Patents | -0.7832 | 1 | | | | | | |
| Number of Claims Filed Share B | 0.0654 | -0.1388 | 1 | | | | | |
| Number of Claims Filed Share C | 0.2165 | -0.3631 | 0.7070 | 1 | | | | |
| Number of Claims Filed Share G | 0.1707 | -0.2566 | 0.6195 | 0.6342 | 1 | | | |
| R&D Cost Ratio to Sales Volume (-1) | 0.1056 | -0.3234 | -0.1294 | 0.0824 | -0.1003 | 1 | | |
| Patent Concentration Index B | 0.1028 | -0.2445 | -0.4390 | -0.3744 | -0.3505 | 0.3171 | 1 | |
| Patent Concentration Index G | -0.0159 | -0.0394 | -0.5733 | -0.4779 | -0.4287 | 0.2558 | 0.6981 | 1 |

FIG. 30

Degree of Commonality of the Factor Analysis Variable of the Material Industry

| Factor Variable | Initial Value | Estimated Value |
|---|---|---|
| Labor Productivity | 0.7544 | 0.8702 |
| Labor Distribution Share | 0.7544 | 0.7999 |
| Total Factor Productivity | 0.4794 | 0.4345 |
| Cost-to-Sales Ratio | 0.6901 | 0.7228 |
| Equity to Asset Ratio | 0.5411 | 0.6420 |
| Patent Granted Stock Ratio (to Patent Application Stock) | 0.7940 | 0.8716 |
| Examination Request Stock Ratio (to Patent Application Stock) | 0.7940 | 0.9048 |
| Average Years Before Examination Request | 0.7331 | 0.9535 |
| Average Years Required to be Granted | 0.7832 | 0.8596 |
| Average Remaining Years of Effective Patents | 0.7832 | 0.9002 |
| Number of Claims Filed Share B | 0.7070 | 0.8468 |
| Number of Claims Filed Share C | 0.7070 | 0.9975 |
| Number of Claims Filed Share G | 0.6342 | 0.5637 |
| R&D Cost Ratio to Sales Volume (-1) | 0.6901 | 0.8839 |
| Patent Concentration Index B | 0.6981 | 0.9155 |
| Patent Concentration Index G | 0.6981 | 0.6910 |

(NOTE)  Setting of Initial Value of Commonality: Maximum Value of Correlation

Correlation Matrix of Factor Analysis Variables in the Composite Engineering Industry

| | Labor Productivity | Labor Distribution Share | Total Factor Productivity | Patent Granted Stock Ratio (to Patent Application Stock) | Examination Request Stock Ratio (to Patent Application Stock) | Average Years Before Examination Request | Average Years Required to be Granted |
|---|---|---|---|---|---|---|---|
| Labor Productivity | 1 | | | | | | |
| Labor Distribution Share | -0.5398 | 1 | | | | | |
| Total Factor Productivity | 0.4397 | -0.4463 | 1 | | | | |
| Patent Granted Stock Ratio (to Patent Application Stock) | -0.0763 | 0.0797 | -0.0544 | 1 | | | |
| Examination Request Stock Ratio (to Patent Application Stock) | -0.0099 | 0.1029 | -0.0324 | 0.7919 | 1 | | |
| Average Years Before Examination Request | -0.0441 | -0.0031 | 0.0706 | -0.6761 | -0.7827 | 1 | |
| Average Years Required to be Granted | 0.0596 | -0.1072 | 0.0343 | -0.7532 | -0.7105 | 0.7760 | 1 |
| Average Remaining Years of Effective Patents | -0.0054 | 0.0846 | 0.0084 | 0.6811 | 0.6135 | -0.6902 | -0.8124 |
| Number of Claims Filed Share B | 0.2853 | -0.2188 | 0.0748 | -0.1045 | -0.1480 | 0.0468 | 0.1164 |
| Number of Claims Filed Share C | 0.2620 | -0.2054 | -0.0267 | -0.0904 | -0.1353 | 0.0241 | 0.1025 |
| Number of Claims Filed Share G | 0.2453 | -0.1742 | -0.0151 | -0.0683 | -0.1040 | 0.0118 | 0.1231 |
| Number of Claims Filed Share H | 0.2070 | -0.1339 | -0.0696 | -0.0224 | -0.0548 | -0.0370 | 0.0599 |
| R&D Cost per Inventor (-1) | 0.2954 | -0.1402 | 0.0240 | 0.0214 | 0.0489 | -0.0303 | 0.0287 |
| Patent Concentration Index B | -0.1354 | 0.1209 | -0.1196 | -0.0757 | -0.0027 | 0.0237 | 0.0601 |
| Patent Concentration Index | 0.2211 | 0.0887 | 0.0308 | -0.0279 | 0.0444 | 0.0070 | 0.0018 |

| | Average Remaining Years of Effective Patents | Number of Claims Filed Share B | Number of Claims Filed Share C | Number of Claims Filed Share G | Number of Claims Filed Share H | R&D Cost per Inventor (-1) | Patent Concentration Index B | Patent Concentration Index |
|---|---|---|---|---|---|---|---|---|
| Labor Productivity | | | | | | | | |
| Labor Distribution Share | | | | | | | | |
| Total Factor Productivity | | | | | | | | |
| Patent Granted Stock Ratio (to Patent Application Stock) | | | | | | | | |
| Examination Request Stock Ratio (to Patent Application Stock) | | | | | | | | |
| Average Years Before Examination Request | | | | | | | | |
| Average Years Required to be Granted | | | | | | | | |
| Average Remaining Years of Effective Patents | 1 | | | | | | | |
| Number of Claims Filed Share B | -0.2051 | 1 | | | | | | |
| Number of Claims Filed Share C | -0.2102 | 0.8551 | 1 | | | | | |
| Number of Claims Filed Share G | -0.2275 | 0.8527 | 0.8338 | 1 | | | | |
| Number of Claims Filed Share H | -0.1769 | 0.6624 | 0.7811 | 0.9035 | 1 | | | |
| R&D Cost per Inventor (-1) | -0.1118 | 0.1821 | 0.0978 | 0.0720 | 0.0708 | 1 | | |
| Patent Concentration Index B | 0.0112 | -0.2032 | -0.2625 | -0.1798 | -0.2045 | -0.0837 | 1 | |
| Patent Concentration Index | 0.0899 | -0.1996 | -0.2127 | -0.1715 | -0.1648 | -0.0574 | 0.4566 | 1 |

FIG. 31

EP 1 783 624 A1

FIG. 32

Degree of Commonality of the Factor Analysis Variable
of the Composite Engineering Industry

| Factor Variable | Initial Value | Estimated Value |
|---|---|---|
| Labor Productivity | 0.540 | 0.863 |
| Labor Distribution Share | 0.540 | 0.681 |
| Total Factor Productivity | 0.446 | 0.496 |
| Patent Granted Stock Ratio (to Patent Application Stock) | 0.792 | 0.860 |
| Examination Request Stock Ratio (to Patent Application Stock) | 0.792 | 0.896 |
| Average Years Before Examination Request | 0.783 | 0.894 |
| Average Years Required to be Granted | 0.812 | 0.839 |
| Average Remaining Years of Effective Patents | 0.812 | 0.848 |
| Number of Claims Filed Share B | 0.855 | 0.999 |
| Number of Claims Filed Share C | 0.855 | 0.911 |
| Number of Claims Filed Share G | 0.903 | 0.973 |
| Number of Claims Filed Share H | 0.903 | 0.921 |
| R&D Cost per Inventor (-1) | 0.295 | 0.409 |
| Patent Concentration Index B | 0.457 | 0.574 |
| Patent Concentration Index | 0.457 | 0.667 |

(NOTE)　Setting of Initial Value of Commonality: Maximum Value of Correlation

# EP 1 783 624 A1

## FIG. 33

Multiple Regression Analysis Result List of the Material Industry

[Correlation Matrix]

| | Factor 1 (Patent Time Management) | Factor 2 (Productivity) | Factor 3 (Patent/ Technology Share) | Factor 4 (Research and Development) | Factor 5 (Concentration of Patent/ Technology) | ROA $\delta$ |
|---|---|---|---|---|---|---|
| Factor 1 (Patent Time Management) | 1 | | | | | |
| Factor 2 (Productivity) | -0.0028 | 1 | | | | |
| Factor 3 (Patent/ Technology Share) | -0.0101 | 0.0308 | 1 | | | |
| Factor 4 (Research and Development) | 0.0064 | 0.0844 | -0.0455 | 1 | | |
| Factor 5 (Concentration of Patent/Technology) | -0.0155 | 0.0097 | -0.0320 | 0.0183 | 1 | |
| ROA $\delta$ | 0.0220 | 0.8404 | -0.0665 | 0.3942 | 0.0840 | 1 |

[Multiple Regression Equation]          Criterion Variable: ROA $\delta$

| Name of Explanatory Variable | Partial Regression Coefficient | Standard Partial Regression Coefficient | T value | Contribution Ratio |
|---|---|---|---|---|
| Factor 1 (Patent Time Management) | 0.0009 | 0.0225 | 0.44 | 1.95% |
| Factor 2 (Productivity) | 0.0348 | 0.8150 | **15.88 | 70.76% |
| Factor 3 (Patent/ Technology Share) | -0.0031 | -0.0746 | -1.46 | -6.48% |
| Factor 4 (Research and Development) | 0.0148 | 0.3207 | ** 6.25 | 27.85% |
| Factor 5 (Concentration of Patent/Technology) | 0.0029 | 0.0682 | 1.33 | 5.92% |
| Constant Term | 0.0339 | | **16.60 | |

** ... 1% Level,  * ... 5% Level

[Accuracy]

| Degree of Freedom Adjusted Determination Coefficient | R2'= | 0.8095 |
|---|---|---|

FIG. 34

Multiple Regression Analysis Result List of the Composite Engineering Industry

[Correlation Matrix]

| | Factor 1 (Patent Time Management) | Factor 2 (Patent/ Technology Share) | Factor 3 (Productivity) | Factor 4 (Concentration of Patent/ Technology) | Factor 5 (Research and Development) | ROA $\delta$ |
|---|---|---|---|---|---|---|
| Factor 1 (Patent Time Management) | 1 | | | | | |
| Factor 2 (Patent/ Technology Share) | -0.0032 | 1 | | | | |
| Factor 3 (Productivity) | -0.0064 | 0.0110 | 1 | | | |
| Factor 4 (Concentration of Patent/Technology) | -0.0033 | -0.0321 | 0.0145 | 1 | | |
| Factor 5 (Research and Development) | 0.0079 | 0.0269 | 0.1686 | -0.0064 | 1 | |
| ROA $\delta$ | -0.0161 | 0.0188 | 0.8505 | 0.1732 | 0.2602 | 1 |

[Multiple Regression Equation]          Criterion Variable: ROA $\delta$

| Name of Explanatory Variable | Partial Regression Coefficient | Standard Partial Regression Coefficient | T value | Contribution Ratio |
|---|---|---|---|---|
| Factor 1 (Patent Time Management) | -0.0007 | -0.0112 | -0.308 | -1.01% |
| Factor 2 (Patent/ Technology Share) | 0.0007 | 0.0116 | 0.317 | 1.04% |
| Factor 3 (Productivity) | 0.0554 | 0.8274 | **22.39 | 74.43% |
| Factor 4 (Concentration of Patent/Technology) | 0.0113 | 0.1623 | ** 4.45 | 14.60% |
| Factor 5 (Research and Development) | 0.0095 | 0.1215 | ** 3.29 | 10.93% |
| Constant Term | 0.0191 | | ** 8.75 | |

** ... 1% Level, * ... 5% Level

[Accuracy]

| Degree of Freedom Adjusted Determination Coefficient | R2'= | 0.7572 |
|---|---|---|

...

FIG. 35

RELATIONSHIP DIAGRAM OF THE MATERIAL INDUSTRY

Correlation (Factor Loading)          Contribution Ratio

| Labor Productivity | 0.8506 | | |
| Total Factor Productivity | 0.5971 | Factor 2 Productivity | 71% | ROA δ |
| Cost-to-Sales Ratio | -0.5757 | | |
| Labor Distribution Share | -0.8472 | | |
| Equity to Asset Ratio | 0.7576 | Factor 4 Research and Development | 28% |
| R&D Cost Ratio to Sales Volume (-1) | 0.6396 | | |

FIG. 36

RELATIONSHIP DIAGRAM OF THE COMPOSITE ENGINEERING INDUSTRY

Correlation (Factor Loading)          Contribution Ratio

| Labor Productivity | 0.7123 | Factor 3 Productivity | 74% |
| Total Factor Productivity | 0.6702 | | |
| Labor Distribution Share | -0.7499 | | |
| Patent Concentration Index | 0.7580 | Factor 4 Concentration of Patent/Technology | 15% | ROA δ |
| Patent Concentration Index B | 0.6810 | | |
| R&D Cost per Inventor (-1) | 0.6286 | Factor 5 Research and Development | 11% |

## FIG. 37

Principal Component Analysis Results (Correlation Matrix) of the Material Industry

[Corelation Matrix]

|  | R&D Cost Ratio to Sales Volume (-1) | Labor Productivity | Total Factor Productivity | Cost-to-Sales Ratio |
|---|---|---|---|---|
| R&D Cost Ratio to Sales Volume (-1) | 1 |  |  |  |
| Labor Productivity | 0.5811 | 1 |  |  |
| Total Factor Productivity | 0.2608 | 0.4883 | 1 |  |
| Cost-to-Sales Ratio | -0.6908 | -0.6095 | -0.3829 | 1 |
| Labor Distribution Share | -0.4545 | -0.7574 | -0.4610 | 0.5450 |
| Equity to Asset Ratio | 0.4309 | 0.2596 | 0.1117 | -0.3926 |
| ROA δ | 0.5779 | 0.8117 | 0.5526 | -0.7620 |

|  | Labor Distribution Share | Equity to Asset Ratio | ROA δ |
|---|---|---|---|
| R&D Cost Ratio to Sales Volume (-1) |  |  |  |
| Labor Productivity |  |  |  |
| Total Factor Productivity |  |  |  |
| Cost-to-Sales Ratio |  |  |  |
| Labor Distribution Share | 1 |  |  |
| Equity to Asset Ratio | -0.1046 | 1 |  |
| ROA δ | -0.7777 | 0.2301 | 1 |

## FIG. 38

Eigenvector of Principal Component Analysis of the Material Industry

[Eigenvector]

|  | Principal Component 1 | Principal Component 2 |
|---|---|---|
| R&D Cost Ratio to Sales Volume (-1) | 0.3620 | 0.1339 |
| Labor Productivity | 0.3694 | -0.2633 |
| Total Factor Productivity | 0.2356 | -0.3356 |
| Cost-to-Sales Ratio | -0.3924 | -0.1271 |
| Labor Distribution Share | -0.3160 | 0.4229 |
| Equity to Asset Ratio | 0.1936 | 0.3049 |
| ROA δ | 0.3896 | -0.2300 |
| Eigenvalue | 5.09 | 1.61 |
| Contribution Ratio (%) | 72.71 | 23 |
| Cumulative Contribution Ratio (%) | 72.71 | 95.71 |

FIG. 39

### Top 100 Enterprises of Trinity Management Overall Ranking in the Material Industry

| Rank Order | Enterprise Name | Comprehensive Scores of Trinity Management (Indexation made) | Rank Order | Enterprise Name | Comprehensive Scores of Trinity Management (Indexation made) |
|---|---|---|---|---|---|
| 1 | ONO | 100.00 | 51 | NIS | 56.53 |
| 2 | KIS | 98.75 | 52 | HAN | 56.38 |
| 3 | CHU | 86.15 | 53 | TKO | 56.37 |
| 4 | TKD | 81.41 | 54 | SUN | 56.23 |
| 5 | FUJ | 80.84 | 55 | NPC | 56.23 |
| 6 | YAM | 80.54 | 56 | GOO | 56.09 |
| 7 | HIS | 80.36 | 57 | SAC | 55.97 |
| 8 | ESA | 79.29 | 58 | NYK | 55.96 |
| 9 | DSE | 78.98 | 59 | EID | 55.87 |
| 10 | TAN | 78.81 | 60 | AEI | 55.82 |
| 11 | BAN | 78.75 | 61 | KIB | 55.66 |
| 12 | SAN | 76.05 | 62 | MAT | 55.65 |
| 13 | SIO | 75.61 | 63 | SUR | 55.21 |
| 14 | TAI | 74.78 | 64 | TOR | 55.03 |
| 15 | DNS | 73.92 | 65 | TKK | 54.95 |
| 16 | MOC | 72.17 | 66 | NKA | 54.95 |
| 17 | SAT | 71.34 | 67 | ISS | 54.93 |
| 18 | MIL | 70.87 | 68 | NCI | 54.35 |
| 19 | SEI | 70.81 | 69 | NSH | 54.01 |
| 20 | TEI | 69.95 | 70 | IDE | 53.72 |
| 21 | NSI | 67.62 | 71 | ARO | 53.61 |
| 22 | BIO | 65.84 | 72 | HAS | 53.61 |
| 23 | MAN | 65.78 | 73 | NNO | 53.51 |
| 24 | KAK | 64.97 | 74 | AIR | 53.40 |
| 25 | NCR | 64.92 | 75 | ITO | 53.40 |
| 26 | ZER | 64.58 | 76 | CEN | 53.21 |
| 27 | OSE | 64.17 | 77 | JSR | 52.98 |
| 28 | MIK | 64.06 | 78 | FUF | 52.63 |
| 29 | MIW | 63.93 | 79 | NKS | 52.26 |
| 30 | TSU | 62.33 | 80 | AIK | 52.20 |
| 31 | KAO | 62.01 | 81 | KUR | 52.15 |
| 32 | ROH | 61.77 | 82 | NSE | 52.10 |
| 33 | SSS | 61.54 | 83 | SHT | 51.71 |
| 34 | NOE | 61.41 | 84 | RIT | 51.66 |
| 35 | TOW | 61.13 | 85 | DAC | 51.49 |
| 36 | TOY | 60.48 | 86 | KUN | 51.40 |
| 37 | FAN | 60.22 | 87 | HOK | 51.29 |
| 38 | SKK | 59.69 | 88 | NZE | 51.24 |
| 39 | COS | 59.06 | 89 | ADE | 51.14 |
| 40 | RIC | 59.04 | 90 | MIY | 51.12 |
| 41 | NSS | 58.96 | 91 | TIG | 51.09 |
| 42 | KYO | 58.81 | 92 | SAK | 50.97 |
| 43 | SHI | 58.66 | 93 | KKA | 50.95 |
| 44 | NIK | 58.45 | 94 | TOK | 50.91 |
| 45 | POL | 58.20 | 95 | FUC | 50.79 |
| 46 | NKC | 58.14 | 96 | SHC | 50.77 |
| 47 | KOB | 57.62 | 97 | OOC | 50.69 |
| 48 | KUM | 57.09 | 98 | SOO | 50.68 |
| 49 | YUN | 57.02 | 99 | NPA | 50.64 |
| 50 | WAK | 56.80 | 100 | YAS | 50.55 |

(NOTE) Comprehensive scores are converted to deviation values and indexation is made so that index of the top enterprise becomes 100.

FIG. 40

Principal Component Analysis Results (Correlation Matrix)
of the Composite Engineering Industry

[Corelation Matrix]

|  | R&D Cost Ratio to Sales Volume (-1) | Patent Concentration Index B | Patent Concentration Index | Labor Productivity |
|---|---|---|---|---|
| R&D Cost Ratio to Sales Volume (-1) | 1 |  |  |  |
| Patent Concentration Index B | -0.0840 | 1 |  |  |
| Patent Concentration Index | -0.0510 | 0.4680 | 1 |  |
| Labor Productivity | 0.1889 | 0.1931 | 0.2211 | 1 |
| Total Factor Productivity | -0.0943 | 0.0796 | 0.0308 | 0.4397 |
| Labor Distribution Share | -0.1047 | -0.1725 | 0.0887 | -0.5398 |
| ROA δ | -0.0125 | 0.2835 | 0.2175 | 0.8121 |

|  | Total Factor Productivity | Labor Distribution Share | ROA δ |
|---|---|---|---|
| R&D Cost Ratio to Sales Volume (-1) |  |  |  |
| Patent Concentration Index B |  |  |  |
| Patent Concentration Index |  |  |  |
| Labor Productivity |  |  |  |
| Total Factor Productivity | 1 |  |  |
| Labor Distribution Share | -0.4463 | 1 |  |
| ROA δ | 0.5857 | -0.6297 | 1 |

FIG. 41

Eigenvector of Principal Component Analysis of the Composite Engineering Industry

[Eigenvector]

|  | Principal Component 1 | Principal Component 2 | Principal Component 3 |
|---|---|---|---|
| R&D Cost Ratio to Sales Volume (-1) | 0.1291 | 0.5857 | -0.2457 |
| Patent Concentration Index B | 0.2167 | -0.3929 | -0.4110 |
| Patent Concentration Index | 0.1500 | -0.3700 | -0.4506 |
| Labor Productivity | 0.4596 | 0.0367 | 0.1229 |
| Total Factor Productivity | 0.3138 | -0.1803 | 0.4660 |
| Labor Distribution Share | -0.4046 | -0.0576 | -0.2388 |
| ROA δ | 0.4952 | -0.1310 | 0.1465 |
| Eigenvalue | 3.33 | 1.64 | 1.48 |
| Contribution Ratio (%) | 47.57 | 23.43 | 21.14 |
| Cumulative Contribution Ratio (%) | 45.57 | 71.00 | 92.14 |

FIG. 42

### Top 100 Enterprises of Trinity Management Overall Ranking in the Composite Engineering Industry

| Rank Order | Enterprise Name | Comprehensive Scores of Trinity Management (Indexation made) | Rank Order | Enterprise Name | Comprehensive Scores of Trinity Management (Indexation made) |
|---|---|---|---|---|---|
| 1 | SAM | 100.00 | 51 | HIO | 45.96 |
| 2 | TKY | 62.96 | 52 | YUN | 45.90 |
| 3 | KEY | 59.82 | 53 | SHO | 45.84 |
| 4 | MIY | 58.21 | 54 | KON | 45.70 |
| 5 | UHT | 57.80 | 55 | ICO | 45.51 |
| 6 | NDR | 56.33 | 56 | MAX | 45.40 |
| 7 | ADT | 55.16 | 57 | NCO | 45.15 |
| 8 | HEI | 54.59 | 58 | FUN | 45.15 |
| 9 | CAN | 54.42 | 59 | MIT | 45.13 |
| 10 | COC | 54.26 | 60 | NIR | 45.13 |
| 11 | TAK | 54.01 | 61 | CIT | 44.85 |
| 12 | MAB | 53.91 | 62 | ROH | 44.82 |
| 13 | FAN | 53.78 | 63 | HAR | 44.73 |
| 14 | FOT | 53.68 | 64 | SAT | 44.72 |
| 15 | TOY | 53.52 | 65 | NKO | 44.66 |
| 16 | HIR | 53.50 | 66 | KUR | 44.38 |
| 17 | ARU | 53.47 | 67 | TDS | 44.38 |
| 18 | SAD | 53.41 | 68 | AMN | 44.20 |
| 19 | HON | 53.37 | 69 | HOD | 44.12 |
| 20 | SYS | 53.08 | 70 | NFC | 44.11 |
| 21 | HKS | 53.05 | 71 | MUT | 44.07 |
| 22 | MEG | 52.53 | 72 | AMD | 44.01 |
| 23 | FUJ | 51.79 | 73 | NIA | 43.97 |
| 24 | TER | 50.93 | 74 | KOH | 43.90 |
| 25 | OPT | 49.73 | 75 | NAK | 43.80 |
| 26 | NAN | 49.33 | 76 | HIK | 43.72 |
| 27 | RIS | 49.22 | 77 | NDE | 43.49 |
| 28 | SAN | 49.11 | 78 | FJK | 43.47 |
| 29 | FEI | 49.09 | 79 | BRO | 43.32 |
| 30 | NIT | 48.90 | 80 | HOM | 43.31 |
| 31 | SCD | 48.46 | 81 | USH | 43.30 |
| 32 | MIR | 48.23 | 82 | GRO | 43.29 |
| 33 | NIS | 48.09 | 83 | DIG | 43.24 |
| 34 | NOR | 48.03 | 84 | NKA | 43.03 |
| 35 | RIC | 48.02 | 85 | NEL | 42.93 |
| 36 | DKD | 47.68 | 86 | IBI | 42.81 |
| 37 | AIH | 47.63 | 87 | ISA | 42.70 |
| 38 | FZE | 47.46 | 88 | SUZ | 42.58 |
| 39 | VER | 47.43 | 89 | DKK | 42.54 |
| 40 | HMA | 47.37 | 90 | SID | 42.46 |
| 41 | OOS | 47.25 | 91 | STS | 42.42 |
| 42 | HOY | 46.96 | 92 | SON | 42.40 |
| 43 | NEM | 46.91 | 93 | TAI | 42.35 |
| 44 | OLI | 46.79 | 94 | TCM | 42.35 |
| 45 | ODA | 46.64 | 95 | ISU | 42.22 |
| 46 | HIO | 46.47 | 96 | KOF | 42.17 |
| 47 | TOA | 46.46 | 97 | HME | 42.15 |
| 48 | MIU | 46.37 | 98 | NID | 42.09 |
| 49 | ARO | 46.24 | 99 | SKD | 42.02 |
| 50 | HAM | 46.09 | 100 | NEI | 42.00 |

(NOTE) Comprehensive scores are converted to deviation values and indexation is made so that index of the top enterprise becomes 100.

FIG. 43

INDEXES TO BE USED IN THE PRINCIPAL COMPONENT ANALYSIS

| | Material Industry | Composite Engineering Industry |
|---|---|---|
| Research and Development Related Indexes ("Research and Development" Factor) | R&D Cost Ratio to Sales Volume (−1) | R&D Cost Ratio to Sales Volume (−1) |
| Intellectual Property Related Indexes (" Concentration of Patent/Technology" Factor) | | Patent Concentration Index B Patent Concentration Index |
| Business (Management, Finance) Related Indexes (" Productivity" Factor) | Labor Productivity Total Factor Productivity Cost-to-Sales Ratio Labor Distribution Share Equity to Asset Ratio | Labor Productivity Total Factor Productivity Labor Distribution Share |
| Comprehensive Evaluation Index | ROA $\delta$ | ROA $\delta$ |

TRINITY ENTERPRISE EVALUATION INDEXES (PRIMARY SELECTION) (MACHINERY, ELECTRONICS RELATED)

FIG. 44

| Major Index Groups | Index Groups | Indexes | Definition Formula |
|---|---|---|---|
| Research and Development Related | (RA) Research and Development Related | Inventor Ratio | (Number of Inventors)/(Number of Employees) |
| | | R&D Cost per Inventor | (R&D Cost)/(Number of Inventors) |
| | | R&D Cost | Total Amount of R&D Cost (Average Value in Several Terms) |
| | (RB) Research and Development Efficiency Related | R&D Cost Ratio $\alpha$ | (R&D Cost)/(Sales Volume) |
| | | R&D Cost Ratio $\beta$ | (R&D Cost)/(Value Added Amount) |
| Intellectual Property Related | (PA) Patent Application Related | Number of Patent Applications (A-H) | Number of Applications in One of Sections A to H (Joint Application is Recorded as One Application) |
| | | Number of applications per Inventor | (Number of Patent Applications)/(Number of Inventors) |
| | (PB) Examination Request Related | Examination Request Stock Ratio (to Patent Application Stock) | (Cumulative Number of Examination Requests)/(Cumulative Number of Patent Applications) |
| | | Average Years Before Examination Request | { $\Sigma$ (Date of Examination Request − Filing Date)} / {(Number of Examination Requests) × (Annual Number of Days)} |
| | (PT) Patent Obtainment (Registration) Related | Patent Granted Stock | (Cumulative Number of Patents Granted at the End of Year) |
| | | Average Years Required to be Granted | { $\Sigma$ (Patent Registration Date − Patent Filing Date)} / {(Number of Patents Granted) × (Annual Number of Days)} |
| | | Patent Granted Stock Ratio (to Patent Application Stock) | (Cumulative Number of Patents Granted)/(Cumulative Number of Patent Applications) |
| | | Patent Granted Stock Ratio (to Examination Request Stock) | (Cumulative Number of Patents Granted)/(Cumulative Number of Examination Requests) |
| | (PS) Patent Stock Related | Total Effective Patent Remaining Ratio | (Total Number of Effective Patents)/(Patent Granted Stock) |
| | | Average Remaining Years of Effective Patents | { $\Sigma$ (Scheduled Invalidation Date of Each Patent of the Total Number of Effective Patents − Year End)} / {(Total Number of Effective Patents) × (Annual Number of Days)} |
| | (PC) Patent Concentration Related | Patent Concentration Index | $\Sigma$ [{(Number of Claims Filed by the Enterprise by Subclasses of International Patent Classification)/(Total Number of Claims Filed by Company)}$^2$ ] |
| | | Patent Concentration Index (A-H) | Patent Concentration Index of the Enterprise in One of International Patent Classification Sections A to H by the Number of Claims |
| Business, Profit Related | (B) Management Finance Analysis Related | Labor Productivity | (Value Added Amount)/(Number of Employees) |
| | | Labor Distribution Share | {(Personnel Expense) + (Labor Cost)}/(Value Added Amount) |
| | | Total Factor Productivity | (Value Added Amount Rate of Change) − {(1 − Labor Distribution Share) × (Depreciation Target Tangible Fixed Assets Rate of Change)} − {(Labor Distribution Share) × (Number of Employees Rate of Change)} |
| | | Cost-to-Sales Ratio | (Cost of Sales)/(Sales Volume) |
| | | Cost of Sales-and-Administration Ratio to Sales | (Selling Cost and Administrative Expenses)/(Sales Volume) |
| | | Facility Investment Efficiency | (Value Added Amount)/(Tangible Fixed Assets) |
| | | Equity to Asset Ratio | (Equity Capital)/(Total Assets) |

FIG. 45

EP 1 783 624 A1

Factor Loading in the Machinery Industry

| Factor No. | Factor 1 | Factor 2 | Factor 3 | Factor 4 | Factor 5 |
|---|---|---|---|---|---|
| Factor Axis Name | Scale of Intellectual Assets | Obtainment & Management of Patents | Effect of Research and Development | Concentration of Patent/ Technology | Business Productivity |
| Patent Application Stock G | 0.9802 | −0.0414 | 0.0844 | 0.0055 | 0.0158 |
| Inventor Stock | 0.9524 | −0.0419 | 0.1656 | 0.0424 | 0.0661 |
| Patent Granted Stock | 0.8782 | 0.0101 | 0.4098 | 0.0373 | 0.0510 |
| Patent Application Stock F | 0.8489 | −0.0298 | 0.4003 | 0.1752 | 0.0176 |
| Patent Application Stock H | 0.8441 | −0.0565 | 0.0616 | 0.0193 | −0.0226 |
| Patent Granted Stock Ratio (to Patent Application Stock) | −0.0436 | 0.9619 | −0.0005 | 0.0152 | 0.0280 |
| Average Remaining Years of Effective Patents | −0.0683 | 0.7963 | −0.0253 | −0.0707 | −0.0010 |
| Patent Granted Stock Ratio (to Examination Request Stock) | −0.0433 | 0.7908 | −0.0148 | 0.0357 | 0.0013 |
| Examination Request Stock Ratio (to Patent Application Stock) | −0.0184 | 0.7821 | 0.0302 | −0.0726 | 0.0068 |
| Average Years Before Examination Request | −0.0413 | −0.8623 | 0.0119 | −0.0168 | −0.1786 |
| R&D Stock | 0.4910 | 0.0065 | 0.8381 | 0.0137 | 0.0487 |
| R&D Cost per Inventor (−1) | 0.2872 | −0.0165 | 0.7371 | −0.0213 | 0.2231 |
| Patent Concentration Index F | 0.0094 | 0.0160 | 0.0510 | 0.8048 | −0.0534 |
| Patent Concentration Index B | −0.1098 | 0.0705 | 0.0483 | −0.7761 | −0.0783 |
| Labor Productivity | 0.2345 | −0.0460 | 0.2219 | 0.0335 | 0.8110 |
| Cost-to-Sales Ratio | 0.0954 | −0.1239 | −0.0153 | 0.0020 | −0.5262 |
| Eigenvalue (Square Sum) | 4.48 | 3.57 | 1.67 | 1.30 | 1.04 |
| Contribution Ratio (%) | 28.02 | 22.32 | 10.43 | 8.11 | 6.48 |
| Cumulative Contribution Ratio (%) | 28.02 | 50.33 | 60.76 | 68.87 | 75.35 |

Eigenvalue (After Rotation) Varimax

Factor Loading in the Electronics Related Industry

| Factor No. | Factor I | Factor II | Factor III | Factor IV | Factor V |
|---|---|---|---|---|---|
| Factor Axis Name | Scale of Intellectual Assets | Obtainment & Management of Patents | Business Productivity | Concentration of Patent/ Technology | Effect of Research and Development |
| Inventor Stock | 0.9874 | -0.0642 | 0.0700 | -0.0211 | 0.0337 |
| Patent Granted Stock | 0.9677 | 0.0474 | 0.0960 | -0.0188 | 0.0906 |
| Patent Application Stock H | 0.9352 | 0.0322 | 0.1115 | 0.0479 | 0.0611 |
| Patent Application Stock G | 0.9338 | -0.0637 | 0.1885 | -0.1407 | 0.0831 |
| R&D Stock | 0.9038 | 0.0193 | 0.1121 | -0.0185 | 0.1595 |
| Patent Application Stock B | 0.7692 | -0.1051 | 0.2047 | -0.1130 | 0.0486 |
| Patent Application Stock F | 0.7021 | -0.0503 | -0.0640 | 0.0146 | -0.0406 |
| Patent Granted Stock Ratio (to Patent Application Stock) | 0.0004 | 0.9628 | -0.0423 | -0.0041 | 0.0179 |
| Patent Granted Stock Ratio (to Examination Request Stock) | -0.0672 | 0.8019 | -0.0088 | -0.0278 | 0.0167 |
| Examination Request Stock Ratio (to Patent Application Stock) | 0.0029 | 0.7971 | -0.0846 | 0.0999 | 0.0084 |
| Average Remaining Years of Effective Patents | -0.1490 | 0.7950 | 0.0194 | 0.1117 | -0.0580 |
| Average Years Before Examination Request | -0.0827 | -0.8325 | 0.0788 | -0.1116 | 0.1346 |
| Labor Productivity | 0.2473 | -0.0482 | 0.9196 | -0.0038 | 0.0010 |
| Labor Distribution Share | -0.1294 | 0.0999 | -0.7645 | -0.0435 | -0.2520 |
| Patent Concentration Index H | -0.0274 | 0.0662 | 0.0495 | 0.8236 | 0.0597 |
| Patent Concentration Index G | 0.0621 | -0.1219 | 0.0161 | -0.7044 | 0.1778 |
| R&D Cost per Inventor (-1) | 0.0078 | -0.0291 | 0.0632 | 0.0305 | 0.7787 |
| R&D Cost Ratio to Sales Volume (-1) | 0.2922 | -0.0779 | 0.2131 | -0.2619 | 0.7163 |
| Eigenvalue (Square Sum) | 5.76 | 3.59 | 1.62 | 1.32 | 1.29 |
| Contribution Ratio (%) | 32.01 | 19.97 | 8.99 | 7.32 | 7.17 |
| Cumulative Contribution Ratio (%) | 32.01 | 51.97 | 60.96 | 68.29 | 75.45 |

Eigenvalue (After Rotation) Varimax

FIG. 46

EP 1 783 624 A1

FIG. 47

RELATIONSHIP DIAGRAM OF THE MACHINERY INDUSTRY

Correlation (Factor Loading)          Contribution Ratio

| Patent Application Stock G |
0.9802

| Inventor Stock |
0.9524

| Patent Granted Stock |
0.8782

| Patent Application Stock F |
0.8489

| Patent Application Stock H |
0.8441

Factor 1
Scale of Intellectual Assets          11%

| R&D Stock |
0.8381

| R&D Cost per Inventor (-1) |
0.7371

Factor 3
Effect of Research and Development          13%

| Patent Concentration Index F |
0.8048

| Patent Concentration Index B |
-0.7761

Factor 4
Concentration of Patent/Technology          16%

| Labor Productivity |
0.8110

| Cost-to-Sales Ratio |
-0.5262

Factor 5
Business Productivity          54%

ROA
δ

FIG. 48

RELATIONSHIP DIAGRAM OF THE ELECTRONICS RELATED INDUSTRY

Correlation (Factor Loading)          Contribution Ratio

| Labor Productivity |
0.9196

| Labor Distribution Share |
-0.7645

Factor 3
Business Productivity          99.6%

ROA
δ

103

FIG. 49

FACTORS OF THE MACHINERY INDUSTRY

| Factor No. | Factor Names | Definition of Factors |
|---|---|---|
| Factor 1 | Scale of Intellectual Assets | A factor comprising indexes representing important knowledge stock of each enterprise. Intellectual assets include intellectual properties and also include the inventor stock which is not an intellectual property. This factor includes such indexes as the number of patent applications filed and the number of patents granted which would be proportional to the scale and financial power of each enterprise. |
| Factor 2 | Attitude to Obtainment and Management of Patents | A factor configured from such indexes as the average years before examination request, the examination request stock ratio (to patent application stock), the patent granted stock ratio (to patent application stock), and the average remaining years of effective patents showing the patent performance such as the time required from the filing of patent applications to examination requests, the examination request ratio, the patent granted ratio to the number of examination requests, and the time period from registration to the lapse of rights and so on. This is a factor concerning with the examination requests at an early stage, increase of the patent granted stock ratio, and prolonging of the term of patents. |
| Factor 3 | Effect of Research and Development | Input of the research and development cost is not an expense but rather an investment for improving future profits and the enterprise value, and effects thereof cannot be expected immediately after such input is made. This will take 2 to 5 years at minimum, and 10 years or longer in some cases. The research and development stock is included in this factor. Since this factor is derived from indexes including a time-lag, it is represented as the effect of research and development. |
| Factor 4 | Concentration of Patent/Technology | A factor representing the patent concentration degree, and also representing the concentration degree of technology and know-how that support the patent applications. In particular, the patent concentration degree F (mechanical engineering) is positive, and the patent concentration degree B (performing operations, transporting) is negative. |
| Factor 5 | Business Productivity | A factor derived from the labor productivity and the cost to sales ratio, and representing the management efficiency. |

FIG. 50

## Multiple Regression Analysis Result in the Machinery Industry

[Multiple Regression Equation]  Criterion Variable
(N=165)  Operating Profit to Management Capital Ratio

| Name of Explanatory Variable | Partial Regression Coefficient | Standard Partial Regression Coefficient | P Value | Standard Error | Contribution Ratio |
|---|---|---|---|---|---|
| Factor 1: Scale of Intellectual Assets | 0.0041 | 0.1216 | 0.0320 | 0.0019 | 10.34% |
| Factor 2: Obtainment & Management of Patents | 0.0026 | 0.0779 | 0.1676 | 0.0019 | 6.62% |
| Factor 3: Effect of Research and Development | 0.0051 | 0.1474 | 0.0097 | 0.0020 | 12.52% |
| Factor 4: Concentration of Patent/Technology | 0.0072 | 0.1901 | 0.0009 | 0.0021 | 16.15% |
| Factor 5: Business Productivity | 0.0245 | 0.6397 | 0.0000 | 0.0022 | 54.37% |
| Constant Term | 0.0326 | | | 0.0019 | |

| Degree of Freedom Adjusted Determination Coefficient | $R2'=$ | 0.4817 |
|---|---|---|

FIG. 51

FACTORS OF THE ELECTRONICS RELATED INDUSTRY

| Factor No. | Factor Names | Definition of Factors |
|---|---|---|
| Factor 1 | Scale of Intellectual Assets | A factor comprising indexes representing important knowledge stock of each enterprise.  Intellectual assets include intellectual properties and also include the inventor stock and the research and development stock which are not categorized as the intellectual property. This factor includes such indexes as the number of patent applications filed, the number of patents granted, and the research and development stock which would be proportional to the scale and financial power of each enterprise. |
| Factor 2 | Attitude to Obtainment and Management of Patents | A factor derived from such indexes as the average years before examination request, the examination request stock ratio (to patent application stock), the patent granted stock ratio (to patent application stock), and the average remaining years of effective patents showing the patent performance such as the time required from the filing of patent applications to the examination requests, the examination request ratio, the patent granted ratio to the number of examination requests, and the time period from the registration to the lapse of rights and so on. This is a factor concerning with requesting examination at an early stage, increasing the patent granted stock ratio, and prolonging the term of patents. |
| Factor 3 | Business Productivity | A factor derived from the labor productivity and the labor dispersion ratio, and representing the business productivity since the constraints on labor costs and personnel expenses will improve the labor productivity. |
| Factor 4 | Concentration of Patent/Technology | A factor representing the patent concentration degree, and also representing the concentration degree of technology and know-how which support the patent applications.  In particular, the patent concentration degree H (electricity) is positive, and the patent concentration degree G (physics) is negative. |
| Factor 5 | Effect of Research and Development | Input of the research and development cost is not an expense but rather an investment for improving future profits and the enterprise value, and effects thereof cannot be expected immediately after such input is made. This will take 2 to 5 years at minimum, and 10 years or longer in some cases.  The research and development stock is included in this factor.  Since this factor is configured from indexes including a time-lag, it is represented as the effect of research and development. |

FIG. 52

## Multiple Regression Analysis Result in the Electronics Related Industry

[Multiple Regression Equation]  
(N=198)

Criterion Variable  
Operating Profit to Management Capital Ratio

| Name of Explanatory Variable | Partial Regression Coefficient | Standard Partial Regression Coefficient | P Value | Standard Error | Contribution Ratio |
|---|---|---|---|---|---|
| Factor I: Scale of Intellectual Assets | −0.0010 | −0.0282 | 0.6206 | 0.0021 | −4.57% |
| Factor II: Obtainment & Management of Patents | −0.0006 | −0.0158 | 0.7811 | 0.0022 | −2.56% |
| Factor III: Business Productivity | 0.0243 | 0.6149 | 0.0000 | 0.0023 | 99.60% |
| Factor IV: Concentration of Patent/Technology | 0.0017 | 0.0392 | 0.4912 | 0.0025 | 6.35% |
| Factor V: Effect of Research and Development | 0.0003 | 0.0073 | 0.8982 | 0.0025 | 1.18% |
| Constant Term | 0.0430 | | | 0.0022 | |

| Degree of Freedom Adjusted Determination Coefficient | R2'= | 0.3661 |
|---|---|---|

FIG. 53

FACTOR-BASED RANKING
OF THE MACHINERY INDUSTRY ENTERPRISES (FACTORS 1, 2)

| | Factor 1<br>Scale of Intellectual Assets | | Factor 2<br>Attitude to Obtainment and<br>Management of Patents | |
|---|---|---|---|---|
| Rank | Enterprise Name | Score | Enterprise Name | Score |
| 1 | MIT | 7.163683 | UHT | 4.093063 |
| 2 | DEN | 6.328737 | NPI | 4.041901 |
| 3 | TOY | 3.474027 | KAW | 3.640416 |
| 4 | NIS | 3.154706 | TKR | 3.004918 |
| 5 | HON | 2.946554 | NJU | 2.992016 |
| 6 | KUB | 2.868111 | KKA | 2.493411 |
| 7 | BRO | 2.756495 | TSH | 2.413461 |
| 8 | IHI | 2.540929 | FRO | 2.400061 |
| 9 | KAW | 1.014072 | YUS | 2.386599 |
| 10 | DAI | 0.816298 | NIK | 2.386411 |
| 11 | SUZ | 0.772832 | SAT | 1.964013 |
| 12 | AIS | 0.644526 | MOR | 1.755243 |
| 13 | HIK | 0.58826 | TUB | 1.630815 |
| 14 | MCC | 0.520126 | AMA | 1.434191 |
| 15 | HIU | 0.419612 | CKD | 1.283864 |
| 16 | KOM | 0.41841 | NSP | 1.279909 |
| 17 | YAM | 0.362631 | SHI | 1.208626 |
| 18 | SUM | 0.301736 | KOI | 1.154233 |
| 19 | CAL | 0.296053 | FUU | 1.049536 |
| 20 | TOJ | 0.269373 | ASA | 1.034637 |
| 21 | TOS | 0.248262 | NCO | 1.033576 |
| 22 | HIZ | 0.247337 | KYO | 1.001333 |
| 23 | KOY | 0.242923 | OSA | 0.960792 |
| 24 | NTN | 0.233632 | KIN | 0.876961 |
| 25 | EBA | 0.21636 | OGU | 0.833752 |

FIG. 54

## FACTOR-BASED RANKING
## OF THE MACHINERY INDUSTRY ENTERPRISES (FACTORS 3-5)

| | Factor 3 Effect of Research and Development | | Factor 4 Concentration of Patent/Technology | | Factor 5 Business Productivity | |
|---|---|---|---|---|---|---|
| Rank | Enterprise Name | Score | Enterprise Name | Score | Enterprise Name | Score |
| 1 | TOY | 8.640448 | DAI | 2.149849 | TAK | 3.473114 |
| 2 | HON | 5.222366 | SHK | 2.033692 | KUR | 3.115229 |
| 3 | NIS | 3.900277 | KAR | 2.00974 | ABI | 2.643756 |
| 4 | FUJ | 1.691611 | TOK | 1.952942 | KOM | 2.462318 |
| 5 | KOC | 0.549776 | EXE | 1.779567 | RIS | 1.864227 |
| 6 | DAI | 0.267756 | TYR | 1.779506 | NIK | 1.820378 |
| 7 | KOM | 0.210737 | TOF | 1.735453 | NTK | 1.750044 |
| 8 | KOF | 0.199395 | OGU | 1.596939 | FKI | 1.720746 |
| 9 | YAM | 0.179093 | MET | 1.537041 | AMA | 1.704738 |
| 10 | HIS | 0.169851 | NPR | 1.482198 | HIZ | 1.688635 |
| 11 | ORI | 0.162807 | NTN | 1.458019 | KOC | 1.673441 |
| 12 | IHU | 0.159379 | NPI | 1.456336 | MAX | 1.547738 |
| 13 | NPR | 0.142437 | HIU | 1.456206 | SMC | 1.468014 |
| 14 | GOY | 0.117585 | FUU | 1.402319 | TUK | 1.35807 |
| 15 | SUZ | 0.11679 | MIK | 1.393238 | HON | 1.33296 |
| 16 | NAS | 0.112221 | TAI | 1.327677 | ORU | 1.175325 |
| 17 | FUU | 0.107719 | TUR | 1.296756 | UHT | 1.126609 |
| 18 | TEI | 0.086109 | TKR | 1.282707 | YUS | 1.093928 |
| 19 | JID | 0.077353 | SMC | 1.270372 | NPI | 1.039295 |
| 20 | HAS | 0.068061 | KGY | 1.206228 | EBA | 1.033041 |
| 21 | COB | 0.062247 | AMA | 1.195708 | FUJ | 1.01536 |
| 22 | KAW | 0.056951 | HOS | 1.187881 | SUZ | 0.907178 |
| 23 | TBO | 0.056584 | CKD | 1.164685 | MAE | 0.893437 |
| 24 | TKK | 0.052158 | TEI | 1.149685 | HIK | 0.863663 |
| 25 | SAT | 0.051689 | KOI | 1.132941 | TCM | 0.862479 |

FIG. 55

FACTOR-BASED RANKING
OF THE ELECTRONICS RELATED INDUSTRY ENTERPRISES (FACTORS 1, 2)

| | Factor 1 Scale of Intellectual Assets | | Factor 2 Attitude to Obtainment and Management of Patents | |
|------|------|------|------|------|
| Rank | Enterprise Name | Score | Enterprise Name | Score |
| 1 | HIT | 8.0771 | SUK | 4.2901 |
| 2 | NEC | 5.4112 | OKA | 3.7673 |
| 3 | TOS | 5.3824 | KYO | 3.7289 |
| 4 | CAN | 4.6007 | NEC | 3.5732 |
| 5 | SON | 4.2658 | END | 3.4476 |
| 6 | FUJ | 3.5828 | SAN | 2.6740 |
| 7 | SHA | 3.4050 | TOD | 2.5839 |
| 8 | MAT | 2.6369 | LEO | 2.4747 |
| 9 | ORI | 2.3677 | SAK | 2.1246 |
| 10 | RIC | 1.3917 | HIR | 1.9515 |
| 11 | MIT | 1.1165 | KAS | 1.9191 |
| 12 | HKO | 0.8167 | ESP | 1.9074 |
| 13 | OMR | 0.7964 | SHD | 1.8947 |
| 14 | OKI | 0.7581 | TEI | 1.8914 |
| 15 | MUR | 0.5317 | OSA | 1.8701 |
| 16 | TDK | 0.5254 | RIT | 1.7467 |
| 17 | HME | 0.4654 | OVA | 1.7157 |
| 18 | YAS | 0.4468 | NKD | 1.6500 |
| 19 | YGD | 0.4065 | TSE | 1.2863 |
| 20 | TOT | 0.3242 | FUD | 1.1446 |
| 21 | ALP | 0.2721 | YOK | 1.1200 |
| 22 | HKD | 0.2545 | ZOJ | 1.0613 |
| 23 | MEI | 0.2391 | ARO | 1.0482 |
| 24 | FDK | 0.2136 | YAM | 0.9931 |
| 25 | KON | 0.1824 | USH | 0.9747 |

FIG. 56

FACTOR-BASED RANKING

OF THE ELECTRONICS RELATED INDUSTRY ENTERPRISES (FACTORS 3-5)

| | Factor 3 Business Productivity | | Factor 4 Concentration of Patent/Technology | | Factor 5 Effect of Research and Development | |
|---|---|---|---|---|---|---|
| Rank | Enterprise Name | Score | Enterprise Name | Score | Enterprise Name | Score |
| 1 | TOE | 4.8246 | DDS | 1.8898 | FOT | 3.4697 |
| 2 | ADV | 4.1295 | COS | 1.6760 | LEA | 3.3107 |
| 3 | HIR | 3.9984 | NIC | 1.6592 | FUN | 3.0145 |
| 4 | ROH | 3.9689 | CMK | 1.4897 | NDI | 2.9136 |
| 5 | FUF | 3.8596 | YUA | 1.4771 | OMR | 2.8711 |
| 6 | KEY | 3.6986 | MUR | 1.4515 | HAM | 2.4300 |
| 7 | UNI | 2.5628 | SSD | 1.4264 | KAN | 2.4175 |
| 8 | CAN | 2.1653 | NDE | 1.4255 | AIC | 2.3655 |
| 9 | KON | 1.9044 | TKO | 1.4141 | DDS | 2.3466 |
| 10 | NIK | 1.8103 | FUN | 1.3955 | FUJ | 2.0534 |
| 11 | RIC | 1.6000 | RNA | 1.3562 | SYS | 1.9566 |
| 12 | HOY | 1.4848 | NDK | 1.3534 | UNI | 1.8499 |
| 13 | MIT | 1.2936 | TOA | 1.3356 | YAM | 1.6907 |
| 14 | FUK | 1.2743 | TOE | 1.3305 | NEC | 1.6755 |
| 15 | IBI | 1.1806 | SDK | 1.3279 | MAD | 1.5980 |
| 16 | NOR | 1.0768 | HKD | 1.3148 | OSA | 1.3638 |
| 17 | CAS | 1.0676 | SAK | 1.2875 | DIA | 1.2761 |
| 18 | MIN | 0.9537 | SKD | 1.2735 | OPT | 1.2761 |
| 19 | NEC | 0.9241 | NKA | 1.2389 | FUF | 1.1421 |
| 20 | COS | 0.8808 | MAS | 1.1989 | NOK | 1.0232 |
| 21 | HOS | 0.8680 | NSE | 1.1931 | DSH | 1.0229 |
| 22 | TSE | 0.8322 | UNI | 1.1757 | CAN | 1.0171 |
| 23 | ISC | 0.8289 | TAI | 1.1609 | MIN | 0.9895 |
| 24 | NPR | 0.8208 | NCH | 1.1354 | NEL | 0.9792 |
| 25 | MUR | 0.8125 | YOK | 1.1130 | NCE | 0.9458 |

FIG. 57

### Degree of Commonality of the Factor Analysis Variable of the Machinery Industry

| Index Names | Initial Value | Estimated Value |
|---|---|---|
| Average Years Before Examination Request | 0.7671 | 0.7776 |
| Examination Request Stock Ratio (to Patent Application Stock) | 0.8274 | 0.6182 |
| Patent Granted Stock Ratio (to Patent Application Stock) | 0.8274 | 0.9282 |
| Patent Granted Stock Ratio (to Examination Request Stock) | 0.8241 | 0.6287 |
| Average Remaining Years of Effective Patents | 0.7484 | 0.6445 |
| Patent Concentration Index B | 0.6178 | 0.6278 |
| Patent Concentration Index F | 0.6178 | 0.6535 |
| R&D Stock | 0.7801 | 0.9461 |
| Patent Granted Stock | 0.9391 | 0.9433 |
| Patent Application Stock F | 0.9391 | 0.9128 |
| Cost-to-Sales Ratio | 0.4040 | 0.3015 |
| Labor Productivity | 0.4101 | 0.7653 |
| Patent Application Stock G | 0.9361 | 0.9700 |
| Patent Application Stock H | 0.8809 | 0.7204 |
| Inventor Stock | 0.9361 | 0.9424 |
| R&D Cost per Inventor (-1) | 0.7801 | 0.6763 |

Setting of Initial Value of Commonality: Maximum Value of Correlation

FIG. 58

### Degree of Commonality of the Factor Analysis Variable of the Electronics Related Industry

| Index Names | Initial Value | Estimated Value |
|---|---|---|
| Average Years Before Examination Request | 0.7488 | 0.7367 |
| Examination Request Stock Ratio (to Patent Application Stock) | 0.8301 | 0.6526 |
| Patent Granted Stock Ratio (to Patent Application Stock) | 0.8301 | 0.9291 |
| Patent Granted Stock Ratio (to Examination Request Stock) | 0.8245 | 0.6486 |
| Average Remaining Years of Effective Patents | 0.7018 | 0.6704 |
| Patent Application Stock B | 0.8812 | 0.6597 |
| Patent Application Stock H | 0.9576 | 0.8941 |
| Patent Concentration Index G | 0.5871 | 0.5468 |
| Patent Concentration Index H | 0.5871 | 0.6895 |
| Labor Distribution Share | 0.7460 | 0.6766 |
| Labor Productivity | 0.7460 | 0.9091 |
| R&D Stock | 0.9349 | 0.8555 |
| Inventor Stock | 0.9254 | 0.9856 |
| Patent Granted Stock | 0.9576 | 0.9565 |
| Patent Application Stock G | 0.9194 | 0.9382 |
| R&D Cost Ratio to Sales Volume (-1) | 0.5674 | 0.7186 |
| R&D Cost per Inventor (-1) | 0.5674 | 0.6123 |
| Patent Application Stock F | 0.8034 | 0.5014 |

Setting of Initial Value of Commonality: Maximum Value of Correlation

## INTERNATIONAL SEARCH REPORT

| | International application No. |
|---|---|
| | PCT/JP2005/012428 |

**A. CLASSIFICATION OF SUBJECT MATTER**
  Int.Cl⁷ G06F17/60

According to International Patent Classification (IPC) or to both national classification and IPC

**B. FIELDS SEARCHED**

Minimum documentation searched (classification system followed by classification symbols)
  Int.Cl⁷ G06F17/60

Documentation searched other than minimum documentation to the extent that such documents are included in the fields searched
  Jitsuyo Shinan Koho         1922-1996    Jitsuyo Shinan Toroku Koho     1996-2005
  Kokai Jitsuyo Shinan Koho   1971-2005    Toroku Jitsuyo Shinan Koho     1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | Takahiro NIIMI, "2 Kakuzuke to Zaimu Shihyo no Kankei ni Tsuite, JAFEE Journal [1998] Risk Kanri to Kin'yu · Shoken Toshi Senryaku", 1st Edition, 19 March, 1998 (19.03.98), (ISBN 4-492-71109-0), All pages | 2,9,16<br>1,3-8,10-15,<br>17-21 |
| X<br>Y | US 2003/0069822 A1 (NIHON KEIZAI SHINBUN, INC.), 10 April, 2003 (10.04.03), Par. Nos. [0081], [0091] to [0104], [0143] & JP 2003-187052 A | 4,11,18<br>1-3,5-10,<br>12-17,19-21 |
| X<br>Y | Takahiro OONO, Hirofumi YAMASHITA, Mamoru OZEKI, "Mokutekibetsu Kigyo Hyoka ni Kansuru Kenkyu", Nippon Keiei Kogaku Kaishi, Vol.37, No.3, 15 August, 1986 (15.08.86), (ISSN 0386-4812), full text | 4,11,18<br>1-3,5-10,<br>12-17,19-21 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August, 2005 (02.08.05) | 30 August, 2005 (30.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2005/012428 |

C (Continuation).  DOCUMENTS CONSIDERED TO BE RELEVANT

| Category* | Citation of document, with indication, where appropriate, of the relevant passages | Relevant to claim No. |
|---|---|---|
| Y | Erik Brynjolfsson, Lorin M. Hitt, Shinkyu Yang, "INTANGIBLE ASSETS: HOW THE INTERACTION OF COMPUTERS AND ORGANIZATIONAL STRUCTURE AFFECTS STOCK MARKET VALUATIONS", PROCEEDINGS OF THE INTERNATIONAL CONFERENCE ON INFORMATION SYSTEMS, 1998, 1998, (ISBN:ICIS 1998-X), full text | 1-21 |
| Y | Ken'ichi TATSUMI, "Seminar Derivative to Shinkin'yu Shohin no Sugaku Kihon to Oyo", 1st Edition, 08 December, 1995 (08.12.95), (ISBN 4-492-72075-8), pages 91 to 103, (Dai 5 Sho 'Taju Kaiki Bunseki to Toshi Senryaku') | 1-21 |
| Y | Japan Industrial Management Association, "Keiei Kogaku Handbook", 1st Edition, 10 September, 1994 (10.09.94), (ISBN 4-621-03980-6), pages 582 to 598, (Dai 4 Sho 'Tahenryo Kaiseki') | 1-21 |
| A | US 6556992 B1  (Patent Ratings LLC), 29 April, 2003 (29.04.03), Figs. 1 to 2 (Family: none) | 1-21 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H117475 A

- JP 2002149957 A

**Non-patent literature cited in the description**

- **ELI OKADA.** IP Strategy Management. Nihon Keizai Shimbun, Inc, 20 October 2003, 232-240